(19) Europäisches Patentamt
European Patent Office
Office européen des brevets

(11) EP 4 378 945 A1

(12) # EUROPEAN PATENT APPLICATION
published in accordance with Art. 153(4) EPC

(43) Date of publication:
**05.06.2024 Bulletin 2024/23**

(21) Application number: **22855892.0**

(22) Date of filing: **09.08.2022**

(51) International Patent Classification (IPC):
***C07F 7/18*** (2006.01) ***C08G 77/14*** (2006.01)
***C08G 77/38*** (2006.01) ***C08L 83/04*** (2006.01)
***C09K 3/18*** (2006.01) ***G02B 1/14*** (2015.01)
***G02B 1/18*** (2015.01)

(52) Cooperative Patent Classification (CPC):
**C07F 7/18; C08G 77/14; C08G 77/38; C08G 77/48; C08L 83/04; C09K 3/18; G02B 1/14; G02B 1/18**

(86) International application number:
**PCT/JP2022/030495**

(87) International publication number:
**WO 2023/017830 (16.02.2023 Gazette 2023/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.08.2021 JP 2021130808**
**01.03.2022 JP 2022031220**
**01.03.2022 JP 2022031226**
**30.06.2022 JP 2022106050**

(71) Applicant: **Daikin Industries, Ltd.**
**Osaka-shi, Osaka 530-8323 (JP)**

(72) Inventors:
- **HANDA, Shinya**
  **Osaka-shi, Osaka 530-8323 (JP)**
- **NOMURA, Takashi**
  **Osaka-shi, Osaka 530-8323 (JP)**
- **MATSUI, Motoshi**
  **Osaka-shi, Osaka 530-8323 (JP)**
- **TORTISSIER, Gregory**
  **Osaka-shi, Osaka 530-8323 (JP)**
- **TAKATA, Masakazu**
  **Osaka-shi, Osaka 530-8323 (JP)**
- **NAKANO, Nozomi**
  **Osaka-shi, Osaka 530-8323 (JP)**
- **OHMUKAI, Yoshikage**
  **Osaka-shi, Osaka 530-8323 (JP)**
- **TAKANO, Shinya**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(54) **SURFACE TREATMENT AGENT**

(57) The present invention provides a siloxane group-containing silane compound represented by the following formula (1) or (2) wherein each of the symbols in the formulae is as described in the description.

$$R^{S1}_{\alpha}\text{-}X^{A}\text{-}R^{H}_{\beta} \quad (1)$$

$$R^{H}_{\gamma}\text{-}X^{A}\text{-}R^{S2}\text{-}X^{A}\text{-}R^{H}_{\gamma} \quad (2)$$

EP 4 378 945 A1

## Description

Technical Field

The present disclosure relates to a surface-treating agent.

Background Art

Certain types of silane compounds are known to be capable of providing excellent water- and oil-repellency, when used in surface treatment of a substrate (Patent Literature 1).

Citation List

Patent Literature

Patent Literature 1: JP 2019-44179 A

Summary of Invention

Technical Problem

The silane compound described in Patent Literature 1 can provide a surface-treating layer with excellent fingerprint removability by wiping, but a surface-treating layer having higher functions is required.
An object of the present disclosure is to provide a surface-treating agent capable of forming a surface-treating layer with excellent fingerprint removability by wiping.

Solution to Problem

The present disclosure includes the following embodiments.

[1] A siloxane group-containing silane compound represented by the following formula (1) or (2):

$$R^{S1}{}_{\alpha}\text{-}X^{A}\text{-}R^{H}{}_{\beta} \qquad (1)$$

$$R^{H}{}_{\gamma}\text{-}X^{A}\text{-}R^{S2}\text{-}X^{A}\text{-}R^{H}{}_{\gamma} \qquad (2)$$

wherein

$R^{S1}$ is each independently at each occurrence $R^1\text{-}R^S\text{-}R^2{}_q\text{-}$;
$R^{S2}$ is $\text{-}O_p\text{-}R^S\text{-}R^2{}_q\text{-}$;
$R^S$ is each independently at each occurrence a divalent linear organosiloxane group;
$R^1$ is a hydrocarbon group;
$R^2$ is $\text{-}SiR^3{}_2\text{-}$;
$R^3$ is each independently at each occurrence a hydrocarbon group;
p is 0 or 1;
q is each independently 0 or 1;
$R^H$ is each independently at each occurrence a monovalent group containing a Si atom to which a hydroxyl group, a hydrolyzable group, or a monovalent organic group is bonded;
two or more Si atoms to which a hydroxyl group or a hydrolyzable group is bonded are present in $R^H$;
$X^A$ is each independently a single bond or a di- to decavalent organic group;
$\alpha$ is an integer of 1 to 9;
$\beta$ is an integer of 1 to 9; and
$\gamma$ is each independently an integer of 1 to 9.

[2] The siloxane group-containing silane compound according to [1], wherein

$R^S$ is $\text{-}(SiR^3{}_2\text{-}O)_a\text{-}$;
$R^3$ is each independently at each occurrence a hydrocarbon group; and

a is 2 to 1,500.

[3] The siloxane group-containing silane compound according to [1] or [2], wherein $R^3$ is each independently at each occurrence a $C_{1-6}$ alkyl group or aryl group optionally substituted with a halogen atom.

[4] The siloxane group-containing silane compound according to any one of [1] to [3], wherein $R^3$ is each independently at each occurrence a methyl group or a phenyl group.

[5] The siloxane group-containing silane compound according. to any one of [1] to [4], wherein a is 10 to 500.

[6] The siloxane group-containing silane compound according to any one of [1] to [5], wherein $R^H$ is a group represented by the following formula (S1), (S2), (S3), or (S4):

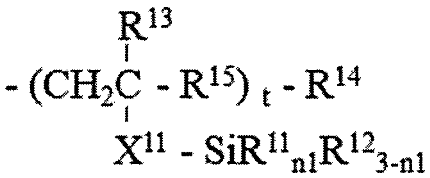

(S1)

$$-SiR^{a1}_{k1}R^{b1}_{l1}R^{c1}_{m1} \qquad (S2)$$

$$-CR^{d1}_{k2}R^{e1}_{l2}R^{f1}_{m2} \qquad (S3)$$

$$-NR^{g1}R^{h1} \qquad (S4)$$

wherein

$R^{11}$ is each independently at each occurrence a hydroxyl group or a hydrolyzable group;
$R^{12}$ is each independently at each occurrence a monovalent organic group;
n1 is each independently an integer of 0 to 3 for each ($SiR^{11}_{n1}R^{12}_{3-n1}$) unit;
$X^{11}$ is each independently at each occurrence a single bond or a divalent organic group;
$R^{13}$ is each independently at each occurrence a hydrogen atom or a monovalent organic group;
t is each independently at each occurrence an integer of 2 or more;
$R^{14}$ is each independently at each occurrence a hydrogen atom, a halogen atom, or $-X^{11}-SiR^{11}_{n1}R^{12}_{3-n1}$;
$R^{15}$ is each independently at each occurrence a single bond, an oxygen atom, an alkylene group having 1 to 6 carbon atoms, or an alkyleneoxy group having 1 to 6 carbon atoms;
$R^{a1}$ is each independently at each occurrence $-Z^1-SiR^{21}_{p1}R^{22}_{q1}R^{23}_{r1}$;
$Z^1$ is each independently at each occurrence a divalent organic group;
$R^{21}$ is each independently at each occurrence $-Z^{1'}-SiR^{21'}_{p1'}R^{22'}_{q1'}R^{23'}_{r1'}$;
$R^{22}$ is each independently at each occurrence a hydroxyl group or a hydrolyzable group;
$R^{23}$ is each independently at each occurrence a monovalent organic group;
p1 is each independently at each occurrence an integer of 0 to 3;
q1 is each independently at each occurrence an integer of 0 to 3;
r1 is each independently at each occurrence an integer of 0 to 3;
$Z^{1'}$ is each independently at each occurrence a divalent organic group;
$R^{21'}$ is each independently at each occurrence $-Z^{1''}-SiR^{22''}_{q1''}R^{23''}_{r1''}$;
$R^{22'}$ is each independently at each occurrence a hydroxyl group or a hydrolyzable group;
$R^{23'}$ is each independently at each occurrence a monovalent organic group;
p1' is each independently at each occurrence an integer of 0 to 3;
q1' is each independently at each occurrence an integer of 0 to 3;
r1' is each independently at each occurrence an integer of 0 to 3;
$Z^{1''}$ is each independently at each occurrence a divalent organic group;
$R^{22''}$ is each independently at each occurrence a hydroxyl group or a hydrolyzable group;
$R^{23''}$ is each independently at each occurrence a monovalent organic group;
q1" is each independently at each occurrence an integer of 0 to 3;
r1" is each independently at each occurrence an integer of 0 to 3;
$R^{b1}$ is each independently at each occurrence a hydroxyl group or a hydrolyzable group;
$R^{c1}$ is each independently at each occurrence a monovalent organic group;
k1 is each independently at each occurrence an integer of 0 to 3;
l1 is each independently at each occurrence an integer of 0 to 3;

m1 is each independently at each occurrence an integer of 0 to 3;
$R^{d1}$ is each independently at each occurrence $-Z^2-CR^{31}{}_{p2}R^{32}{}_{q2}R^{33}{}_{r2}$;
$Z^2$ is each independently at each occurrence a single bond, an oxygen atom, or a divalent organic group;
$R^{31}$ is each independently at each occurrence $-Z^{2'}-CR^{32'}{}_{q2'}R^{33'}{}_{r2'}$;
$R^{32}$ is each independently at each occurrence $-Z^3-SiR^{34}{}_{n2}R^{35}{}_{3-n2}$;
$R^{33}$ is each independently at each occurrence a hydrogen atom, a hydroxyl group, or a monovalent organic group;
p2 is each independently at each occurrence an integer of 0 to 3;
q2 is each independently at each occurrence an integer of 0 to 3;
r2 is each independently at each occurrence an integer of 0 to 3;
$Z^{2'}$ is each independently at each occurrence a single bond, an oxygen atom, or a divalent organic group;
$R^{32'}$ is each independently at each occurrence $-Z^3-SiR^{34}{}_{n2}R^{35}{}_{3-n2}$;
$R^{33'}$ is each independently at each occurrence a hydrogen atom, a hydroxyl group, or a monovalent organic group;
q2' is each independently at each occurrence an integer of 0 to 3;
r2' is each independently at each occurrence an integer of 0 to 3;
$Z^3$ is each independently at each occurrence a single bond, an oxygen atom, or a divalent organic group;
$R^{34}$ is each independently at each occurrence a hydroxyl group or a hydrolyzable group;
$R^{35}$ is each independently at each occurrence a monovalent organic group;
n2 is each independently at each occurrence an integer of 0 to 3;
$R^{e1}$ is each independently at each occurrence $-Z^3-SiR^{34}{}_{n2}R^{35}{}_{3-n2}$;
$R^{f1}$ is each independently at each occurrence a hydrogen atom, a hydroxyl group, or a monovalent organic group;
k2 is each independently at each occurrence an integer of 0 to 3;
l2 is each independently at each occurrence an integer of 0 to 3;
m2 is each independently at each occurrence an integer of 0 to 3;
$R^{g1}$ and $R^{h1}$ are each independently at each occurrence $-Z^4-SiR^{11}{}_{n1}R^{12}{}_{3-n1}$, $-Z^4-SiR^{a1}{}_{k1}R^{b1}{}_{l1}R^{c1}{}_{m1}$, or $-Z^4-CR^{d1}{}_{k2}R^{e1}{}_{l2}R^{f1}{}_{m2}$; and
$Z^4$ is each independently at each occurrence a single bond, an oxygen atom, or a divalent organic group,
provided that, in the formulae (S1), (S2), (S3), and (S4), at least two Si atoms to which a hydroxyl group or a hydrolyzable group is bonded are present.

[7] The siloxane group-containing silane compound according to [6], wherein the group represented by the formula (S1) is a group represented by the following formula (S1-b):

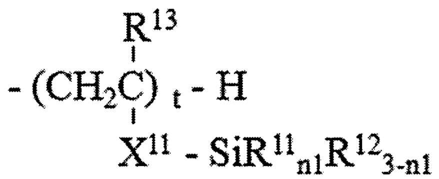
(S1-b)

wherein $R^{11}$, $R^{12}$, $R^{13}$, $X^{11}$, n1, and t have the same definition as described for the above formula (S1).
[8] The siloxane group-containing silane compound according to [6], wherein $R^H$ is each independently at each occurrence the group represented by the formula (S2), (S3), or (S4).
[9] The siloxane group-containing silane compound according to [6], wherein $R^H$ is each independently at each occurrence the group represented by the formula (S2) or (S3).
[10] The siloxane group-containing silane compound according to [6], wherein $R^H$ is each independently at each occurrence the group represented by the formula (S3) or (S4).
[11] The siloxane group-containing silane compound according to [6], wherein $R^H$ is each independently at each occurrence the group represented by the formula (S3).
[12] The siloxane group-containing silane compound according to any one of [1] to [11], wherein $\alpha$, $\beta$, and $\gamma$ are 1.
[13] The siloxane group-containing silane compound according to any one of [1] to [12], wherein $X^A$ is a single bond or a divalent organic group represented by the following formula:

$$-(R^{51})_{p5}-(X^{51})_{q5}-$$

wherein

$R^{51}$ is a single bond, $-(CH_2)_{s5}-$, or an o-, m-, or p-phenylene group;
s5 is an integer of 1 to 20;

$X^{51}$ is $-(X^{52})_{l5}-$;
$X^{52}$ is each independently at each occurrence a group selected from the group consisting of -O-, -S-, an o-, m-, or p-phenylene group, -CO-, -C(O)O-, $-CONR^{54}-$, $-O-CONR^{54}-$, $-NR^{54}-$, and $-(CH_2)_{n5}-$;
$R^{54}$ is each independently at each occurrence a hydrogen atom or a monovalent organic group;
n5 is each independently at each occurrence an integer of 1 to 20;
l5 is an integer of 1 to 10;
p5 is 0 or 1; and
q5 is 0 or 1,
where at least one of p5 and q5 is 1, and the occurrence order of the respective repeating units enclosed in parentheses provided with p5 or q5 is not limited.

[14] The siloxane group-containing silane compound according to any one of [1] to [12], wherein $X^A$ is each independently a single bond,

a $C_{1-20}$ alkylene group, or
a divalent organic group represented by

$$-(CH_2)_{s5}-X^{53}-,$$

$$-X^{53}-(CH_2)_{t5}-,$$

or

$$-(CH_2)_{s5}-X^{53}-(CH_2)_{t5}-,$$

wherein

$X^{53}$ is a single bond, -O-, -CO-, $-CONR^{54}-$, $-O-CONR^{54}-$, $-O-(CH_2)_{u5}-CONR^{54}-$, or $-O-(CH_2)_{u5}-CO-$,
$R^{54}$ is each independently at each occurrence a hydrogen atom, a phenyl group, a $C_{1-6}$ alkyl group (preferably a methyl group), or an oxyalkylene-containing group having 1 to 10 carbon atoms,
s5 is an integer of 1 to 20,
t5 is an integer of 1 to 20, and
u5 is an integer of 1 to 20.

[15] The siloxane group-containing silane compound according to any one of [1] to [12], wherein $X^A$ is each independently a divalent organic group represented by

$$-(CH_2)_{s5}-O-(CH_2)_{t5}-,$$

$$-(CH_2)_{s5}-CONR^{54}-(CH_2)_{t5}-,$$

$$-(CH_2)_{s5}-O-(CH_2)_{u5}-CO-,$$

or

$$-(CH_2)_{s5}-O-(CH_2)_{u5}-CONR^{54}-(CH_2)_{t5}-,$$

wherein

$R^{54}$ is each independently at each occurrence a hydrogen atom, a phenyl group, a $C_{1-6}$ alkyl group (preferably a methyl group), or an oxyalkylene-containing group having 1 to 10 carbon atoms,
s5 is an integer of 1 to 20,
t5 is an integer of 1 to 20, and
u5 is an integer of 1 to 20.

[16] The siloxane group-containing silane compound according to any one of [1] to [11], wherein $X^A$ is each independently a tri- to decavalent organic group.
[17] The siloxane group-containing silane compound according to any one of [1] to [11], wherein $X^A$ is each independently a group represented by the following:

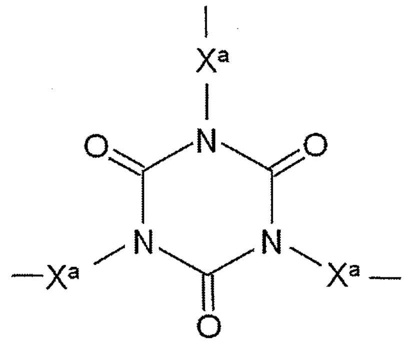

wherein $X^a$ is each independently a single bond or a divalent organic group.

[18] The siloxane group-containing silane compound according to [17], wherein $X^a$ is each independently a group represented by the following formula:

$$-(CX^{121}X^{122})_{x1}-(X^{a1})_{y1}-(CX^{123}X^{124})_{z1}-$$

wherein

$X^{121}$ to $X^{124}$ are each independently H, OH, or -OSi $(OR^{121})_3$, where $R^{121}$ is each independently an alkyl group having 1 to 4 carbon atoms;
$x^{a1}$ is -C(=O)NH-, -NHC(=O)-, -O-, -C(=O)O-, -OC(=O)-, - OC(=O)O-, -NHC(=O)NH-, $-NR^{122}-$, $-C(=O)-NR^{122}-$, $-NR^{122}-C(=O)-$, or S;
$R^{122}$ is a $C_{1-6}$ hydrocarbon chain;
x1 is an integer of 0 to 10;
y1 is 0 or 1; and
z1 is an integer of 1 to 10.

[19] A composition comprising the siloxane group-containing silane compound according to any one of [1] to [18].

[20] A composition comprising at least one of the siloxane-containing silane compound according to any one of [1] to [18] and a compound composed of a condensed product in which at least a portion of the siloxane-containing silane compound is condensed.

[21] The composition according to [19] or [20], further comprising a solvent selected from compounds represented by $R^{71}OR^{72}$, $R^{73}_{n8}C_6H_{6-n8}$, $R^{74}R^{75}R^{76}Si-(O-SiR^{77}R^{78})_{m8}-R^{79}$, and $(OSiR^{77}R^{78})_{m9}$,
wherein

$R^{71}$ to $R^{79}$ are each independently a monovalent organic group having 1 to 10 carbon atoms;
m8 is an integer of 1 to 6;
m9 is an integer of 3 to 8; and
n8 is an integer of 0 to 6.

[22] The composition according to [21], wherein the solvent is $R^{74}R^{75}R^{76}Si-(O-SiR^{77}R^{78})_{m8}-R^{79}$.

[23] The composition according to [21] or [22], wherein the solvent is hexamethyldisiloxane, hexaethyldisiloxane, octamethyltrisiloxane, octamethylcyclotetrasiloxane, or decamethylcyclopentasiloxane.

[24] The composition according to any one of [19] to [23], which is a surface-treating agent.

[25] The composition according to [19] or [24], which is for vacuum deposition.

[26] The composition according to [19] or [24], which is for wet coating.

[27] A pellet comprising the composition according to any one of [19] to [25] .

[28] An article comprising a substrate and a layer on the substrate, wherein the layer is formed of the siloxane group-containing silane compound according to any one of [1] to [18] or the composition according to any one of claims [19] to [26].

[29] The article according to [28], which is an optical member.

[30] The article according to [28], which is a display.

[31] A compound represented by the following formula (1-a) or (2-a) :

$X^B-R^{S2}-X^B$ (1-a)

wherein

$R^{S1}$ is each independently at each occurrence $R^1-R^S-R^2_q-$;
$R^{S2}$ is $-O_p-R^S-R^2_q-$;
$R^S$ is each independently at each occurrence a divalent linear organosiloxane group;
$R^1$ is a hydrocarbon group;
$R^2$ is $-SiR^3_2-$;
$R^3$ is each independently at each occurrence a hydrocarbon group;
p is 0 or 1;
q is each independently 0 or 1; and
$X^B$ is each independently

$-(CH_2)_{s6}-X^{53}-X^{54}$,

$-X^{53}-(CH_2)_{t6}-X^{54}$,

or

$-(CH_2)_{s6}-X^{53}-(CH_2)_{t6}-X^{54}$,

wherein

$X^{53}$ is -O-, -CO-, $-CONR^{74}-$, $-O-CONR^{74}-$, $-O-(CH_2)_{u6}-CONR^{74}-$, $-O-(CH_2)_{u6}-CO-$, or a single bond,
$X^{54}$ is $R^{75}$, $-NR^{75}_2$, $-SiR^{75}_2R^{76}$, $-SiR^{75}_3$, $-CR^{75}_2R^{75}$, $-CR^{75}_3$, $-SiCl_2R^{76}$, $-SiCl_3$, or

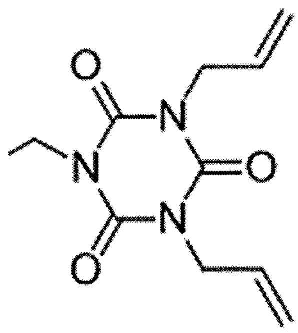

,

$R^{75}$ is $-CH=CH_2$ or $-CH_2-CH=CH_2$,
$R^{76}$ is a monovalent organic group,
$R^{74}$ is each independently at each occurrence a hydrogen atom, a phenyl group, a $C_{1-6}$ alkyl group, or an oxyalkylene-containing group having 1 to 10 carbon atoms,
s6 is an integer of 1 to 20,
t6 is an integer of 1 to 20, and
u6 is an integer of 1 to 20.

[32] The compound according to [31], wherein $X^{53}$ is $-CONR^{74}-$.
[33] The compound according to [31], wherein $X^{54}$ is $-Si(CH_2CH=CH_2)_3$ or $-SiCl_3$.
[34] The compound according to [31], wherein $X^{54}$ is

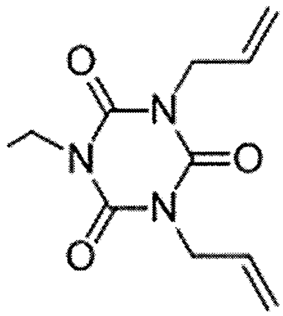

.

[35] The compound according to [31], wherein $-X^{53}-X^{54}$ is - $CON(CH_2CH=CH_2)_2$ or $-CONHCH_2C(CH_2CH=CH_2)_3$.

Advantageous Effect of Invention

According to the present disclosure, a surface-treating agent capable of forming a surface-treating layer with excellent fingerprint removability by wiping is provided.

Description of Embodiments

The term "monovalent organic group", as used herein, refers to a monovalent group containing carbon. The monovalent organic group is not limited, and may be a hydrocarbon group or a derivative thereof. The derivative of the hydrocarbon group refers to a group that has one or more of N, O, S, Si, amide, sulfonyl, siloxane, carbonyl, carbonyloxy, and the like at the end or in the molecular chain of the hydrocarbon group. The simple term "organic group" refers to a monovalent organic group. The term "di-to decavalent organic group" means a di- to decavalent group containing carbon. The di- to decavalent organic group may be, but is not limited to, a di- to decavalent group obtained by further removing 1 to 9 hydrogen atoms from an organic group. The divalent organic group is not limited, and examples thereof include divalent groups obtained by further removing one hydrogen atom from an organic group.

The term "hydrocarbon group", as used herein, refers to a group that contains carbon and hydrogen and that is obtained by removing one hydrogen atom from a hydrocarbon. The hydrocarbon group is not limited, and examples thereof include a $C_{1-20}$ hydrocarbon group optionally substituted with one or more substituents, such as an aliphatic hydrocarbon group and an aromatic hydrocarbon group. The above "aliphatic hydrocarbon group" may be either linear, branched, or cyclic, and may be either saturated or unsaturated. The hydrocarbon group may contain one or more ring structures.

Each substituent of the "hydrocarbon group", as used herein, is not limited, and examples thereof include a halogen atom; and one or more groups selected from a $C_{1-6}$ alkyl group, a $C_{2-6}$ alkenyl group, a $C_{2-6}$ alkynyl group, a $C_{3-10}$ cycloalkyl group, a $C_{3-10}$ unsaturated cycloalkyl group, a 5- to 10-membered heterocyclyl group, a 5- to 10-membered unsaturated heterocyclyl group, a $C_{6-10}$ aryl group, and a 5-to 10-membered heteroaryl group, each of which is optionally substituted with one or more halogen atoms.

The term "hydrolyzable group", as used herein, means a group which can undergo a hydrolysis reaction, namely, means a group which can be removed from a main backbone of the compound by a hydrolysis reaction. Examples of the hydrolyzable group include $-OR^h$, $-OCOR^h$, $-O-N=CR^h_2$, $-NR^h_2$, - $NHR^h$, -NCO, and a halogen (in these formulae, $R^h$ represents a substituted or unsubstituted $C_{1-4}$ alkyl group).

The compound of the present disclosure is a siloxane group-containing silane compound represented by the following formula (1) or (2):

$$R^{S1}{}_{\alpha}-X^A-R^H{}_{\beta} \quad (1)$$

$$R^H{}_{\gamma}-X^A-R^{S2}-X^A-R^H{}_{\gamma} \quad (2)$$

wherein

$R^{S1}$ is each independently at each occurrence $R^1-R^S-R^2{}_q-$;
$R^{S2}$ is $-O_p-R^S-R^2{}_q-$;
$R^S$ is each independently at each occurrence a divalent linear organosiloxane group;

$R^1$ is a hydrocarbon group;
$R^2$ is $-SiR^3_2-$;
$R^3$ is each independently at each occurrence a hydrocarbon group;
p is 0 or 1;
q is each independently 0 or 1;
$R^H$ is each independently at each occurrence a monovalent group containing a Si atom to which a hydroxyl group, a hydrolyzable group, or a monovalent organic group is bonded;
two or more Si atoms to which a hydroxyl group or a hydrolyzable group is bonded are present in $R^H$;
$X^A$ is each independently a single bond or a di- to decavalent organic group;
$\alpha$ is an integer of 1 to 9;
$\beta$ is an integer of 1 to 9; and
$\gamma$ is each independently an integer of 1 to 9.

$R^S$ is each independently at each occurrence a divalent linear organosiloxane group. Here, the divalent linear organosiloxane group means an organosiloxane group in which the main backbone of the siloxane ($-SiR_2-O-SiR_2-$) is linear, and the R group bonded to Si atoms may be either linear or branched.
In a preferred embodiment, $R^S$ is a group represented by the following formula:

$$-(SiR^3_2-O)_a-$$

wherein

$R^3$ is each independently at each occurrence a hydrocarbon group; and
a is 2 to 1,500.

$R^3$ is each independently at each occurrence a hydrocarbon group. Such a hydrocarbon group is optionally substituted.
$R^3$ is, each independently at each occurrence, preferably an unsubstituted hydrocarbon group, or a hydrocarbon group substituted with a halogen atom. Such a halogen atom is preferably a fluorine atom.
$R^3$ is, each independently at each occurrence, preferably a $C_{1-6}$ alkyl group or aryl group optionally substituted with a halogen atom, and more preferably a $C_{1-6}$ alkyl group or aryl group.
The above $C_{1-6}$ alkyl group may be linear or branched, and is preferably linear. The $C_{1-6}$ alkyl group is preferably a $C_{1-3}$ alkyl group, and more preferably a methyl group.
The above aryl group is preferably a phenyl group.
In one embodiment, $R^3$ is, each independently at each occurrence, a $C_{1-6}$ alkyl group, preferably a $C_{1-3}$ alkyl group, and more preferably a methyl group.
In another embodiment, $R^3$ is a phenyl group.
In another embodiment, $R^3$ is, each independently at each occurrence, a methyl group or a phenyl group, and preferably a methyl group.
a is 2 to 1,500. a may be preferably 5 or more, more preferably 10 or more, and still more preferably 15 or more, such as 30 or more or 50 or more. a may be preferably 1,000 or less, more preferably 500 or less, still more preferably 200 or less, and even more preferably 150 or less, such as 100 or less or 80 or less.
a may be preferably 5 to 1,000, more preferably 10 to 500, still more preferably 15 to 200, and even more preferably 15 to 150.
$R^1$ is a hydrocarbon group, and has the same definition as for $R^3$.
$R^1$ is preferably a $C_{1-6}$ alkyl group or aryl group optionally substituted with a halogen atom, and more preferably a $C_{1-6}$ alkyl group or aryl group.
In one embodiment, $R^1$ is a $C_{1-6}$ alkyl group, preferably a $C_{1-3}$ alkyl group, and more preferably a methyl group.
In another embodiment, $R^1$ is a phenyl group.
In another embodiment, $R^1$ is a methyl group or a phenyl group, and preferably a methyl group.
p is each independently at each occurrence 0 or 1. In one embodiment, p is 0. In another embodiment, p is 1.
q is each independently at each occurrence 0 or 1. In one embodiment, q is 0. In another embodiment, q is 1.
In one embodiment, p is 0 and q is 1.
$R^H$ is each independently at each occurrence a monovalent group containing a Si atom to which a hydroxyl group, a hydrolyzable group, or a monovalent organic group is bonded, and two or more Si atoms to which a hydroxyl group or a hydrolyzable group is bonded are present in $R^H$.
In a preferred embodiment, $R^H$ is a group represented by the following formula (S1), (S2), (S3), or (S4):

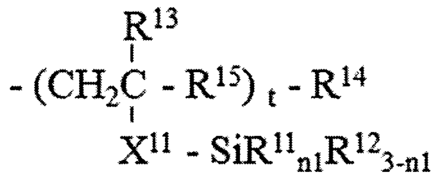

(S1)

$- SiR^{a1}_{k1}R^{b1}_{l1}R^{c1}_{m1}$ (S2)

$-CR^{d1}_{k2}R^{e1}_{l2}R^{f1}_{m2}$ (S3)

$-NR^{g1}R^{h1}$ (S4)

wherein

$R^{11}$ is each independently at each occurrence a hydroxyl group or a hydrolyzable group;
$R^{12}$ is each independently at each occurrence a monovalent organic group;
n1 is each independently an integer of 0 to 3 for each $(SiR^{11}_{n1}R^{12}_{3-n1})$ unit;
$X^{11}$ is each independently at each occurrence a single bond or a divalent organic group;
$R^{13}$ is each independently at each occurrence a hydrogen atom or a monovalent organic group;
t is each independently at each occurrence an integer of 2 or more;
$R^{14}$ is each independently at each occurrence a hydrogen atom, a halogen atom, or $-X^{11}-SiR^{11}_{n1}R^{12}_{3-n1}$;
$R^{15}$ is each independently at each occurrence a single bond, an oxygen atom, an alkylene group having 1 to 6 carbon atoms, or an alkyleneoxy group having 1 to 6 carbon atoms;
$R^{a1}$ is each independently at each occurrence $-Z^1-SiR^{21}_{p1}R^{22}_{q1}R^{23}_{r1}$;
$Z^1$ is each independently at each occurrence a divalent organic group;
$R^{21}$ is each independently at each occurrence $-Z^{1'}-SiR^{21'}_{p1'}R^{22'}_{q1'}R^{23'}_{r1'}$;
$R^{22}$ is each independently at each occurrence a hydroxyl group or a hydrolyzable group;
$R^{23}$ is each independently at each occurrence a monovalent organic group;
p1 is each independently at each occurrence an integer of 0 to 3;
q1 is each independently at each occurrence an integer of 0 to 3;
r1 is each independently at each occurrence an integer of 0 to 3;
$Z^{1'}$ is each independently at each occurrence a divalent organic group;
$R^{21'}$ is each independently at each occurrence $-Z^{1''}-SiR^{22''}_{q1''}R^{23''}_{r1''}$;
$R^{22'}$ is each independently at each occurrence a hydroxyl group or a hydrolyzable group;
$R^{23'}$ is each independently at each occurrence a monovalent organic group;
p1' is each independently at each occurrence an integer of 0 to 3;
q1' is each independently at each occurrence an integer of 0 to 3;
r1' is each independently at each occurrence an integer of 0 to 3;
$Z^{1''}$ is each independently at each occurrence a divalent organic group;
$R^{22''}$ is each independently at each occurrence a hydroxyl group or a hydrolyzable group;
$R^{23''}$ is each independently at each occurrence a monovalent organic group;
q1" is each independently at each occurrence an integer of 0 to 3;
r1" is each independently at each occurrence an integer of 0 to 3;
$R^{b1}$ is each independently at each occurrence a hydroxyl group or a hydrolyzable group;
$R^{c1}$ is each independently at each occurrence a monovalent organic group;
k1 is each independently at each occurrence an integer of 0 to 3;
l1 is each independently at each occurrence an integer of 0 to 3;
m1 is each independently at each occurrence an integer of 0 to 3;
$R^{d1}$ is each independently at each occurrence $-Z^2-CR^{31}_{p2}R^{32}_{q2}R^{33}_{r2}$;
$Z^2$ is each independently at each occurrence a single bond, an oxygen atom, or a divalent organic group;
is each independently at each occurrence $-Z^{2'}-CR^{32'}_{q2'}R^{33'}_{r2'}$;
$R^{32}$ is each independently at each occurrence $-Z^3-SiR^{34}_{n2}R^{35}_{3-n2}$;
$R^{33}$ is each independently at each occurrence a hydrogen atom, a hydroxyl group, or a monovalent organic group;
p2 is each independently at each occurrence an integer of 0 to 3;
q2 is each independently at each occurrence an integer of 0 to 3;
r2 is each independently at each occurrence an integer of 0 to 3;
$Z^{2'}$ is each independently at each occurrence a single bond, an oxygen atom, or a divalent organic group;

$R^{32'}$ is each independently at each occurrence $-Z^3-SiR^{34}_{n2}R^{35}_{3-n2}$;
$R^{33'}$ is each independently at each occurrence a hydrogen atom, a hydroxyl group, or a monovalent organic group;
q2' is each independently at each occurrence an integer of 0 to 3;
r2' is each independently at each occurrence an integer of 0 to 3;
$Z^3$ is each independently at each occurrence a single bond, an oxygen atom, or a divalent organic group;
$R^{34}$ is each independently at each occurrence a hydroxyl group or a hydrolyzable group;
$R^{35}$ is each independently at each occurrence a monovalent organic group;
n2 is each independently at each occurrence an integer of 0 to 3;
$R^{e1}$ is each independently at each occurrence $-Z^3-SiR^{34}_{n2}R^{35}_{3-n2}$;
$R^{f1}$ is each independently at each occurrence a hydrogen atom, a hydroxyl group, or a monovalent organic group;
k2 is each independently at each occurrence an integer of 0 to 3;
l2 is each independently at each occurrence an integer of 0 to 3;
m2 is each independently at each occurrence an integer of 0 to 3;
$R^{g1}$ and $R^{h1}$ are each independently at each occurrence - $Z^4-SiR^{11}_{n1}R^{12}_{3-n1}$, $-Z^4-SiR^{a1}_{k1}R^{b1}_{l1}R^{c1}_{m1}$, or $-Z^4-CR^{d1}_{k2}R^{e1}_{l2}R^{f1}_{m2}$; and
$Z^4$ is each independently at each occurrence a single bond, an oxygen atom, or a divalent organic group,
provided that, in the formulae (S1), (S2), (S3), and (S4), at least two Si atoms to which a hydroxyl group or a hydrolyzable group is bonded are present.

In the above formulae, $R^{11}$ is each independently at each occurrence a hydroxyl group or a hydrolyzable group.

$R^{11}$ is preferably, each independently at each occurrence, a hydrolyzable group.

$R^{11}$ is preferably, each independently at each occurrence, $-OR^h$, $-OCOR^h$, $-O-N=CR^h_2$, $-NR^h_2$, $-NHR^h$, -NCO, or a halogen (in these formulae, $R^h$ represents a substituted or unsubstituted $C_{1-4}$ alkyl group), and more preferably $-OR^h$ (that is, an alkoxy group). Examples of $R^h$ include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, $R^h$ is a methyl group, and in another embodiment, $R^h$ is an ethyl group.

In the above formulae, $R^{12}$ is each independently at each occurrence a monovalent organic group. Such a monovalent organic group is a monovalent organic group excluding the above hydrolyzable group.

In $R^{12}$, the monovalent organic group is preferably a $C_{1-20}$ alkyl group, more preferably a $C_{1-6}$ alkyl group, and still more preferably a methyl group.

In the above formulae, n1 is each independently an integer of 0 to 3 for each $(SiR^{11}_{n1}R^{12}_{3-n1})$ unit. However, in the formula (S1), at least two $(SiR^{11}_{n1}R^{12}_{3-n1})$ units with n1 of 1 to 3 are present. In other words, in the formula (S1), at least two Si atoms to which a hydroxyl group or a hydrolyzable group is bonded are present.

n1 is each independently an integer of preferably 1 to 3, more preferably 2 to 3, and still more preferably 3 for each $(SiR^{11}_{n1}R^{12}_{3-n1})$ unit.

In the above formula, $X^{11}$ is each independently at each occurrence a single bond or a divalent organic group. Such a divalent organic group is preferably $-R^{28}-O_x-R^{29}-$ (wherein $R^{28}$ and $R^{29}$ are each independently at each occurrence a single bond or a $C_{1-20}$ alkylene group, and x is 0 or 1). Such a $C_{1-20}$ alkylene group may be linear or branched, and is preferably linear. Such a $C_{1-20}$ alkylene group is preferably a $C_{1-10}$ alkylene group, more preferably a $C_{1-6}$ alkylene group, and still more preferably a $C_{1-3}$ alkylene group.

In one embodiment, $X^{11}$ is each independently at each occurrence a $-C_{1-6}$ alkylene-O-$C_{1-6}$ alkylene- or a -O-$C_{1-6}$ alkylene-.

In a preferred embodiment, $X^{11}$ is each independently at each occurrence a single bond or a linear $C_{1-6}$ alkylene group, preferably a single bond or a linear $C_{1-3}$ alkylene group, more preferably a single bond or a linear $C_{1-2}$ alkylene group, and still more preferably a linear $C_{1-2}$ alkylene group.

In the above formula, $R^{13}$ is each independently at each occurrence a hydrogen atom or a monovalent organic group. Such a monovalent organic group is preferably a $C_{1-20}$ alkyl group.

In a preferred embodiment, $R^{13}$ is each independently at each occurrence a hydrogen atom or a linear $C_{1-6}$ alkyl group, preferably a hydrogen atom or a linear $C_{1-3}$ alkyl group, preferably a hydrogen atom or a methyl group.

In the above formula, $R^{15}$ is each independently at each occurrence a single bond, an oxygen atom, an alkylene group having 1 to 6 carbon atoms, or an alkyleneoxy group having 1 to 6 carbon atoms.

In one embodiment, $R^{15}$ is each independently at each occurrence an oxygen atom, an alkylene group having 1 to 6 carbon atoms, or an alkyleneoxy group having 1 to 6 carbon atoms.

In a preferred embodiment, $R^{15}$ is a single bond.

In the above formula, t is each independently at each occurrence an integer of 2 or more.

In a preferred embodiment, t is, each independently at each occurrence, an integer of 2 to 10, and preferably

an integer of 2 to 6.

In the above formula, $R^{14}$ is each independently at each occurrence a hydrogen atom, a halogen atom, or $-X^{11}-SiR^{11}_{n1}R^{12}_{3-n1}$. Such a halogen atom is preferably an iodine atom, a chlorine atom, or a fluorine atom, and more preferably a fluorine atom. In a preferred embodiment, $R^{14}$ is a hydrogen atom.

In one embodiment, the formula (S1) is the following formula (S1-a):

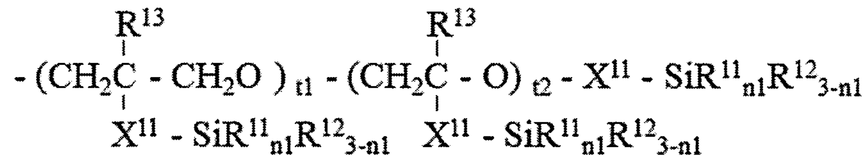

(S1-a)

wherein

$R^{11}$, $R^{12}$, $R^{13}$, $X^{11}$, and n1 have the same definition as described for the above formula (S1);
t1 and t2 are, each independently at each occurrence, an integer of 1 or more, preferably an integer of 1 to 10, and more preferably an integer of 2 to 10, such as an integer of 1 to 5 or an integer of 2 to 5; and
the occurrence order of the respective repeating units enclosed in parentheses provided with t1 and t2 is not limited in the formula.

In a preferred embodiment, the formula (S1) is the following formula (S1-b):

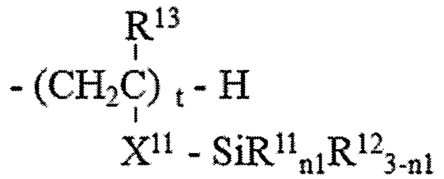

(S1-b)

wherein $R^{11}$, $R^{12}$, $R^{13}$, $X^{11}$, n1, and t have the same definition as described for the above formula (S1).

In the above formula, $R^{a1}$ is each independently at each occurrence $-Z^1-SiR^{21}_{p1}R^{22}_{q1}R^{23}_{r1}$.

$Z^1$ is each independently at each occurrence an oxygen atom or a divalent organic group. The structure denoted as $Z^1$ hereinafter is bonded to $(SiR^{21}_{p1}R^{22}_{q1}R^{23}_{r1})$ on the right side.

In a preferred embodiment, $Z^1$ is a divalent organic group.

In a preferred embodiment, $Z^1$ does not include a group that forms a siloxane bond with the Si atom to which $Z^1$ is bonded. Preferably, in the formula (S2), $(Si-Z^1-Si)$ does not contain a siloxane bond.

$Z^1$ is preferably a $C_{1-6}$ alkylene group, $-(CH_2)_{z1}-O-(CH_2)_{z2}-$(wherein z1 is an integer of 0 to 6, such as an integer of 1 to 6, and z2 is an integer of 0 to 6, such as an integer of 1 to 6), or $-(CH_2)_{z3}$-phenylene-$(CH_2)_{z4}-$ (wherein z3 is an integer of 0 to 6, such as an integer of 1 to 6, and z4 is an integer of 0 to 6, such as an integer of 1 to 6). Such a $C_{1-6}$ alkylene group may be linear or branched, and is preferably linear. These groups are optionally substituted with, for example, one or more substituents selected from a fluorine atom, a $C_{1-6}$ alkyl group, a $C_{2-6}$ alkenyl group, and a $C_{2-6}$ alkynyl group, and are preferably unsubstituted.

In a preferred embodiment, $Z^1$ is a $C_{1-6}$ alkylene group or $-(CH_2)_{z3}$-phenylene-$(CH_2)_{z4}-$, and preferably -phenylene-$(CH_2)_{z4}-$.

In another preferred embodiment, $Z^1$ is a $C_{1-3}$ alkylene group. In one embodiment, $Z^1$ may be $-CH_2CH_2CH_2-$. In another embodiment, $Z^1$ may be $-CH_2CH_2-$.

$R^{21}$ is each independently at each occurrence $-Z^{1'}-SiR^{21'}_{p1'}R^{22'}_{q1'}R^{23'}_{r1'}$.

$Z^{1'}$ is each independently at each occurrence an oxygen atom or a divalent organic group. The structure denoted as $Z^{1'}$ hereinafter is bonded to $(SiR^{21'}_{p1'}R^{22'}_{q1'}R^{23'}_{r1'})$ on the right side.

In a preferred embodiment, $Z^{1'}$ is a divalent organic group.

In a preferred embodiment, $Z^{1'}$ does not include a group that forms a siloxane bond with the Si atom to which $Z^{1'}$ is bonded. Preferably, in the formula (S2), $(Si-Z^{1'}-Si)$ does not contain a siloxane bond.

$Z^{1'}$ is preferably a $C_{1-6}$ alkylene group, $-(CH_2)_{z1'}-O-(CH_2)_{z2'}-$ (wherein z1' is an integer of 0 to 6, such as an integer of 1 to 6, and z2' is an integer of 0 to 6, such as an integer of 1 to 6), or $-(CH_2)_{z3'}$-phenylene-$(CH_2)_{z4'}-$(wherein z3' is an integer of 0 to 6, such as an integer of 1 to 6, and z4' is an integer of 0 to 6, such as an integer of 1 to 6). Such a $C_{1-6}$ alkylene group may be linear or branched, and is preferably linear. These groups are optionally substituted with, for example, one or more substituents selected from a fluorine atom, a $C_{1-6}$ alkyl group, a $C_{2-6}$ alkenyl group, and a $C_{2-6}$ alkynyl group

alkynyl group, and are preferably unsubstituted.

In a preferred embodiment, $Z^{1'}$ is a $C_{1-6}$ alkylene group or $-(CH_2)_{z3'}$-phenylene-$(CH_2)_{z4'}$-, and preferably -phenylene-$(CH_2)_{z4'}$-.

In another preferred embodiment, $Z^{1'}$ is a $C_{1-3}$ alkylene group. In one embodiment, $Z^{1'}$ may be $-CH_2CH_2CH_2-$. In another embodiment, $Z^{1'}$ may be $-CH_2CH_2-$.

$R^{21'}$ is each independently at each occurrence $-Z^{1''}-SiR^{22''}_{q1''}R^{23''}_{r1''}$.

$Z^{1''}$ is each independently at each occurrence an oxygen atom or a divalent organic group. The structure denoted as $Z^{1''}$ hereinafter is bonded to $(SiR^{22''}_{q1''}R^{23''}_{r1''})$ on the right side.

In a preferred embodiment, $Z^{1''}$ is a divalent organic group.

In a preferred embodiment, $Z^{1''}$ does not include a group that forms a siloxane bond with the Si atom to which $Z^{1''}$ is bonded. Preferably, in the formula (S2), (Si-$Z^{1''}$-Si) does not contain a siloxane bond.

$Z^{1''}$ is preferably a $C_{1-6}$ alkylene group, $-(CH_2)_{z1''}-O-(CH_2)_{z2''}-$ (wherein z1" is an integer of 0 to 6, such as an integer of 1 to 6, and z2" is an integer of 0 to 6, such as an integer of 1 to 6), or $-(CH_2)_{z3''}$-phenylene-$(CH_2)_{z4''}$-(wherein z3" is an integer of 0 to 6, such as an integer of 1 to 6, and z4" is an integer of 0 to 6, such as an integer of 1 to 6). Such a $C_{1-6}$ alkylene group may be linear or branched, and is preferably linear. These groups are optionally substituted with, for example, one or more substituents selected from a fluorine atom, a $C_{1-6}$ alkyl group, a $C_{2-6}$ alkenyl group, and a $C_{2-6}$ alkynyl group, and are preferably unsubstituted.

In a preferred embodiment, $Z^{1''}$ is a $C_{1-6}$ alkylene group or $-(CH_2)_{z3''}$-phenylene-$(CH_2)_{z4''}$-, and preferably -phenylene-$(CH_2)_{z4''}$-. When $Z^{1''}$ is such a group, light resistance, in particular ultraviolet resistance, can be further enhanced.

In another preferred embodiment, $Z^{1''}$ is a $C_{1-3}$ alkylene group. In one embodiment, $Z^{1''}$ may be $-CH_2CH_2CH_2-$. In another embodiment, $Z^{1''}$ may be $-CH_2CH_2-$.

$R^{22''}$ is each independently at each occurrence a hydroxyl group or a hydrolyzable group.

$R^{22''}$ is preferably, each independently at each occurrence, a hydrolyzable group.

$R^{22''}$ is preferably, each independently at each occurrence, $-OR^h$, $-OCOR^h$, $-O-N=CR^h_2$, $-NR^h_2$, $-NHR^h$, -NCO, or a halogen (in these formulae, $R^h$ represents a substituted or unsubstituted $C_{1-4}$ alkyl group), and more preferably $-OR^h$ (that is, an alkoxy group). Examples of $R^h$ include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, $R^h$ is a methyl group, and in another embodiment, $R^h$ is an ethyl group.

$R^{23''}$ is each independently at each occurrence a monovalent organic group. Such a monovalent organic group is a monovalent organic group excluding the above hydrolyzable group.

In $R^{23''}$, the monovalent organic group is preferably a $C_{1-20}$ alkyl group, more preferably a $C_{1-6}$ alkyl group, and still more preferably a methyl group.

q1" is each independently at each occurrence an integer of 0 to 3, and r1" is each independently at each occurrence an integer of 0 to 3. The sum of q1" and r1" is 3 in the $(SiR^{22''}_{q1''}R^{23''}_{r1''})$ unit.

q1" is each independently an integer of preferably 1 to 3, more preferably 2 to 3, and still more preferably 3 for each $(SiR^{22''}_{q1''}R^{23''}_{r1''})$ unit.

$R^{22'}$ is each independently at each occurrence a hydroxyl group or a hydrolyzable group.

$R^{22'}$ is preferably, each independently at each occurrence, a hydrolyzable group.

$R^{22'}$ is preferably, each independently at each occurrence, $-OR^h$, $-OCOR^h$, $-O-N=CR^h_2$, $-NR^h_2$, $-NHR^h$, -NCO, or a halogen (in these formulae, $R^h$ represents a substituted or unsubstituted $C_{1-4}$ alkyl group), and more preferably $-OR^h$ (that is, an alkoxy group). Examples of $R^h$ include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, $R^h$ is a methyl group, and in another embodiment, $R^h$ is an ethyl group.

$R^{23'}$ is each independently at each occurrence a monovalent organic group. Such a monovalent organic group is a monovalent organic group excluding the above hydrolyzable group.

In $R^{23'}$, the monovalent organic group is preferably a $C_{1-20}$ alkyl group, more preferably a $C_{1-6}$ alkyl group, and still more preferably a methyl group.

p1' is each independently at each occurrence an integer 0 to 3, q1' is each independently at each occurrence an integer of 0 to 3, and r1' is each independently at each occurrence an integer of 0 to 3. The sum of p', q1', and r1' is 3 in the $(SiR^{21'}_{p1'}R^{22'}_{q1'}R^{23'}_{r1'})$ unit.

In one embodiment, p1' is 0.

In one embodiment, p1' may be each independently an integer of 1 to 3, an integer of 2 to 3, or 3 for each $(SiR^{21'}_{p1'}R^{22'}_{q1'}R^{23'}_{r1'})$ unit. In a preferred embodiment, p1' is 3.

In one embodiment, q1' is each independently an integer of 1 to 3, preferably an integer of 2 to 3, and more

preferably 3 for each ($SiR^{21'}_{p1'}R^{22'}_{q1'}R^{23'}_{r1'}$) unit.

In one embodiment, p1' is 0, and q1' is each independently an integer of 1 to 3, preferably an integer of 2 to 3, and more preferably 3 for each ($SiR^{21'}_{p1'}R^{22'}_{q1'}R^{23'}_{r1'}$) unit.

$R^{22}$ is each independently at each occurrence a hydroxyl group or a hydrolyzable group.

$R^{22}$ is preferably, each independently at each occurrence, a hydrolyzable group.

$R^{22}$ is preferably, each independently at each occurrence, $-OR^h$, $-OCOR^h$, $-O-N=CR^h_2$, $-NR^h_2$, $-NHR^h$, -NCO, or a halogen (in these formulae, $R^h$ represents a substituted or unsubstituted $C_{1-4}$ alkyl group), and more preferably $-OR^h$ (that is, an alkoxy group). Examples of $R^h$ include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, $R^h$ is a methyl group, and in another embodiment, $R^h$ is an ethyl group.

$R^{23}$ is each independently at each occurrence a monovalent organic group. Such a monovalent organic group is a monovalent organic group excluding the above hydrolyzable group.

In $R^{23}$, the monovalent organic group is preferably a $C_{1-20}$ alkyl group, more preferably a $C_{1-6}$ alkyl group, and still more preferably a methyl group.

p1 is each independently at each occurrence an integer of 0 to 3, q1 is each independently at each occurrence an integer of 0 to 3, and r1 is each independently at each occurrence an integer of 0 to 3. The sum of p1, q1, and r1 is 3 in the ($SiR^{21}_{p1}R^{22}_{q1}R^{23}_{r1}$) unit.

In one embodiment, p1 is 0.

In one embodiment, p1 may be each independently an integer of 1 to 3, an integer of 2 to 3, or 3 for each ($SiR^{21}_{p1}R^{22}_{q1}R^{23}_{r1}$) unit. In a preferred embodiment, p1 is 3.

In one embodiment, q1 is each independently an integer of 1 to 3, preferably an integer of 2 to 3, and more preferably 3 for each ($SiR^{21}_{p1}R^{22}_{q1}R^{23}_{r1}$) unit.

In one embodiment, p1 is 0, and q1 is each independently an integer of 1 to 3, preferably an integer of 2 to 3, and still more preferably 3 for each ($SiR^{21}_{p1}R^{22}_{q1}R^{23}_{r1}$) unit.

In the above formula, $R^{b1}$ is each independently at each occurrence a hydroxyl group or a hydrolyzable group.

$R^{b1}$ is preferably, each independently at each occurrence, a hydrolyzable group.

$R^{b1}$ is preferably, each independently at each occurrence, $-OR^h$, $-OCOR^h$, $-O-N=CR^h_2$, $-NR^h_2$, $-NHR^h$, -NCO, or a halogen (in these formulae, $R^h$ represents a substituted or unsubstituted $C_{1-4}$ alkyl group), and more preferably $-OR^h$ (that is, an alkoxy group). Examples of $R^h$ include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, $R^h$ is a methyl group, and in another embodiment, $R^h$ is an ethyl group.

In the above formula, $R^{c1}$ is each independently at each occurrence a monovalent organic group. Such a monovalent organic group is a monovalent organic group excluding the above hydrolyzable group.

In $R^{c1}$, the monovalent organic group is preferably a $C_{1-20}$ alkyl group, more preferably a $C_{1-6}$ alkyl group, and still more preferably a methyl group.

k1 is each independently at each occurrence an integer of 0 to 3, l1 is each independently at each occurrence an integer of 0 to 3, and m1 is each independently at each occurrence an integer of 0 to 3. The sum of k1, l1, and m1 is 3 in the ($SiR^{a1}_{k1}R^{b1}_{l1}R^{c1}_{m1}$) unit.

In one embodiment, k1 is each independently an integer of 1 to 3, preferably 2 or 3, and more preferably 3 for each ($SiR^{a1}_{k1}R^{b1}_{l1}R^{c1}_{m1}$) unit. In a preferred embodiment, k1 is 3.

In the formula (S2), at least two Si atoms to which a hydroxyl group or a hydrolyzable group is bonded are present.

In a preferred embodiment, in the end part of the formula (S2), at least two Si atoms to which a hydroxyl group or a hydrolyzable group is bonded are present.

In a preferred embodiment, the group represented by the formula (S2) has any one of $-Z^1-SiR^{22}_{q1}R^{23}_{r1}$ (wherein q1 is an integer of 1 to 3, preferably 2 or 3, and more preferably 3, and r1 is an integer of 0 to 2), $-Z^{1'}-SiR^{22'}_{q1'}R^{23'}_{r1'}$ (wherein q1' is an integer of 1 to 3, preferably 2 or 3, and more preferably 3, and r1' is an integer of 0 to 2), and $-Z^{1''}-SiR^{22''}_{q1''}R^{23''}_{r1''}$ (wherein q1" is an integer of 1 to 3, preferably 2 or 3, and more preferably 3, and r1" is an integer of 0 to 2) . $Z^1$, $Z^{1'}$, $Z^{1''}$, $R^{22}$, $R^{23}$, $R^{22'}$, $R^{23'}$, $R^{22''}$, and $R^{23''}$ have the same definition as described above.

In a preferred embodiment, when $R^{21'}$ is present in the formula (S2), q1" is an integer of 1 to 3, preferably 2 or 3, and more preferably 3 in at least one, preferably all of $R^{21'}$ groups.

In a preferred embodiment, when $R^{21}$ is present in the formula (S2), p1' is 0, and q1' is an integer of 1 to 3, preferably 2 or 3, and more preferably 3 in at least one, preferably all of $R^{21}$ groups.

In a preferred embodiment, when $R^{a1}$ is present in the formula (S2), p1 is 0, and q1 is an integer of 1 to 3, preferably 2 or 3, and more preferably 3 in at least one, preferably all of $R^{a1}$ groups.

In a preferred embodiment, in the formula (S2), k1 is 2 or 3, preferably 3, p1 is 0, and q1 is 2 or 3, preferably 3.

$R^{d1}$ is each independently at each occurrence $-Z^2-CR^{31}_{p2}R^{32}_{q2}R^{33}_{r2}$.

$Z^2$ is each independently at each occurrence a single bond, an oxygen atom, or a divalent organic group. The structure denoted as $Z^2$ hereinafter is bonded to $(CR^{31}_{p2}R^{32}_{q2}R^{33}_{r2})$ on the right side.

In a preferred embodiment, $Z^2$ is a divalent organic group.

In a preferred embodiment, $Z^2$ does not contain a siloxane bond.

$Z^2$ is preferably a $C_{1-6}$ alkylene group, $-(CH_2)_{z5}-O-(CH_2)_{z6}-$(wherein z5 is an integer of 0 to 6, such as an integer of 1 to 6, and z6 is an integer of 0 to 6, such as an integer of 1 to 6), or $-(CH_2)_{z7}$-phenylene-$(CH_2)_{z8}$- (wherein z7 is an integer of 0 to 6, such as an integer of 1 to 6, and z8 is an integer of 0 to 6, such as an integer of 1 to 6). Such a $C_{1-6}$ alkylene group may be linear or branched, and is preferably linear. These groups are optionally substituted with, for example, one or more substituents selected from a fluorine atom, a $C_{1-6}$ alkyl group, a $C_{2-6}$ alkenyl group, and a $C_{2-6}$ alkynyl group, and are preferably unsubstituted.

In a preferred embodiment, $Z^2$ is a $C_{1-6}$ alkylene group or $-(CH_2)_{z7}$-phenylene-$(CH_2)_{z8}$-, and preferably -phenylene-$(CH_2)_{z8}$-. When $Z^2$ is such a group, light resistance, in particular ultraviolet resistance, can be further enhanced.

In another preferred embodiment, $Z^2$ is a $C_{1-3}$ alkylene group. In one embodiment, $Z^2$ may be $-CH_2CH_2CH_2-$. In another embodiment, $Z^2$ may be $-CH_2CH_2-$.

is each independently at each occurrence $-Z^{2'}-CR^{32'}_{q2'}R^{33'}_{r2'}$.

$Z^{2'}$ is each independently at each occurrence a single bond, an oxygen atom, or a divalent organic group. The structure denoted as $Z^{2'}$ hereinafter is bonded to $(CR^{32'}_{q2'}R^{33'}_{r2'})$ on the right side.

In a preferred embodiment, $Z^{2'}$ does not contain a siloxane bond.

$Z^{2'}$ is preferably a $C_{1-6}$ alkylene group, $-(CH_2)_{z5'}-O-(CH_2)_{z6'}-$ (wherein z5' is an integer of 0 to 6, such as an integer of 1 to 6, and z6' is an integer of 0 to 6, such as an integer of 1 to 6), or $-(CH_2)_{z7'}$-phenylene-$(CH_2)_{z8'}$-(wherein z7' is an integer of 0 to 6, such as an integer of 1 to 6, and z8' is an integer of 0 to 6, such as an integer of 1 to 6). Such a $C_{1-6}$ alkylene group may be linear or branched, and is preferably linear. These groups are optionally substituted with, for example, one or more substituents selected from a fluorine atom, a $C_{1-6}$ alkyl group, a $C_{2-6}$ alkenyl group, and a $C_{2-6}$ alkynyl group, and are preferably unsubstituted.

In a preferred embodiment, $Z^{2'}$ is a $C_{1-6}$ alkylene group or $-(CH_2)_{z7'}$-phenylene-$(CH_2)_{z8'}$-, and preferably -phenylene-$(CH_2)_{z8'}$-. When $Z^{2'}$ is such a group, light resistance, in particular ultraviolet resistance, can be further enhanced.

In another preferred embodiment, $Z^{2'}$ is a $C_{1-3}$ alkylene group. In one embodiment, $Z^{2'}$ may be $-CH_2CH_2CH_2-$. In another embodiment, $Z^{2'}$ may be $-CH_2CH_2-$.

$R^{32'}$ is each independently at each occurrence $-Z^3-SiR^{34}_{n2}R^{35}_{3-n2}$.

$Z^3$ is each independently at each occurrence a single bond, an oxygen atom, or a divalent organic group. The structure denoted as $Z^3$ hereinafter is bonded to $(SiR^{34}_{n2}R^{35}_{3-n2})$ on the right side.

In one embodiment, $Z^3$ is an oxygen atom.

In one embodiment, $Z^3$ is a divalent organic group.

In a preferred embodiment, $Z^3$ does not contain a siloxane bond.

$Z^3$ is preferably a $C_{1-6}$ alkylene group, $-(CH_2)_{z5''}-O-(CH_2)_{z6''}-$ (wherein z5" is an integer of 0 to 6, such as an integer of 1 to 6, and z6" is an integer of 0 to 6, such as an integer of 1 to 6), or $-(CH_2)_{z7''}$-phenylene-$(CH_2)_{z8''}$-(wherein z7" is an integer of 0 to 6, such as an integer of 1 to 6, and z8" is an integer of 0 to 6, such as an integer of 1 to 6). Such a $C_{1-6}$ alkylene group may be linear or branched, and is preferably linear. These groups are optionally substituted with, for example, one or more substituents selected from a fluorine atom, a $C_{1-6}$ alkyl group, a $C_{2-6}$ alkenyl group, and a $C_{2-6}$ alkynyl group, and are preferably unsubstituted.

In a preferred embodiment, $Z^3$ is a $C_{1-6}$ alkylene group or $-(CH_2)_{z7''}$-phenylene-$(CH_2)_{z8''}$-, and preferably -phenylene-$(CH_2)_{z8''}$-. When $Z^3$ is such a group, light resistance, in particular ultraviolet resistance, can be further enhanced.

In another preferred embodiment, $Z^3$ is a $C_{1-3}$ alkylene group. In one embodiment, $Z^3$ may be $-CH_2CH_2CH_2-$. In another embodiment, $Z^3$ may be $-CH_2CH_2-$.

$R^{34}$ is each independently at each occurrence a hydroxyl group or a hydrolyzable group.

$R^{34}$ is preferably, each independently at each occurrence, a hydrolyzable group.

$R^{34}$ is preferably, each independently at each occurrence, $-OR^h$, $-OCOR^h$, $-O-N=CR^h_2$, $-NR^h_2$, $-NHR^h$, -NCO, or a halogen (in these formulae, $R^h$ represents a substituted or unsubstituted $C_{1-4}$ alkyl group), and more preferably $-OR^h$ (that is, an alkoxy group). Examples of $R^h$ include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, $R^h$ is a methyl group, and in another embodiment, $R^h$ is an ethyl group.

$R^{35}$ is each independently at each occurrence a monovalent organic group. Such a monovalent organic group is a monovalent organic group excluding the above hydrolyzable group.

In $R^{35}$, the monovalent organic group is preferably a $C_{1-20}$ alkyl group, more preferably a $C_{1-6}$ alkyl group, and

still more preferably a methyl group.

In the above formula, n2 is each independently an integer of 0 to 3 for each ($SiR^{34}_{n2}R^{35}_{3-n2}$) unit. However, in the end part of the formula (S3), at least two ($SiR^{34}_{n2}R^{35}_{3-n2}$) units with n2 of 1 to 3 are present. In other words, in the end part of the formula (S3), at least two Si atoms to which a hydroxyl group or a hydrolyzable group is bonded are present.

n2 is each independently an integer of preferably 1 to 3, more preferably 2 to 3, and still more preferably 3 for each ($SiR^{34}_{n2}R^{35}_{3-n2}$) unit.

$R^{33'}$ is each independently at each occurrence a hydrogen atom, a hydroxyl group, or a monovalent organic group. Such a monovalent organic group is a monovalent organic group excluding the above hydrolyzable group.

In $R^{33'}$, the monovalent organic group is preferably a $C_{1-20}$ alkyl group or $-(C_sH_{2s})_{t1}-(O-C_sH_{2s})_{t2}$ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a $C_{1-20}$ alkyl group, still more preferably a $C_{1-6}$ alkyl group, and particularly preferably a methyl group.

In one embodiment, $R^{33'}$ is a hydroxyl group.

In another embodiment, $R^{33'}$ is a monovalent organic group, preferably a $C_{1-20}$ alkyl group, and more preferably a $C_{1-6}$ alkyl group.

q2' is each independently at each occurrence an integer of 0 to 3, and r2' is each independently at each occurrence an integer of 0 to 3. The sum of q2' and r2' is 3 in the ($CR^{32'}_{q2'}R^{33'}_{r2'}$) unit.

q2' is each independently an integer of preferably 1 to 3, more preferably 2 to 3, and still more preferably 3 for each ($CR^{32'}_{q2'}R^{33'}_{r2'}$) unit.

$R^{32}$ is each independently at each occurrence $-Z^3-SiR^{34}_{n2}R^{35}_{3-n2}$. Such $-Z^3-SiR^{34}_{n2}R^{35}_{3-n2}$ has the same definition as described for $R^{32'}$.

$R^{33}$ is each independently at each occurrence a hydrogen atom, a hydroxyl group, or a monovalent organic group. Such a monovalent organic group is a monovalent organic group excluding the above hydrolyzable group.

In $R^{33}$, the monovalent organic group is preferably a $C_{1-20}$ alkyl group or $-(C_sH_{2s})t_1-(O-C_sH_{2s})t_2$ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a $C_{1-20}$ alkyl group, still more preferably a $C_{1-6}$ alkyl group, and particularly preferably a methyl group.

In one embodiment, $R^{33}$ is a hydroxyl group.

In another embodiment, $R^{33}$ is a monovalent organic group, preferably a $C_{1-20}$ alkyl group, and more preferably a $C_{1-6}$ alkyl group.

p2 is each independently at each occurrence an integer of 0 to 3, q2 is each independently at each occurrence an integer of 0 to 3, and r2 is each independently at each occurrence an integer of 0 to 3. The sum of p2, q2, and r2 is 3 in the ($CR^{31}_{P2}R^{32}_{q2}R^{33}_{r2}$) unit.

In one embodiment, p2 is 0.

In one embodiment, p2 may be each independently an integer of 1 to 3, an integer of 2 to 3, or 3 for each ($CR^{31}_{P2}R^{32}_{q2}R^{33}_{r2}$) unit. In a preferred embodiment, p2 is 3.

In one embodiment, q2 is each independently an integer of 1 to 3, preferably an integer of 2 to 3, and more preferably 3 for each ($CR^{31}_{P2}R^{32}_{q2}R^{33}_{r2}$) unit.

In one embodiment, p2 is 0, and q2 is each independently an integer of 1 to 3, preferably an integer of 2 to 3, and still more preferably 3 for each ($CR^{31}_{P2}R^{32}_{q2}R^{33}_{r2}$) unit.

$R^{e1}$ is each independently at each occurrence $-Z^3-SiR^{34}_{n2}R^{35}_{3-n2}$. Such $-Z^3-SiR^{34}_{n2}R^{35}_{3-n2}$ has the same definition as described for $R^{32'}$.

$R^{f1}$ is each independently at each occurrence a hydrogen atom, a hydroxyl group, or a monovalent organic group. Such a monovalent organic group is a monovalent organic group excluding the above hydrolyzable group.

In $R^{f1}$, the monovalent organic group is preferably a $C_{1-20}$ alkyl group or $-(C_sH_{2s})t_1-(O-C_sH_{2s})t_2$ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a $C_{1-20}$ alkyl group, still more preferably a $C_{1-6}$ alkyl group, and particularly preferably a methyl group.

In one embodiment, $R^{f1}$ is a hydroxyl group.

In another embodiment, $R^{f1}$ is a monovalent organic group, preferably a $C_{1-20}$ alkyl group, and more preferably a $C_{1-6}$ alkyl group.

k2 is each independently at each occurrence an integer of 0 to 3, l2 is each independently at each occurrence an integer of 0 to 3, and m2 is each independently at each occurrence an integer of 0 to 3. The sum of k2, l2, and m2 is 3 in the ($CR^{d1}_{k2}R^{e1}_{l2}R^{f1}_{m2}$) unit.

In one embodiment, 2 or more, such as 2 to 27, preferably 2 to 9, more preferably 2 to 6, still more preferably 2 to 3, and particularly preferably 3 ($SiR^{34}_{n2}R^{35}_{3-n2}$) units with n2 of 1 to 3, preferably 2 or 3, and more preferably 3 are present in each end part of the formula (S3) .

In a preferred embodiment, when $R^{32'}$ is present in the formula (S3), n2 is an integer of 1 to 3, preferably 2 or

3, and more preferably 3 in at least one, preferably all of $R^{32'}$ groups.

In a preferred embodiment, when $R^{32}$ is present in the formula (S3), n2 is an integer of 1 to 3, preferably 2 or 3, and more preferably 3 in at least one, preferably all of $R^{32}$ groups.

In a preferred embodiment, when $R^{e1}$ is present in the formula (S3), n2 is an integer of 1 to 3, preferably 2 or 3, and more preferably 3 in at least one, preferably all of $R^{a1}$ groups.

In a preferred embodiment, in the formula (S3), k2 is 0, l2 is 2 or 3, preferably 3, and n2 is 2 or 3, preferably 3.

$R^{g1}$ and $R^{h1}$ are each independently at each occurrence - $Z^4$-$SiR^{11}{}_{n1}R^{12}{}_{3-n1}$, -$Z^4$-$SiR^{a1}{}_{k1}R^{b1}{}_{l1}R^{c1}{}_{m1}$, or -$Z^4$-$CR^{d1}{}_{k2}R^{e1}{}_{12}R^{f1}{}_{m2}$. Here, $R^{11}$, $R^{12}$, $R^{a1}$, $R^{b2}$, $R^{c1}$, $R^{d1}$, $R^{e1}$, $R^{f1}$, n1, k1, I1, m1, k2, 12, and m2 have the same definition as described above.

In a preferred embodiment, $R^{g1}$ and $R^{h1}$ are each independently -$Z^4$-$SiR^{11}{}_{n1}R^{12}{}_{3-n1}$.

$Z^4$ is each independently at each occurrence a single bond, an oxygen atom, or a divalent organic group. The structure denoted as $Z^4$ hereinafter is bonded to ($SiR^{11}{}_{n1}R^{12}{}_{3-n1}$) on the right side.

In one embodiment, $Z^4$ is an oxygen atom.

In one embodiment, $Z^4$ is a divalent organic group.

In a preferred embodiment, $Z^4$ does not contain a siloxane bond.

$Z^4$ is preferably a $C_{1-6}$ alkylene group, -$(CH_2)_{z5'''}$-O-$(CH_2)_{z6'''}$- (wherein z5" is an integer of 0 to 6, such as an integer of 1 to 6, and z6" is an integer of 0 to 6, such as an integer of 1 to 6), or -$(CH_2)_{z7'''}$-phenylene-$(CH_2)_{z8'''}$-(wherein z7" is an integer of 0 to 6, such as an integer of 1 to 6, and z8" is an integer of 0 to 6, such as an integer of 1 to 6). Such a $C_{1-6}$ alkylene group may be linear or branched, and is preferably linear. These groups are optionally substituted with, for example, one or more substituents selected from a fluorine atom, a $C_{1-6}$ alkyl group, a $C_{2-6}$ alkenyl group, and a $C_{2-6}$ alkynyl group, and are preferably unsubstituted.

In a preferred embodiment, $Z^4$ is a $C_{1-6}$ alkylene group or - $(CH_2)_{z7'''}$-phenylene- $(CH_2)_{z8'''}$-, and preferably -phenylene-$(CH_2)_{z8'''}$-. When $Z^3$ is such a group, light resistance, in particular ultraviolet resistance, can be further enhanced.

In another preferred embodiment, $Z^4$ is a $C_{1-3}$ alkylene group. In one embodiment, $Z^4$ may be -$CH_2CH_2CH_2$-. In another embodiment, $Z^4$ may be -$CH_2CH_2$-.

In a preferred embodiment, the formulae (S1), (S2), (S3), and (S4) do not contain a siloxane bond.

In one embodiment, $R^H$ is a group represented by the formula (S2), (S3), or (S4).

In one embodiment, $R^H$ is a group represented by the formula (S2) or (S3).

In one embodiment, $R^H$ is a group represented by the formula (S3) or (S4).

In one embodiment, $R^H$ is a group represented by the formula (S1). In a preferred embodiment, the formula (S1) is a group represented by the formula (S1-b). In a preferred embodiment, in the formula, $R^{13}$ is a hydrogen atom, $X^{11}$ is a single bond or -$R^{28}$-$O_x$-$R^{29}$- (wherein $R^{28}$ and $R^{29}$ are each independently at each occurrence a single bond or a $C_{1-20}$ alkylene group, and x is 0 or 1), and n1 is 1 to 3, preferably 2 to 3, and still more preferably 3.

In one embodiment, $R^H$ is a group represented by the formula (S2). In a preferred embodiment, the formula (S3) is -$SiR^{a1}{}_2R^{c1}$ or -$SiR^{a1}{}_3$, $R^{a1}$ is -$Z^1$-$SiR^{22}{}_{q1}R^{23}{}_{r1}$, $Z^1$ is a $C_{1-6}$ alkylene group, -$(CH_2)_{z1}$-O-$(CH_2)_{z2}$- (wherein z1 is an integer of 0 to 6, such as an integer of 1 to 6, and z2 is an integer of 0 to 6, such as an integer of 1 to 6), or -$(CH_2)_{z3}$-phenylene-$(CH_2)_{z4}$- (wherein z3 is an integer of 0 to 6, such as an integer of 1 to 6, and z4 is an integer of 0 to 6, such as an integer of 1 to 6), preferably a $C_{1-6}$ alkylene group, and q1 is 1 to 3, preferably 2 to 3, and still more preferably 3.

In one embodiment, $R^H$ is a group represented by the formula (S3). In a preferred embodiment, the formula (S4) is -$CR^{e1}{}_2R^{f1}$ or -$CR^{e1}{}_3$, $R^{e1}$ is -$Z^3$-$SiR^{34}{}_{n2}R^{35}{}_{3-n2}$, $Z^3$ is a $C_{1-6}$ alkylene group, -$(CH_2)_{z5'''}$-O-$(CH_2)_{z6'''}$- (wherein z5" is an integer of 0 to 6, such as an integer of 1 to 6, and z6" is an integer of 0 to 6, such as an integer of 1 to 6), or -$(CH_2)_{z7'''}$-phenylene-$(CH_2)_{z8'''}$- (wherein z7" is an integer of 0 to 6, such as an integer of 1 to 6, and z8" is an integer of 0 to 6, such as an integer of 1 to 6), preferably a $C_{1-6}$ alkylene group, and n2 is 1 to 3, preferably 2 to 3, and still more preferably 3.

In one embodiment, $R^H$ is a group represented by the formula (S4). In a preferred embodiment, $R^{g1}$ and $R^{h1}$ are - $Z^4$-$SiR^{11}{}_{n1}R^{12}{}_{3-n1}$, $Z^4$ is a $C_{1-6}$ alkylene group, - $(CH_2)_{z5'''}$-O-$(CH_2)_{z6'''}$- (wherein z5" is an integer of 0 to 6, such as an integer of 1 to 6, and z6" is an integer of 0 to 6, such as an integer of 1 to 6), or -$(CH_2)_{z7'''}$-phenylene-$(CH_2)_{z8'''}$-(wherein z7" is an integer of 0 to 6, such as an integer of 1 to 6, and z8" is an integer of 0 to 6, such as an integer of 1 to 6), preferably a $C_{1-6}$ alkylene group, and n1 is 1 to 3, preferably 2 to 3, and still more preferably 3.

$X^A$ is interpreted as a linker connecting the siloxane moiety ($R^{S1}$ or $R^{S2}$), which mainly provides functions such as fingerprint removability by wiping, to the moiety ($R^H$) providing a binding ability to a substrate. Accordingly, such $X^A$ may be a single bond or any group as long as the compounds represented by the formulae (1) and (2) can stably exist.

In the above formula (1), $\alpha$ is an integer of 1 to 9, and $\beta$ is an integer of 1 to 9. These $\alpha$ and $\beta$ may vary depending on the valence of $X^A$. The sum of $\alpha$ and $\beta$ is the same as the valence of $X^A$. For example, when $X^A$ is a decavalent organic group, the sum of $\alpha$ and $\beta$ is 10; for example, a case where $\alpha$ is 9 and $\beta$ is 1, $\alpha$ is 5 and $\beta$ is 5, or $\alpha$ is 1 and $\beta$ is 9, can be considered. When $X^A$ is a divalent organic group, $\alpha$ and $\beta$ are 1.

In the above formula (2), $\gamma$ is an integer of 1 to 9. $\gamma$ may vary depending on the valence of $X^A$. That is, $\gamma$ is a

value obtained by subtracting 1 from the valence of $X^A$.

$X^A$ is each independently a single bond or a di- to decavalent organic group.

The di- to decavalent organic group in $X^A$ is preferably a di- to octavalent organic group. In one embodiment, such a di- to decavalent organic group is preferably a di- to tetravalent organic group, and more preferably a divalent organic group. In another embodiment, such a di- to decavalent organic group is preferably a tri- to octavalent organic group, and more preferably a tri- to hexavalent organic group.

In one embodiment, $X^A$ is a single bond or a divalent organic group, and $\alpha$, $\beta$, and $\gamma$ are 1.

In one embodiment, $X^A$ is a tri- to hexavalent organic group, $\alpha$ is 1, $\beta$ is 2 to 5, and $\gamma$ is 2 to 5.

In one embodiment, $X^A$ is a trivalent organic group, $\alpha$ is 1, and $\beta$ is 2.

When $X^A$ is a single bond or a divalent organic group, the formulae (1) and (2) are represented by the following formulae (1') and (2').

$R^{S1}\text{-}X^A\text{-}R^H$ (1')

$R^H\text{-}X^A\text{-}R^{S2}\text{-}X^A\text{-}R^H$ (2')

In one embodiment, $X^A$ is a single bond.

In another embodiment, $X^A$ is a divalent organic group.

In one embodiment, examples of $X^A$ include a single bond or a divalent organic group represented by the following formula:

$-(R^{51})_{p5}\text{-}(X^{51})_{q5}\text{-}$

wherein

$R^{51}$ is a single bond, $-(CH_2)_{s5}-$, or an o-, m-, or p-phenylene group, and is preferably $-(CH_2)_{s5}-$;
s5 is an integer of 1 to 20, preferably an integer of 1 to 15, more preferably an integer of 1 to 10, and even more preferably an integer of 1 to 6, such as an integer of 1 to 3, or is an integer of 1 to 20, preferably an integer of 4 to 15, and more preferably an integer of 7 to 13;
$X^{51}$ is $-(X^{52})_{l5}-$;
$X^{52}$ is each independently at each occurrence a group selected from the group consisting of -O-, -S-, an o-, m-, or p-phenylene group, -CO-, -C(O)O-, $-CONR^{54}-$, $-O\text{-}CONR^{54}-$, $-NR^{54}-$, and $-(CH_2)_{n5}-$;
$R^{54}$ is each independently at each occurrence a hydrogen atom or a monovalent organic group, and is preferably a hydrogen atom, a phenyl group, a $C_{1-6}$ alkyl group (preferably a methyl group), or an oxyalkylene-containing group having 1 to 10 carbon atoms;
n5 is, each independently at each occurrence, an integer of 1 to 20, preferably an integer of 1 to 15, more preferably an integer of 1 to 10, and even more preferably an integer of 1 to 6, such as an integer of 1 to 3;
l5 is an integer of 1 to 10, preferably an integer of 1 to 5, and more preferably an integer of 1 to 3;
p5 is 0 or 1; and
q5 is 0 or 1,
where at least one of p5 and q5 is 1, and the occurrence order of the respective repeating units enclosed in parentheses provided with p5 or q5 is not limited.

Here, $X^A$ (typically a hydrogen atom of $X^A$) is optionally substituted with one or more substituents selected from a fluorine atom, a $C_{1-3}$ alkyl group, and a $C_{1-3}$ fluoroalkyl group. In a preferred embodiment, $X^A$ is not substituted with any of these groups. $X^A$ is bonded to $R^{S1}$ or $R^{S2}$ on the left side.

The above oxyalkylene-containing group having 1 to 10 carbon atoms is a group containing $-O\text{-}C_{1-10}$ alkylene-, such as $-R^{55}\text{-}(\text{-}O\text{-}C_{1-10}\text{alkylene})_n\text{-}R^{56}$ (wherein $R^{55}$ is a single bond or a divalent organic group, preferably a $C_{1-6}$ alkylene group, n is an arbitrary integer, preferably an integer of 2 to 10, and $R^{56}$ is a hydrogen atom or a monovalent organic group, preferably a $C_{1-6}$ alkyl group). The above alkylene group may be linear or branched.

In a preferred embodiment, $X^A$ is each independently $-(R^{51})_{p5}\text{-}(X^{51})_{q5}\text{-}R^{52}-$. $R^{52}$ is a single bond, $-(CH_2)_{t5}-$, or an o-, m-, or p-phenylene group, and is preferably $-(CH_2)_{t5}-$. t5 is an integer of 1 to 20, preferably an integer of 2 to 6, and more preferably an integer of 2 to 3. Here, $R^{52}$ (typically a hydrogen atom of $R^{52}$) is optionally substituted with one or more substituents selected from a fluorine atom, a $C_{1-3}$ alkyl group, and a $C_{1-3}$ fluoroalkyl group. In a preferred embodiment, $R^{56}$ is not substituted with any of these groups.

Preferably, $X^A$ may be each independently

a single bond,

a $C_{1-20}$ alkylene group, or
$-R^{51}-X^{53}-R^{52}-$,
wherein $R^{51}$ and $R^{52}$ have the same definition as described above, and
$X^{53}$ is
a single bond,
-O-,
-S-,
-CO-,
-C(O)O-,
$-CONR^{54}-$,
$-O-CONR^{54}-$,
$-O-(CH_2)_{u5}-CONR^{54}-$,
$-O-(CH_2)_{u5}-CO-$, or
$-CONR^{54}-(CH_2)_{n5}-N(R^{54})-$,
wherein $R^{54}$ has the same definition as described above, and
u5 is an integer of 1 to 20, preferably an integer of 2 to 6, and more preferably an integer of 2 to 3.

More preferably, $X^A$ is each independently

a single bond,
a $C_{1-20}$ alkylene group,
$-(CH_2)_{s5}-X^{53}-$,
$-X^{53}-(CH_2)_{t5}-$, or
$-(CH_2)_{s5}-X^{53}-(CH_2)_{t5}-$,
wherein $X^{53}$, s5, and t5 have the same definition as described above.

In a preferred embodiment, $X^A$ may be each independently

a single bond,
a $C_{1-20}$ alkylene group,
$-(CH_2)_{s5}-X^{53}-$,
$-X^{53}-(CH_2)t_5-$, or
$-(CH_2)_{s5}-X^{53}-(CH_2)_{t5}-$,
wherein

$X^{53}$ is a single bond, -O-, -CO-, $-CONR^{54}-$, $-O-CONR^{54}-$, $-O-(CH_2)_{u5}-CONR^{54}-$, or $-O-(CH_2)_{u5}-CO-$,
$R^{54}$ is each independently at each occurrence a hydrogen atom, a phenyl group, a $C_{1-6}$ alkyl group (preferably a methyl group), or an oxyalkylene-containing group having 1 to 10 carbon atoms, and
s5, t5, and u5 have the same definition as described above.

In a preferred embodiment, $X^A$ may be each independently

- $(CH_2)_{s5}-O-(CH_2)_{t5}-$,
- $(CH_2)_{s5}-CONR^{54}-(CH_2)_{t5}-$,
- $(CH_2)_{s5}-O-(CH_2)_{u5}-CO-$, or
- $(CH_2)_{s5}-O-(CH_2)_{u5}-CONR^{54}-(CH_2)_{t5}-$,

wherein

$R^{54}$ is each independently at each occurrence a hydrogen atom, a phenyl group, a $C_{1-6}$ alkyl group (preferably a methyl group), or an oxyalkylene-containing group having 1 to 10 carbon atoms, and
s5, t5, and u5 have the same definition as described above.

$X^A$ is, each independently optionally substituted with one or more substituents selected from a fluorine atom, a $C_{1-3}$ alkyl group, and a $C_{1-3}$ fluoroalkyl group (preferably a $C_{1-3}$ perfluoroalkyl group). In one embodiment, $X^A$ is unsubstituted.
$X^A$ is bonded to $R^{S1}$ or $R^{S2}$ on the left side, and bonded to $R^H$ on the right side.
In another embodiment, $X^A$ may be each independently a tri- to decavalent organic group.

In still another embodiment, examples of $X^A$ include a group represented by the following:

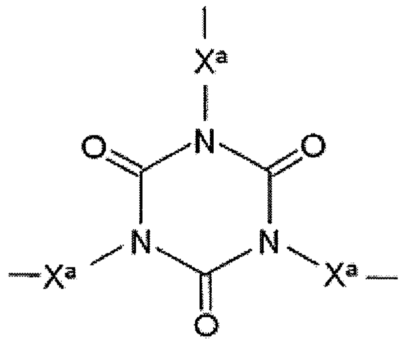

wherein $X^a$ is a single bond or a divalent organic group.

$X^a$ is a single bond or divalent linking group directly bonded to the isocyanuric ring. $X^a$ is preferably a single bond, an alkylene group, or a divalent group containing at least one bond selected from the group consisting of an ether bond, an ester bond, an amide bond, and a sulfide bond, and more preferably a single bond, an alkylene group having 1 to 10 carbon atoms, or a divalent hydrocarbon group having 1 to 10 carbon atoms and containing at least one bond selected from the group consisting of an ether bond, an ester bond, an amide bond, and a sulfide bond.

$X^a$ is still more preferably a group represented by the following formula:

$$-(CX^{121}X^{122})_{x1}-(X^{a1})_{y1}-(CX^{123}X^{124})_{z1}-$$

wherein $X^{121}$ to $X^{124}$ are each independently H, OH, or - $OSi(OR^{121})_3$, where three $R^{121}$ are each independently an alkyl group having 1 to 4 carbon atoms;

$X^{a1}$ is -C(=O)NH-, -NHC(=O)-, -O-, -C(=O)O-, -OC(=O)-, - OC(=O)O-, -NHC(=O)NH-, $-NR^{122}-$, $-C(=O)-NR^{122}-$, $-NR^{122}-C(=O)-$, or S (each bond is bonded to $CX^{121}X^{122}$ on the left side);
$R^{122}$ is a $C_{1-6}$ hydrocarbon chain, and preferably a $C_{1-6}$ alkyl group; and
x1 is an integer of 0 to 10, y1 is 0 or 1, and z1 is an integer of 1 to 10.

$X^{a1}$ is preferably -O- or -C(=O)O-.

$X^a$ is particularly preferably

a group represented by the following formula:

$$-(CH_2)_{m12}-O-(CH_2)_{m13}-$$

wherein m12 is an integer of 1 to 10, and m13 is an integer of 1 to 10;
a group represented by

$$-(CH_2)_{m15}-O-CH_2CH(OH)-(CH_2)_{m16}-$$

wherein m15 is an integer of 1 to 10, and m16 is an integer of 1 to 10;
a group represented by

$$-(CH_2)_{m18}-$$

wherein m18 is an integer of 1 to 10; or
a group represented by

$$-(CH_2)_{m20}-O-CH_2CH(OSi(OCH_3)_3)-(CH_2)_{m21}-$$

wherein m20 is an integer of 1 to 10, and m21 is an integer of 1 to 10.

$X^a$ is not limited, and examples thereof include $-CH_2-$, $-C_2H_4-$, $-C_3H_6-$, $-C_4H_8-$, $-C_4H_8-O-CH_2-$, $-CO-O-CH_2-CH(OH)-CH_2-$, - S-, $-NR^{121}-$, - $(CH_2)_{m22}-C(=O)-O-(CH_2)_{m23}-$, $-(CH_2)_{m22}-O-C(=O)-(CH_2)_{m23}-$,

$-(CH_2)_{m22}-C(=O)-NR^{121}-(CH_2)_{m23}-$, and $-(CH_2)_{m22}-NR^{121}-C(=O)-(CH_2)_{m23}-CH_2OCH_2CH(OSi(OCH_3)_3)CH_2-$, wherein $R^{121}$ is a $C_{1-6}$ hydrocarbon chain, m22 is an integer of 1 to 10, and m23 is an integer of 1 to 10.

$X^a$ is bonded to the isocyanuric ring on the left side.

In one embodiment, the siloxane group-containing silane compound of the present disclosure is a siloxane group-containing silane compound represented by the formula (1).

In one embodiment, the siloxane group-containing silane compound of the present disclosure is a siloxane group-containing silane compound represented by the formula (2).

The siloxane group-containing silane compound represented by the above formula (1) or (2) is not limited, and it may have a number average molecular weight of $5 \times 10^2$ to $1 \times 10^5$. It is preferable that the siloxane group-containing silane compound represented by the above formula (1) or (2) has a number average molecular weight of preferably 1,000 to 30,000, and more preferably 1,500 to 10,000, from the viewpoint of abrasion durability. The "number average molecular weight" is defined as a value obtained by $^1$H-NMR measurement.

The above siloxane group-containing silane compound can be obtained by, for example, reacting a compound having an organosiloxane group with a compound having a hydrolyzable silane group.

For example, a compound represented by the following formula:

$$R^{61}\text{-COOH},$$

wherein $R^{61}$ is an organosiloxane group-containing group,
is reacted with a compound represented by the following formula:

$$NH_2\text{-}R^{62},$$

wherein $R^{62}$ is an allyl group-containing group,
to obtain the following formula:

$$R^{61}\text{-CONH-}R^{63}\text{-}R^{64}_n,$$

wherein

$R^{61}$ is an organosiloxane group-containing group,
$R^{63}$ is an (n + 1)-valent linker group, and
$R^{64}$ is an allyl group.

Then, the obtained allyl compound is reacted with a compound represented by:

$$HSiR^{65}_mR^{66}_{3-m},$$

wherein

$R^{65}$ is each independently at each occurrence a hydroxyl group or a hydrolyzable group,
$R^{66}$ is each independently at each occurrence a monovalent organic group, and
m is 1 to 3,

and thereby a compound represented by the formula (1) can be obtained.

As an alternative method, according to the scheme below, an oxadiazole compound is obtained from $R^{61}$-COOH and used as a raw material, and thereby a compound represented by the formula (1) can be obtained. For example, when R has an allyl group at the end, by reacting with $HSiR^{65}_mR^{66}_{3-m}$ as described above, a compound represented by the formula (1) can be obtained.

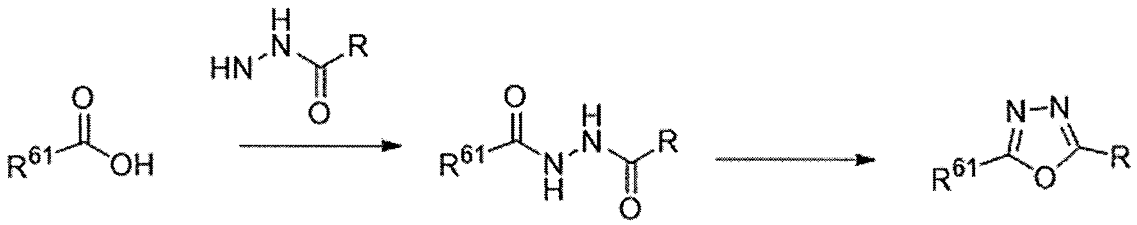

wherein

$R^{61}$ is an organosiloxane group-containing group,
R is an alkyl or aryl optionally containing a functional group at the end, and
the above functional group is a carboxylic acid derivative such as an ester (for example, allyl, ester, amide, carboxylic acid, acid anhydride, acid chloride, or nitrile), amine, epoxide, benzene ring, alcohol, or unsaturated bond.

As an alternative method, a compound represented by the following formula:

$$R^{61}\text{-}CW_mX_{3-m},$$

wherein

$R^{61}$ is an organosiloxane group-containing group,
X is a hydrolyzable group,
W is each independently at each occurrence a monovalent organic group, and
m is 1 to 3,

is reacted with a compound represented by the following formula:

$$M\text{-}R^{62},$$

wherein

M is a metal-containing group, such as Li, halogen-Mg, and Zn, and
$R^{62}$ is an allyl group-containing group,

to obtain the following formula:

$$R^{61}\text{-}CW_m(\text{-}R^{63}\text{-}R^{64})_{3-m},$$

wherein

$R^{61}$ is an organosiloxane group-containing group,
$R^{63}$ is a divalent group,
$R^{64}$ is an allyl group,
W is each independently at each occurrence a monovalent organic group, and
m is 1 to 3.

Then, the obtained allyl compound is reacted with a compound represented by:

$$HSiR^{65}_mR^{66}_{3-m},$$

wherein

$R^{65}$ is each independently at each occurrence a hydroxyl group or a hydrolyzable group,
$R^{66}$ is each independently at each occurrence a monovalent organic group, and
m is 1 to 3,

and thereby a compound represented by the formula (1) can be obtained.

As an alternative method, a compound represented by the following formula:

$R^{61}$-$COR^{67}$,

wherein

$R^{61}$ is an organosiloxane group-containing group,
$R^{67}$ is OH, or a hydrolyzable group such as a halogen element, $NR_2$, -OCOR', or an alkoxy group,
R is each independently a hydrogen atom or an alkyl group, and
R' is a hydrogen atom or an alkyl group,

is reacted with a compound represented by:

M-$R^{62}$,

wherein

M is a metal-containing group, such as Li, halogen-Mg, or Zn, and
$R^{62}$ is an allyl group-containing group,

to obtain a compound represented by the following formula:

$R^{61}$-C(OH)(-$R^{63}$-$R^{64}$)$_2$,

wherein

$R^{61}$ is an organosiloxane group-containing group,
$R^{63}$ is a divalent group, and
$R^{64}$ is an allyl group.

The obtained compound is reacted with a compound of the following formula:

L-$R^{62}$,

wherein

L is a leaving group, and
$R^{62}$ is an allyl group-containing group,

to obtain a compound represented by:

$R^{61}$-C(-O-$R^{63}$-$R^{64}$)(-$R^{63}$-$R^{64}$)$_2$,

wherein

$R^{61}$ is an organosiloxane group-containing group,
$R^{63}$ is a divalent group, and
$R^{64}$ is an allyl group.

Then, the obtained allyl compound is reacted with a compound represented by:

$HSiR^{65}_mR^{66}_{3-m}$,

wherein

$R^{65}$ is each independently at each occurrence a hydroxyl group or a hydrolyzable group,

$R^{66}$ is each independently at each occurrence a monovalent organic group, and
m is 1 to 3,

and thereby a compound represented by the formula (1) can be obtained.

As an alternative method, a compound represented by the following formula:

$R^{61}$-CH=$CH_2$,

wherein $R^{61}$ is an organosiloxane group-containing group,
is reacted with the following formula:

H-$SiX_3$,

wherein X is a hydrolyzable group,
to obtain a compound represented by the following formula:

$R^{61}$-$CH_2CH_2SiX_3$.

Then, the obtained compound is reacted with a compound represented by:

M-$R^{62}$,

wherein

M is a metal-containing group, such as Li, halogen-Mg, or Zn, and
$R^{62}$ is an allyl group-containing group,

to obtain the following formula:

$R^{61}$-$CH_2CH_2Si(-R^{63}-R^{64})_3$,

wherein

$R^{61}$ is an organosiloxane group-containing group,
$R^{63}$ is a divalent group, and
$R^{64}$ is an allyl group.

Subsequently, an allyl compound is obtained. Then, the obtained allyl compound is reacted with a compound represented by:

$HSiR^{65}_mR^{66}_{3-m}$,

wherein

$R^{65}$ is each independently at each occurrence a hydroxyl group or a hydrolyzable group,
$R^{66}$ is each independently at each occurrence a monovalent organic group, and
m is 1 to 3,

and thereby a compound represented by the formula (1) can be obtained.

In the above reaction, $R^{61}$-CH=$CH_2$ is reacted with an oxidizing agent to thereby form an epoxy compound, and using such an epoxy compound, a compound represented by the formula (1) of the present disclosure can be obtained.

Furthermore, $R^{61}$-CH=$CH_2$ is reacted with a thiol compound represented by HSR to form a thio compound represented by $R^{61}$-$CH_2$-$CH_2$-SR or $R^{61}$-CH(SR)-$CH_3$, and using such a thio compound, a compound represented by the formula (1) of the present disclosure can be obtained. Here, R is an arbitrary group.

Furthermore, as shown in the scheme below, $R^{61}$-CH=$CH_2$ is reacted with a diene to form a cyclic compound, and using such a cyclic compound, a compound represented by the formula (1) of the present disclosure can be obtained.

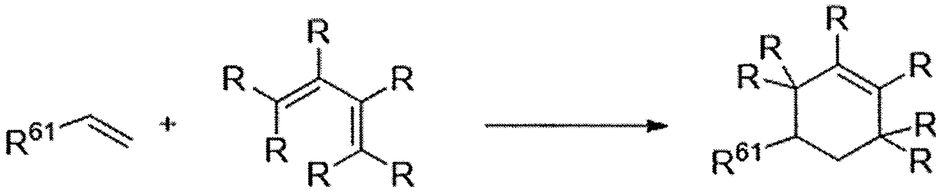

wherein R is each independently a hydrocarbon, a hydrogen atom, or an oxygen atom, a nitrogen atom, or -COR', and R' is an arbitrary group.

Furthermore, as shown in the scheme below, $R^{61}$-CH=$CH_2$ is reacted with a boron reagent such as diborane, borane dimethyl sulfide complex, and 9-borabicyclo[3,3,1]-nonane, then the obtained borane derivative is converted to an alcohol compound, and using such an alcohol compound, a compound represented by the formula (1) of the present disclosure can be obtained.

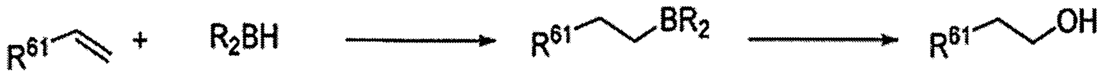

wherein R is each independently a hydrogen atom or a hydrocarbon group.

As an alternative method, a compound represented by the following formula:

$R^{61}$-Si$W^2$-H,

wherein

$R^{61}$ is an organosiloxane group-containing group, and
W is each independently at each occurrence a monovalent organic group,

is reacted with the following formula:

$H_2C$=CH-$R^{67}$,

wherein $R^{67}$ is a group containing a functional group such as amide, carboxylic acid, acid anhydride, acid chloride, nitrile, amine, epoxide, benzene ring, and alcohol,
to obtain a compound represented by the following formula:

$R^{61}$-Si$X_2$-$CH_2CH_2$-$R^{67}$.

Using such a compound as a raw material and utilizing the above reactions as appropriate, a compound represented by the formula (1) can be obtained.

As an alternative method, a compound represented by the following formula:

$R^{61}$-$CH_2NR^{68}$H,

wherein $R^{61}$ is an organosiloxane group-containing group, and
$R^{68}$ is an arbitrary group,
is reacted with a compound represented by the following formula:

HOCO-$R^{69}$,

wherein $R^{69}$ is a double bond group-containing group,

to obtain the following formula:

$$R^{61}\text{-}CH_2NR^{68}CO\text{-}R^{69}.$$

Using such a compound as a raw material and performing the above hydrosilylation reaction on the double bond contained in $R^{69}$, and thereby a compound represented by the formula (1) can be obtained.

As an alternative method, a compound represented by the following formula:

$$R^{61}\text{-}CH_2NH_2,$$

wherein $R^{61}$ is an organosiloxane group-containing group,
is reacted with a compound represented by:

$$R^{70}\text{-}COOH,$$

wherein $R^{70}$ is a group containing a functional group such as double bond, amide, carboxylic acid, acid anhydride, acid chloride, nitrile, amine, epoxide, benzene ring, and alcohol, to obtain

$$R^{61}\text{-}CH_2NHCO\text{-}R^{70},$$

and using such a compound as a raw material, a compound represented by the formula (1) can be obtained.

As an alternative method, as shown in the scheme below, an epoxy compound is reacted with a compound as shown below to obtain a compound, and using such a compound as a raw material, a compound represented by the formula (1) can be obtained.

[Formula 17]

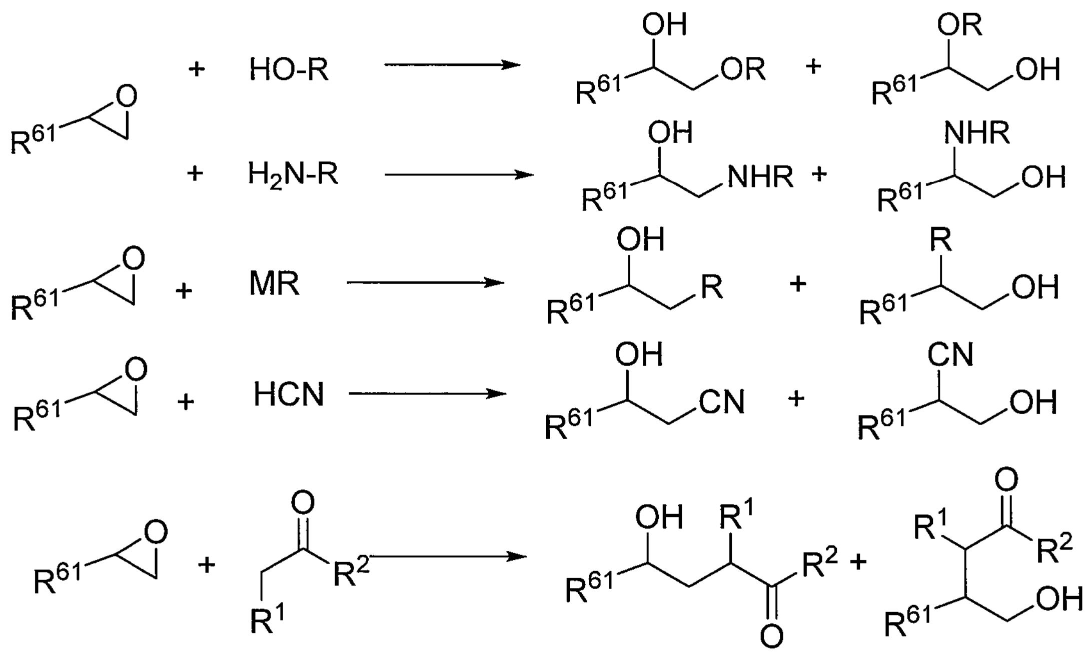

wherein

$R^{61}$ is an organosiloxane group-containing group,
$R^1$ is a hydrogen atom or an alkyl group,
$R^2$ is a hydrogen atom or an alkyl group,
R is a hydrocarbon group optionally containing a functional group at the end, and

the above functional group is a carboxylic acid derivative such as an ester (for example, ester, amide, carboxylic acid, acid anhydride, acid chloride, or nitrile), amine, epoxide, benzene ring, alcohol, or unsaturated bond.

As an alternative method, according to the scheme below, $R^{61}$-$CH_2X$ is reacted with isocyanuric acid in the presence of an appropriate base (sodium hydride, sodium carbonate, potassium t-butoxide, metal hexamethyldisilazide, or the like), and a substituted isocyanurate compound can be obtained. Here, X is a leaving functional group, and examples thereof include chloride, bromide, iodide, paratoluenesulfonate, trifluoromethanesulfonate, and carboxylate.

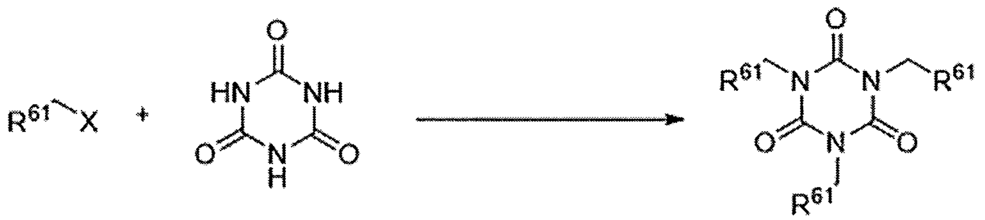

The above hydrosilylation is suitably carried out using a transition metal catalyst. As such a transition metal catalyst, Group 8 to 10 transition metal catalysts are preferred, and in particular, examples thereof include a platinum catalyst, a ruthenium catalyst, and a rhodium catalyst. Among them, a platinum catalyst is preferred. Examples of the platinum catalyst include Pt/divinyltetramethyldisiloxane complex, Pt/tetramethyltetravinylcyclotetrasiloxane complex, chloroplatinic acid, and platinum oxide. Among them, either Pt/divinyltetramethyldisiloxane complex or Pt/tetramethyltetravinylcyclotetrasiloxane complex is preferred.

The amount of the above transition metal catalyst used is preferably 0.1 to 1,000 ppm, and particularly preferably 1 to 100 ppm, in mass ratio relative to the compound having a double bond, which is the reaction target. By setting the amount used as described above, the reaction proceeds appropriately and coloring caused by the catalyst can be suppressed.

In a preferred embodiment, the above catalyst, in particular platinum catalyst, is used in combination with a nitrogen-containing compound or a sulfur-containing compound. One of these compounds may be used, or two or more may be used.

Examples of the above nitrogen-containing compound include aliphatic amine compounds, triethylamine, aromatic amine compounds (such as aniline and pyridine), phosphoric acid amides (such as hexamethylphosphoramide), amide compounds (such as N,N-diethylacetamide, N,N-diethylformamide, N,N-dimethylacetamide, N-methylformamide, and N,N-dimethylformamide), urea compounds (such as tetramethylurea), and cyclic amide compounds (such as N-methylpyrrolidone). Among nitrogen-containing compounds, compounds with a high donor number, as described below, are preferred, and aliphatic amine compounds, aromatic amine compounds, phosphoric acid amides, and urea compounds are preferred. Also, when the basicity of the nitrogen-containing compound is high, side reactions such as hydrolysis of a hydrolyzable group or condensation reaction are more likely to proceed, and therefore, compounds with low basicity or neutrality are favorable. From such a viewpoint, aromatic amine compounds, phosphoric acid amides, and urea compounds are preferred.

Examples of the above sulfur-containing compound include sulfoxide compounds (such as tetramethylene sulfoxide and dimethyl sulfoxide).

As the above compounds, one or more of aromatic amine compounds and sulfoxide compounds are preferred, and one or more of tetramethylene sulfoxide or dimethyl sulfoxide are particularly preferred.

The above nitrogen-containing compound and sulfur-containing compound both have a large donor number. Donor number is one of the solvent parameters and is a measure of electron (pair) donation. When a compound with a large donor number is used in combination with the above transition metal catalyst, it is considered that such a compound coordinates to the transition metal in the transition metal catalyst, thus controlling the coordination of the compound having a double bond to the transition metal. As a result, a composition having specific compositional features can be obtained.

Here, the donor number is the calorific value when a nitrogen-containing compound or sulfur-containing compound and $SbCl_5$ form a 1:1 adduct. The donor numbers of various compounds and the methods for calculating the donor number are disclosed in, for example, References (1) and (2) below. (1) Pure & Appl. Chem., Vol. 41, No. 3, pp. 291-326, 1975. (2) Pure & Appl. Chem., Vol. 58, No. 8, pp. 1153-1161, 1986.

The amount of the above nitrogen-containing compound or sulfur-containing compound used is preferably 0.001 to 1,000 parts by mass, and particularly preferably 0.01 to 10 parts by mass, based on 100 parts by mass of the compound having a double bond. Also, the mass ratio of amounts of the transition metal catalyst and the nitrogen-containing compound or sulfur-containing compound used (nitrogen-containing compound or sulfur-containing compound:transition metal catalyst) is preferably 10:1 to 10,000:1, and particularly preferably 20:1 to 1,000:1.

The present disclosure provides an intermediate of a compound represented by the above formula (1) or (2).

The present disclosure provides a compound represented by the following formula (1-a) or (2-a):

$R^{S1}$-$X^B$ (1-a)

$X^B$-$R^{S2}$-$X^B$ (2-a)

wherein

$R^{S1}$ is each independently at each occurrence $R^1$-$R^s$-$R^2_q$-;
$R^{S2}$ is -$O_p$-$R^s$-$R^2_q$-;
$R^S$ is each independently at each occurrence a divalent linear organosiloxane group;
$R^1$ is a hydrocarbon group;
$R^2$ is -$SiR^3_2$-;
$R^3$ is each independently at each occurrence a hydrocarbon group;
p is 0 or 1;
q is each independently 0 or 1;
$X^B$ is each independently

$-(CH_2)_{s6}-X^{53}-X^{54}$,

$-X^{53}-(CH_2)_{t6}-X^{54}$,

or

$-(CH_2)_{s6}-X^{53}-(CH_2)_{t6}-X^{54}$,

wherein

$X^{53}$ is -O-, -CO-, -$CONR^{74}$-, -O-$CONR^{74}$-, -O-$(CH_2)_{u6}$-$CONR^{74}$-, -O-$(CH_2)_{u6}$-CO-, or a single bond,
$X^{54}$ is $R^{75}$, -$NR^{75}_2$, -$SiR^{75}_2R^{76}$, -$SiR^{75}_3$, -$CR^{75}_2R^{75}$, -$CR^{75}_3$, - $SiCl_2R^{76}$, -$SiCl_3$, or

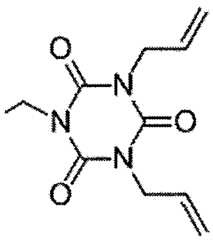

,

$R^{75}$ is $-CH=CH_2$ or $-CH_2-CH=CH_2$,
$R^{76}$ is a monovalent organic group,
$R^{74}$ is each independently at each occurrence a hydrogen atom, a phenyl group, a $C_{1-6}$ alkyl group, or an oxyalkylene-containing group having 1 to 10 carbon atoms,
s6 is an integer of 1 to 20,
t6 is an integer of 1 to 20, and
u6 is an integer of 1 to 20.

$R^{S1}$ and $R^{S2}$ in the formulae (1-a) and (2-a) have the same definition as for $R^{S1}$ and $R^{S2}$ in the formulae (1) and (2) .

$X^B$ is each independently - $(CH_2)_{s6}$-$X^{53}$-$X^{54}$, -$X^{53}$-$(CH_2)_{t6}$-$X^{54}$, or -$(CH_2)_{s6}$-$X^{53}$-$(CH_2)_{t6}$-$X^{54}$.

$X^{53}$ is a single bond, -O-, -CO-, -$CONR^{74}$-, -O-$CONR^{74}$-, - O-$(CH_2)_{u6}$-$CONR^{74}$-, or -O-$(CH_2)_{u6}$-CO-, preferably -O-, -CO-, - $CONR^{74}$-, -O-$CONR^{74}$-, -O-$(CH_2)_{u6}$-$CONR^{74}$-, or -O-$(CH_2)_{u6}$-CO-, and more preferably $CONR^{74}$-.

$R^{74}$ is each independently at each occurrence a hydrogen atom, a phenyl group, a $C_{1-6}$ alkyl group, or an

oxyalkylene-containing group having 1 to 10 carbon atoms, and is preferably a hydrogen atom, a $C_{1-6}$ alkyl group, or an oxyalkylene-containing group having 1 to 10 carbon atoms.

The above oxyalkylene-containing group having 1 to 10 carbon atoms is a group containing -O-$C_{1-10}$ alkylene-, for example -$R^{55}$-(-O-$C_{1-10}$ alkylene)$_n$-$R^{56}$ (wherein $R^{55}$ is a single bond or a divalent organic group, preferably a $C_{1-6}$ alkylene group, n is an arbitrary integer, preferably an integer of 2 to 10, and $R^{56}$ is a hydrogen atom or a monovalent organic group, preferably a $C_{1-6}$ alkyl group). The above alkylene group may be linear or branched.

In one embodiment, $R^{74}$ is a hydrogen atom.

In another embodiment, $R^{74}$ is an oxyalkylene-containing group having 1 to 10 carbon atoms.

$X^{54}$ is $R^{75}$, -$NR^{75}_2$, -$SiR^{75}_2R^{76}$, -$SiR^{75}_3$, -$CR^{75}_2R^{75}$, -$CR^{75}_3$, - $SiCl_2R^{76}$, -$SiCl_3$, or

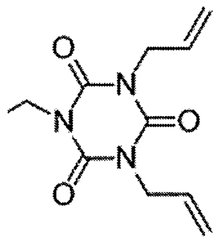

and is preferably -$NR^{75}_2$, -$SiR^{75}_2R^{76}$, -$SiR^{75}_3$, -$CR^{75}_2R^{75}$, -$CR^{75}_3$, or

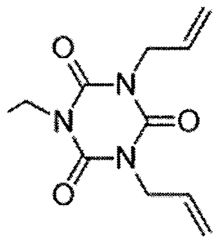

.

In one embodiment, $X^{54}$ is $R^{75}$, -$NR^{75}_2$, -$SiR^{75}_2R^{76}$, -$SiR^{75}_3$, -$CR^{75}_2R^{75}$, or -$CR^{75}_3$, preferably -$SiR^{75}_3$ or -$CR^{75}_3$, and more preferably -$SiR^{75}_3$.

In another embodiment, $X^{54}$ is

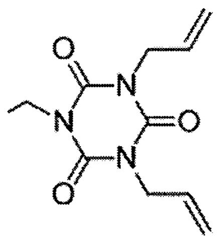

.

$R^{75}$ is -$CH=CH_2$ or -$CH_2$-$CH=CH_2$, preferably -$CH_2$-$CH=CH_2$.

$R^{76}$ is a monovalent organic group, preferably a $C_{1-6}$ alkylene group or an oxyalkylene-containing group having 1 to 10 carbon atoms. The oxyalkylene-containing group having 1 to 10 carbon atoms has the same definition as described above.

In a preferred embodiment, -$X^{53}$-$X^{54}$ is -$CON(CH_2CH=CH_2)_2$ or -$CONHCH_2C(CH_2CH=CH_2)_3$.

When $X^{54}$ is -$SiR^{75}_2R^{76}$ or -$CR^{75}_2R^{75}$, preferably, the divalent linear organosiloxane group is -$(SiR^3_2\text{-}O)_a$-, where a is 2 or more, preferably 3 or more.

Next, the composition of the present invention will now be described.

The composition of the present disclosure contains at least one siloxane group-containing silane compound represented by the formula (1) or (2).

In one embodiment, in the composition of the present disclosure, the siloxane group-containing silane compound

is a compound represented by the formula (1).

In another embodiment, in the composition of the present disclosure, the siloxane group-containing silane compound is a compound represented by the formula (2).

In another embodiment, in the composition of the present disclosure, the siloxane group-containing silane compound is a compound represented by the formula (1) and a compound represented by the formula (2).

In the composition of the present disclosure, the content of the compound represented by the formula (2) is preferably 0.1 mol% or more and 35 mol% or less based on the total of the compound represented by the formula (1) and the compound represented by the formula (2). The lower limit of the content of the compound represented by the formula (2) may be preferably 0.1 mol%, more preferably 0.2 mol%, still more preferably 0.5 mol%, even more preferably 1 mol%, particularly preferably 2 mol%, and especially 5 mol%, based on the total of the compound represented by the formula (1) and the compound represented by the formula (2). The upper limit of the content of the compound represented by the formula (2) may be preferably 35 mol%, more preferably 30 mol%, still more preferably 20 mol%, and even more preferably 15 mol% or 10 mol%, based on the total of the compound represented by the formula (1) and the compound represented by the formula (2). The compound represented by the formula (2) is preferably 0.1 mol% or more and 30 mol% or less, more preferably 0.1 mol% or more and 20 mol% or less, still more preferably 0.2 mol% or more and 10 mol% or less, even more preferably 0.5 mol% or more and 10 mol% or less, and particularly preferably 1 mol% or more and 10 mol% or less, such as 2 mol% or more and 10 mol% or less or 5 mol% or more and 10 mol% or less, based on the total of the compound represented by the formula (1) and the compound represented by the formula (2).

In one embodiment, the content of the compound represented by the above formula (1) or (2) is preferably 0.1 to 50.0% by mass, more preferably 1.0 to 30.0% by mass, still more preferably 5.0 to 25.0% by mass, and particularly preferably 10.0 to 20.0% by mass based on the entirety of the composition.

In another embodiment, the content of the compound represented by the above formula (1) or (2) is preferably 0.001 to 30% by mass, more preferably 0.01 to 10% by mass, still more preferably 0.05 to 5% by mass, and particularly preferably 0.05 to 2% by mass based on the entirety of the composition.

In one embodiment, the composition of the present disclosure contains at least one of the siloxane-containing silane compound and a compound composed of a condensed product in which at least a portion of the siloxane-containing silane compound is condensed.

In one embodiment, the composition of the present disclosure may comprise a solvent selected from compounds represented by $R^{71}OR^{72}$, $R^{73}_{n8}C_6H_{6-n8}$, $R^{74}R^{75}R^{76}Si\text{-}(O\text{-}SiR^{77}R^{78})_{m8}\text{-}R^{79}$, and $(OSiR^{77}R^{78})_{m9}$, wherein

$R^{71}$ to $R^{79}$ are each independently a monovalent organic group having 1 to 10 carbon atoms;
m8 is an integer of 1 to 6;
m9 is an integer of 3 to 8; and
n8 is an integer of 0 to 6.

The above monovalent organic group having 1 to 10 carbon atoms may be linear or branched, and may further contain a cyclic structure.

In one embodiment, the above monovalent organic group having 1 to 10 carbon atoms may contain an oxygen atom, a nitrogen atom, or a halogen atom.

In another embodiment, the above monovalent organic group having 1 to 10 carbon atoms does not contain a halogen atom.

In a preferred embodiment, the above monovalent organic group having 1 to 10 carbon atoms is a hydrocarbon group optionally substituted with a halogen, preferably a hydrocarbon group not substituted with a halogen.

In one embodiment, the above hydrocarbon group is linear.

In another embodiment, the above hydrocarbon group is branched.

In another embodiment, the above hydrocarbon group contains a cyclic structure.

In one embodiment, the above solvent is $R^{71}OR^{72}$.

$R^{71}$ and $R^{72}$ may be each independently preferably a hydrocarbon group having 1 to 8 carbon atoms, and more preferably a $C_{1-6}$ alkyl group or a $C_{5-8}$ cycloalkyl group.

In one embodiment, the above solvent is $R^{73}_{n8}C_6H_{6-n8}$.

$C_6H_{6-n8}$ is an n8-valent benzene ring. That is, $R^{73}_{n8}C_6H_{6-n8}$ is benzene substituted with n8 $R^{73}$.

$R^{73}$ may be each independently a halogen, or a $C_{1-6}$ alkyl group optionally substituted with a halogen.

n8 is preferably an integer of 1 to 3.

In one embodiment, the above solvent is $R^{74}R^{75}R^{76}Si\text{-}(O\text{-}SiR^{77}R^{78})_{m8}\text{-}R^{79}$.

In one embodiment, the above solvent is $(OSiR^{77}R^{78})_{m9}$. $(OSiR^{77}R^{78})_{m9}$ is a cyclic siloxane formed by multiple $OSiR^{77}R^{78}$ units bonded in a cyclic form.

$R^{74}$ to $R^{79}$ are each independently a hydrogen atom or a $C_{1-6}$ alkyl group, preferably a $C_{1-6}$ alkyl group, more preferably a $C_{1-3}$ alkyl group, and still more preferably a methyl group.

m8 is preferably an integer of 1 to 6, more preferably an integer of 1 to 5, and still more preferably 1 to 2.

m9 is preferably an integer of 3 to 6, and more preferably an integer of 3 to 5.

In a preferred embodiment, the above solvent may be hexamethyldisiloxane, hexaethyldisiloxane, octamethyltrisiloxane, octaethyltrisiloxane, hexamethylcyclotrisiloxane, hexaethylcyclotrisiloxane, octamethylcyclotetrasiloxane, octaethylcyclotetrasiloxane, or decamethylcyclopentasiloxane.

The composition of the present disclosure is preferably a surface-treating agent.

The surface-treating agent of the present disclosure may contain a solvent, a (non-reactive) silicone compound that may be understood as a silicone oil (hereinafter, referred to as "silicone oil"), an amine compound, an alcohol, a catalyst, a surfactant, a polymerization inhibitor, a sensitizer, and the like.

Examples of the above solvent include: aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, isopropanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; ethers such as cyclopentyl methyl ether; siloxanes such as hexamethyldisiloxane, hexaethyldisiloxane, octamethyltrisiloxane, octamethylcyclotetrasiloxane, and decamethylcyclopentasiloxane; and fluorine-containing solvents such as 1,1,2-trichloro-1,2,2-trifluoroethane, 1,2-dichloro-1,1,2,2-tetrafluoroethane, dimethyl sulfoxide, 1,1-dichloro-1,2,2,3,3-pentafluoropropane (HCFC 225), ZEORORA H, 1,3-bis(trifluoromethyl)benzene, HFE 7100, HFE 7200, HFE 7300, $CF_3CH_2OH$, $CF_3CF_2CH_2OH$, and $(CF_3)_2CHOH$. Alternatively, the solvent may be a mixed solvent of two or more of such solvents.

The silicone oil is not limited, and examples thereof include a compound represented by the following general formula (3):

$$R^{1a}\text{-}(SiR^{3a}{}_2\text{-}O)_{a1}\text{-}SiR^{3a}{}_2\text{-}R^{1a} \ldots \qquad (3)$$

wherein

$R^{1a}$ is each independently at each occurrence a hydrogen atom or a hydrocarbon group;
$R^{3a}$ is each independently at each occurrence a hydrogen atom or a hydrocarbon group; and
a1 is 2 to 3,000.

$R^{3a}$ is each independently at each occurrence a hydrogen atom or a hydrocarbon group. Such a hydrocarbon group is optionally substituted.

$R^{3a}$ is, each independently at each occurrence, preferably an unsubstituted hydrocarbon group, or a hydrocarbon group substituted with a halogen atom. Such a halogen atom is preferably a fluorine atom.

$R^{3a}$ is, each independently at each occurrence, preferably a $C_{1-6}$ alkyl group or aryl group optionally substituted with a halogen atom, and more preferably a $C_{1-6}$ alkyl group or aryl group.

The above $C_{1-6}$ alkyl group may be linear or branched, and is preferably linear. The $C_{1-6}$ alkyl group is preferably a $C_{1-3}$ alkyl group, and more preferably a methyl group.

The above aryl group is preferably a phenyl group.

In one embodiment, $R^{3a}$ is, each independently at each occurrence, a $C_{1-6}$ alkyl group, preferably a $C_{1-3}$ alkyl group, and more preferably a methyl group.

In another embodiment, $R^{3a}$ is a phenyl group.

In another embodiment, $R^{3a}$ is a methyl group or a phenyl group, and preferably a methyl group.

$R^{1a}$ is each independently at each occurrence a hydrogen atom or a hydrocarbon group, and has the same definition as for $R^{3a}$.

$R^{1a}$ is, each independently at each occurrence, preferably a $C_{1-6}$ alkyl group or aryl group optionally substituted with a halogen atom, and more preferably a $C_{1-6}$ alkyl group or aryl group.

In one embodiment, $R^{1a}$ is, each independently at each occurrence, a $C_{1-6}$ alkyl group, preferably a $C_{1-3}$ alkyl group, and more preferably a methyl group.

In another embodiment, $R^{1a}$ is a phenyl group.

In another embodiment, $R^{1a}$ is a methyl group or a phenyl group, and preferably a methyl group.

a1 is 2 to 1,500. a1 may be preferably 5 or more, more preferably 10 or more, and still more preferably 15 or more, such as 30 or more or 50 or more. a1 may be preferably 1,000 or less, more preferably 500 or less, still more preferably 200 or less, and even more preferably 150 or less, such as 100 or less or 80 or less.

a1 may be preferably 5 to 1,000, more preferably 10 to 500, still more preferably 15 to 200, and even more preferably 15 to 150.

The above silicone oil may have an average molecular weight of 500 to 100,000, preferably 1,000 to 10,000. The molecular weight of the silicone oil may be measured using GPC.

For example, a linear or cyclic silicone oil in which a1 in $-(SiR^{3a}{}_2-O)_{a1}-$ is 30 or less can be used as the above silicone oil. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, or the like. Examples of the cyclic silicone oil include cyclic dimethylsiloxane oil.

The above silicone oil may be contained in an amount of, for example, 0 to 50% by mass, preferably 0.001 to 30% by mass, and more preferably 0.1 to 5% by mass based on the surface-treating agent of the present disclosure.

In the surface-treating agent of the present disclosure, such a silicone oil may be contained in an amount of, for example, 0 to 300 parts by mass, and preferably 50 to 200 parts by mass, based on 100 parts by mass of the total of the above siloxane group-containing silane compound of the present disclosure (in the case of two or more kinds, the total thereof, and the same applies below).

The silicone oil contributes to improving the surface lubricity of the surface-treating layer.

Examples of the alcohol include alcohols having 1 to 6 carbon atoms and optionally substituted with one or more fluorine atoms, such as methanol, ethanol, iso-propanol, tert-butanol, $CF_3CH_2OH$, $CF_3CF_2CH_2OH$, and $(CF_3)_2CHOH$. Such an alcohol added to the surface-treating agent increases the stability of the surface-treating agent and improves the miscibility between the persiloxane group-containing silane compound and the solvent.

Examples of the above catalyst include acids (for example, acetic acid, hydrochloric acid, nitric acid, sulfuric acid, phosphoric acid, sulfonic acid, p-toluenesulfonic acid, trifluoroacetic acid, and the like), bases (for example, sodium hydroxide, potassium hydroxide, ammonia, triethylamine, diethylamine, and the like), transition metals (for example, Ti, Ni, Sn, Zr, Al, B, Si, Ta, Nb, Mo, W, Cr, Hf, V, and the like), and sulfur-containing compounds or nitrogen-containing compounds having an unshared electron pair in the molecular structure (for example, sulfoxide compounds, aliphatic amine compounds, aromatic amine compounds, phosphoric acid amide compounds, amide compounds, and urea compounds).

Examples of the above aliphatic amine compounds may include diethylamine and triethylamine. Examples of the above aromatic amine compounds may include aniline and pyridine.

In a preferred embodiment, the above transition metal is contained as a transition metal compound represented by M-R, wherein M is a transition metal atom and R is a hydrolyzable group. By making the transition metal compound a compound in which a transition metal and a hydrolyzable group are bonded, the transition metal atom can be contained in the surface-treating layer more efficiently, and the friction durability and chemical resistance of the surface-treating layer can be further improved.

The above hydrolyzable group means a group that can undergo a hydrolysis reaction in the same manner as the hydrolyzable group with respect to the above siloxane group-containing silane compound, that is, means a group that can be removed from the transition metal atom by a hydrolysis reaction. Examples of the hydrolyzable group include $-OR^m$, $-OCOR^m$, $-O-N=CR^m{}_2$, $-NR^m{}_2$, $-NHR^m$, -NCO, and a halogen (in these formulae, $R^m$ represents a substituted or unsubstituted $C_{1-4}$ alkyl group).

In a preferred embodiment, the above hydrolyzable group is $-OR^m$, and preferably methoxy or ethoxy. By using an alkoxy group as the hydrolyzable group, the transition metal atom can be contained in the surface-treating layer more efficiently, and the friction durability and chemical resistance of the surface-treating layer can be further improved.

In one embodiment, the above hydrolyzable group may be the same as the hydrolyzable group contained in the siloxane group-containing silane compound described above. By making the hydrolyzable groups in the siloxane group-containing silane compound and the transition metal compound the same group, even when such hydrolyzable groups are mutually exchanged, its effect can be minimized.

In another embodiment, the above hydrolyzable group may be different from the hydrolyzable group contained in the siloxane group-containing silane compound described above. By making the hydrolyzable groups in the siloxane group-containing silane compound and the transition metal compound different, the reactivity of hydrolysis can be controlled.

In one embodiment, the above hydrolyzable group and the hydrolyzable group contained in the above siloxane group-containing silane compound may be mutually interchanged in the surface-treating agent.

In a preferred embodiment, the above transition metal compound is $Ta(OR^m)_5$, and may be preferably $Ta(OCH_2CH_3)_5$.

The above catalyst may be contained in an amount of, for example, 0.0002% by mass or more based on the entirety of the surface-treating agent. The above catalyst may be contained in an amount of preferably 0.02% by mass or more, and more preferably 0.04% by mass or more based on the entirety of the surface-treating agent. The above catalyst may be contained in an amount of, for example, 10% by mass or less based on the entirety of the surface-treating agent, and in particular, it is contained in an amount of 1% by mass or less. The surface-treating agent of the present disclosure can contribute to the formation of a surface-treating layer with better durability when the above catalyst is contained in the concentration as described above.

The content of the above catalyst is preferably 0 to 10% by mass, more preferably 0 to 5% by mass, and particularly preferably 0 to 1% by mass, based on the siloxane group-containing silane compound of the present disclosure.

The catalyst promotes hydrolysis and dehydrative condensation of the siloxane group-containing silane compound of the present disclosure, and promotes formation of a layer formed of the surface-treating agent of the present disclosure.

Examples of the other components include, in addition to those described above, tetraethoxysilane, methyltrimethoxysilane, 3-aminopropyltrimethoxysilane, 3-glycidoxypropyltrimethoxysilane, and methyltriacetoxysilane.

The surface-treating agent of the present disclosure may contain, in addition to the components described above, trace amounts of Pt, Rh, Ru, 1,3-divinyltetramethyldisiloxane, triphenylphosphine, NaCl, KCl, silane condensation product, and the like as impurities.

When treating a substrate, the surface-treating agent of the present disclosure gives a surface with a surface free energy of 18 to 35 mN/m, as calculated from the contact angle of water and n-hexadecane.

The above surface free energy is preferably 20 mN/m or more, more preferably 22 mN/m or more, and still more preferably 24 mN/m or more, and is preferably 33 mN/m or less, more preferably 30 mN/m or less, still more preferably 28 mN/m or less, and even more preferably 26 mN/m or less.

The above surface free energy is determined as follows: the respective contact angles (θ1 and θ2) of water and n-hexadecane are measured on the substrate surface by a contact angle meter, and then the values of the contact angle and the values of the surface free energy of water and n-hexadecane are substituted into the expression below, and the resulting simultaneous equations composed of the two expressions are solved to determine γSd and γSp. Then, the sum of γSd and γSp is the surface free energy γS of the substrate surface.

$$\{(1 + \cos\theta) \cdot \gamma L\}/2 = (\gamma Sd \cdot \gamma Ld)^{1/2} + (\gamma Sp \cdot \gamma Lp)^{1/2}$$

wherein

γL is the surface free energy of the liquid, and γLd and γLp are the dispersive term and polar term, respectively, where γL = γLd + γLp.

Surface free energy γL of water = 72.8 mN/m
Surface free energy dispersive term γLd of water = 21.8 mN/m
Surface free energy polar term γLp of water = 51.0 mN/m
Surface free energy γL of n-hexadecane = 27.6 mN/m
Surface free energy dispersive term γLd of n-hexadecane = 27.6 mN/m
Surface free energy polar term γLp of n-hexadecane = 0 mN/m

In one embodiment, the surface-treating agent of the present disclosure is for a dry coating method, preferably for vacuum deposition.

In one embodiment, the surface-treating agent of the present disclosure is for a wet coating method, preferably for dip coating.

The surface-treating agent of the present disclosure can be formed into pellets by impregnating a porous material such as a porous ceramic material or a metal fiber such as a fiber obtained by, for example, solidifying steel wool in a cotton-like form therewith. Such pellets can be used in, for example, vacuum deposition.

Hereinafter, an article of the present disclosure will be described.

The article of the present disclosure comprises a substrate and a layer (surface-treating layer) on the substrate surface, the layer being formed of the surface-treating agent according to the present disclosure.

The substrate usable in the present disclosure may be composed of any suitable material such as glass, resin

(which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film) such as a hard coat layer or an antireflection layer may be formed on the surface (the outermost layer) of the substrate. The antireflection layer may be any of a single-layer antireflection layer and a multi-layer antireflection layer. Examples of inorganic substances usable in the antireflection layer include $SiO_2$, SiO, $ZrO_2$, $TiO_2$, TiO, $Ti_2O_3$, $Ti_2O_5$, $Al_2O_3$, $Ta_2O_5$, TasOs, $Nb_2O_5$, $HfO_2$, $Si_3N_4$, $CeO_2$, MgO, $Y_2O_3$, $SnO_2$, $MgF_2$, and $WO_3$. One of these inorganic substances may be used singly, or two or more kinds thereof may be used in combination (for example, as a mixture). In the case of a multi-layer antireflection layer, it is preferable to use $SiO_2$ and/or SiO for the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The shape of the above substrate is not limited, and may be, for example, in the form of a plate, a film, or the like. The surface region of the substrate on which a surface-treating layer is to be formed may be at least a part of the substrate surface, and may be suitably determined according to the application, specific configuration, and the like of an article to be produced.

In one embodiment, the substrate, or at least the surface portion thereof, may be composed of a material originally having a hydroxyl group. Examples of the material include glass, as well as metal (in particular, base metal) where a natural oxidized film or a thermal oxidized film is formed on the surface, ceramics, and semiconductors. Alternatively, when the substrate has an insufficient amount of hydroxyl groups or when the substrate originally has no hydroxyl group as in resin and the like, a pre-treatment may be performed on the substrate to thereby introduce or increase hydroxyl groups on the surface of the substrate. Examples of such a pre-treatment include a plasma treatment (for example, corona discharge) and ion beam irradiation. The plasma treatment can be suitably utilized to not only introduce or increase hydroxyl groups on the substrate surface, but also clean the substrate surface (remove foreign matter and the like). Another example of such a pre-treatment is a method wherein a monolayer of a surface adsorbent having a carbon-carbon unsaturated bonding group is formed on the surface of the substrate by a LB method (a Langmuir-Blodgett method), a chemical adsorption method, or the like beforehand, and thereafter cleaving the unsaturated bond under an atmosphere containing oxygen, nitrogen, or the like.

In another embodiment, the substrate, or at least the surface portion thereof, may be composed of a material comprising another reactive group such as a silicone compound having one or more Si-H group or alkoxysilane.

In a preferred embodiment, the above substrate is glass. As the glass, sapphire glass, soda-lime glass, alkali aluminosilicate glass, borosilicate glass, alkali-free glass, crystal glass, and quartz glass are preferred, and chemically tempered soda-lime glass, chemically tempered alkali aluminosilicate glass, and chemically bonded borosilicate glass are particularly preferred.

The article of the present disclosure can be produced by forming a layer of the above surface-treating agent of the present disclosure on the surface of the above substrate and post-treating this layer as necessary to thereby form a layer from the surface-treating agent of the present disclosure.

The layer of the surface-treating agent of the present disclosure can be formed by applying the above surface-treating agent on the surface of the substrate such that the surface-treating agent coats the surface. The coating method is not limited. For example, a wet coating method and a dry coating method can be used.

Examples of the wet coating method include dip coating, spin coating, flow coating, spray coating, roll coating, gravure coating, wipe coating, squeegee coat method, die coat, inkjet, cast method, Langmuir-Blodgett method, and similar methods.

Examples of the dry coating method include deposition (usually, vacuum deposition), sputtering, CVD, and similar methods. Specific examples of the deposition method (usually, a vacuum deposition method) include resistive heating, highfrequency heating using electron beam, microwave, or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the substrate surface after being diluted with a solvent. From the viewpoint of the stability of the composition of the present disclosure and the volatility of the solvent, the following solvents are preferably used: aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether

acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, $C_6F_{13}CH_2CH_3$ (for example, ASAHIKLIN(R) AC-6000 manufactured by AGC Inc.), and 1,1,2,2,3,3,4-heptafluorocyclopentane (for example, Zeorolla(R) H manufactured by ZEON Corporation); ether alcohols such as hydrofluoroethers (HFE) (for example, alkyl perfluoroalkyl ethers (the perfluoroalkyl group and the alkyl group may be linear or branched), such as perfluoropropyl methyl ether ($C_3F_7OCH_3$) (for example, Novec(TM) 7000 manufactured by SUMITOMO 3M), perfluorobutyl methyl ether ($C_4F_9OCH_3$) (for example, Novec(TM) 7100 manufactured by SUMITOMO 3M), perfluorobutyl ethyl ether ($C_4F_9OC_2H_5$) (for example, Novec(TM) 7200 manufactured by SUMITOMO 3M), and perfluorohexyl methyl ether ($C_2F_5CF(OCH_3)C_3F_7$) (for example, Novec(TM) 7300 manufactured by SUMITOMO 3M), or $CF_3CH_2OCF_2CHF_2$ (for example, ASAHIKLIN (R) AE-3000 manufactured by AGC Inc.)) and cyclopentyl methyl ether; siloxanes such as hexamethyldisiloxane, hexaethyldisiloxane, octamethyltrisiloxane, octaethyltrisiloxane, hexamethylcyclotrisiloxane, hexaethylcyclotrisiloxane, octamethylcyclotetrasiloxane, octaethylcyclotetrasiloxane, and decamethylcyclopentasiloxane; and the like. One of these solvents may be used singly, or two or more may be used as a mixture. Among them, hydrofluoroethers are preferred, perfluorobutyl methyl ether ($C_4F_9OCH_3$) and/or perfluorobutyl ethyl ether ($C_4F_9OC_2H_5$), and siloxanes are particularly preferred, and furthermore, hexamethyldisiloxane, octamethyltrisiloxane, hexamethylcyclotrisiloxane, octamethylcyclotetrasiloxane, or decamethylcyclopentasiloxane is more preferred.

When using the dry coating method, the surface-treating agent of the present disclosure may be directly subjected to the dry coating method, or may be diluted with the above solvent before being subjected to the dry coating method.

A layer of the surface-treating agent is preferably formed such that the surface-treating agent of the present disclosure coexists in the layer with a catalyst for hydrolysis and dehydration condensation. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure. In the case of a dry coating method, the surface-treating agent of the present disclosure to which a catalyst has been added is directly used to a deposition (usually vacuum deposition) treatment, or a pellet-like material may be used to a deposition (usually vacuum deposition) treatment, wherein the pellets are obtained by impregnating a porous body of metal such as iron or copper with the surface-treating agent of the present disclosure to which the catalyst has been added.

As the catalyst, any appropriate acids or bases, transition metals (such as Ti, Ni, Sn, Zr, Al, and B), sulfur-containing compounds or nitrogen-containing compounds having an unshared electron pair in the molecular structure (such as sulfoxide compounds, aliphatic amine compounds, aromatic amine compounds, phosphoric acid amide compounds, amide compounds, and urea compounds), and the like can be used. As the acid catalyst, for example, acetic acid, formic acid, trifluoroacetic acid, hydrochloric acid, nitric acid, sulfuric acid, phosphoric acid, sulfonic acid, methanesulfonic acid, p-toluenesulfonic acid, and the like can be used. Also, as the base catalyst, for example, ammonia, sodium hydroxide, potassium hydroxide, organic amines such as triethylamine and diethylamine, and the like can be used. Examples of the transition metals, aliphatic amine compounds, and aromatic amine compounds include the same as those described above.

The surface-treating layer contained in the article of the present disclosure has both high abrasion durability. In addition, the above surface-treating layer may have not only high abrasion durability, but also have, depending on the compositional features of the surface-treating agent used, water-repellency, oil-repellency, antifouling property (for example, preventing fouling such as fingerprints from adhering), waterproof property (preventing water from penetrating into electronic components and the like), surface lubricity (or lubricity, such as wiping property for fouling including fingerprints and the like and excellent tactile sensations to the fingers), chemical resistance, and the like, and may be suitably utilized as a functional thin film.

Therefore, the present disclosure further relates to an optical material having the above surface-treating layer in the outermost layer.

The optical material preferably includes a wide variety of optical materials, in addition to optical materials relating to displays and the like as exemplified below: for example, displays such as cathode ray tubes (CRTs; for example, PC

monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article of the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for equipment such as cell phones and portable information terminals; disc surfaces of optical discs such as Blu-ray(R) discs, DVD discs, CD-Rs, and MOs; optical fibers; and display surfaces of watches and clocks.

The article of the present disclosure may be medical equipment or a medical material. The article having a layer that is obtained according to the present disclosure may be an automobile interior or exterior member. Examples of the exterior material include the following: windows, light covers, and external camera covers. Examples of the interior material include the following: instrument panel covers, navigation system touch panels, and decorative interior materials.

The thickness of the above layer is not limited. The thickness of the above layer in the case of an optical member is in the range of 1 to 50 nm, 1 to 30 nm, and preferably 1 to 15 nm, from the viewpoint of optical performance, abrasion durability, and antifouling property.

Up to now, the compound, composition, and article of the present disclosure have been described in detail. The compound, composition, article, and the like of the present disclosure are not limited to those exemplified above.

## Examples

Hereinafter, the present disclosure will now be described with reference to, but is not limited to, Examples.

### Synthetic Example 1

R-COOH (10 g), 2,2-diallyl-4-penten-1-amine (1.71 g), 1-(3-dimethylaminopropyl)-3-ethylcarbodiimide hydrochloride (1.98 g), triethylamine (1.44 mL), 4-dimethylaminopyridine (84 mg), and dichloromethane (30 mL) were mixed and stirred at room temperature overnight. The mixed solution was diluted with dichloromethane, washed with hydrochloric acid and water, and then concentrated under reduced pressure to obtain R-CONH-$CH_2C(CH_2CH=CH_2)_3$ (8.88 g) .

R is $(CH_3)_3Si-(OSi(CH_3)_2)_n-(CH_2)_{10}-$. The average value of the number of repeating units, n, is 19.

$^1$H NMR ($CDCl_3$, 400 MHz) $\delta$ [ppm]: -0.20-0.25 (m), 1.45-1.59 (m, 2H), 1.20-1.48 (m, 14H), 1.53-1.65 (m, 2H), 2.03 (d, 2H, 7.6Hz), 2.16 (t, 2H, 7.6Hz), 3.20 (d, 2H, 6.4Hz), 5.05-5.14 (m, 6H), 5.51-5.60 (m, 1H), 5.80-5.93 (m, 3H).
$^{13}$C NMR ($CDCl_3$, 133 MHz) $\delta$ [ppm]: 0.2, 1.0, 1.8, 18.3, 23.2, 29.3, 29.4, 29.6, 30.3, 33.5, 37.1, 40.0, 40.1, 45.0, 118.1, 134.2, 172.9.

### Example 1

R-CONH-$CH_2C(CH_2CH=CH_2)_3$ (2 g) obtained in Synthetic Example 1, toluene (10 mL), a solution of Karstedt's catalyst in xylene (2%, 0.29 mL), aniline (46 mg), and trimethoxysilane (1.43 mL) were mixed. The mixture was stirred at room temperature overnight and then concentrated under reduced pressure to obtain R-CONH-$CH_2C\{CH_2CH_2CH_2Si(OCH_3)_3\}_3$ (2.21 g) .

R is $(CH_3)_3Si-(OSi(CH_3)_2)_n-(CH_2)_{10}-$. The average value of the number of repeating units, n, is 19.

$^1$H NMR ($CDCl_3$, 400 MHz) $\delta$ [ppm]: -0.2-0.21 (m), 0.41-0.65 (m, 8H), 1.10-1.50 (m, 26H), 1.55-1.65 (m, 2H), 2.14 (t, 2H, 7.2 Hz), 3.09 (d, 2H, 6.0 Hz), 3.45-3.62 (m, 27H), 5.67-5.75 (m, 1H)
$^{13}$C NMR ($CDCl_3$, 133 MHz) $\delta$ [ppm]: 0.1, 1.0, 1.7, 9.5, 16.1, 18.2, 23.2, 26.0, 29.4, 29.4, 29.6, 30.2, 33.4, 37.0, 38.1, 39.1, 43.6, 50.4, 173.0.

### Synthetic Example 2

R-COOH (10 g), diallylamine (2.01 g), 1-(3-dimethylaminopropyl)-3-ethylcarbodiimide hydrochloride (1.98 g), 4-dimethylaminopyridine (84 mg), and dichloromethane (30 mL) were mixed and stirred at room temperature overnight. The mixed solution was diluted with dichloromethane, washed with hydrochloric acid and water, and then concentrated under reduced pressure to obtain R-$CON(CH_2CH=CH_2)_2$ (9.00 g) .

R is $(CH_3)_3Si-(OSi(CH_3)_2)_n-(CH_2)_{10}-$. The average value of the number of repeating units, n, is 19.

$^1H$ NMR ($CDCl_3$, 400 MHz) δ [ppm]: -0.25-0.30 (m), 1.45-1.59 (m, 2H), 1.20-1.40 (m, 14H), 1.55-1.68 (m, 2H), 2.30 (t, 2H, 7.2Hz), 3.86 (d, 2H, 5.2Hz), 3.98 (d, 2H, 6.0Hz), 5.05-5.23 (m, 4H), 5.68-5.84 (m, 2H).
$^{13}C$ NMR ($CDCl_3$, 133 MHz) δ [ppm]: 0.2, 1.0, 1.8, 18.3, 23.2, 25.4, 29.4, 29.5, 29.6, 33.1, 33.5, 47.8, 49.1, 116.5, 117.0, 133.0, 133.5, 173.2.

Example 2

R-CON($CH_2CH=CH_2$)$_2$ (2 g), toluene (10 mL), a solution of Karstedt's catalyst in xylene (2%, 0.20 mL), aniline (32 mg), and trimethoxysilane (1.00 mL) were mixed and stirred at room temperature overnight, and then concentrated under reduced pressure to obtain R-CON{$CH_2CH_2CH_2Si(OCH_3)_3$}$_2$ (2.23 g) .
R is $(CH_3)_3Si-(OSi(CH_3)_2)_n-(CH_2)_{10}-$. The average value of the number of repeating units, n, is 19.
$^1H$ NMR ($CDCl_3$, 400 MHz) δ [ppm]: -0.20-0.31 (m), 0.42-0.65 (m, 6H), 1.10-1.40 (m, 14H), 1.63-1.71 (m, 6H), 2.26 (t, 2H, 7.2 Hz), 3.19 (t, 2H, 7.6 Hz), 3.27 (t, 2H, 7.6 Hz), 3.45-3.65 (m, 18H).
$^{13}C$ NMR ($CDCl_3$, 133 MHz) δ [ppm]:0.2, 1.0, 1.7, 6.3, 6.4, 18.2, 20.8, 22.3, 23.2, 25.6, 29.4, 29.5, 29.6, 33.2, 33.4, 48.2, 50.2, 50.48, 50.53, 172.8

Synthetic Example 3

R-(COOH)$_2$ (10 g, manufactured by Shin-Etsu Chemical Co., Ltd., X-22-162C), 2,2-diallyl-4-penten-1-amine (1.05 g), 1-(3-dimethylaminopropyl)-3-ethylcarbodiimide hydrochloride (1.2 g), 4-dimethylaminopyridine (52 mg), and dichloromethane (33 mL) were mixed and stirred at room temperature overnight. The mixed solution was diluted with dichloromethane, washed with hydrochloric acid and water, and then concentrated under reduced pressure to obtain R-(CONH-$CH_2C(CH_2CH=CH_2)_3$)$_2$ (7.3 g). R is $-CH_2CH_2-(OSi(CH_3)_2)_n-CH_2CH_2-$, and the average value of the number of repeating units, n, is 31.
$^1H$ NMR ($CDCl_3$, 400 MHz) δ [ppm]: -0.20-0.30 (m), 0.81-0.85 (m, 4H), 2.03 (d, 12H), 2.17-2.22 (m, 4H), 3.19 (d, 4H), 5.07-5.15 (m, 12H), 5.63 (2H, brt), 5.83-5.90 (m, 6H).

Example 3

R-(CONH-$CH_2C(CH_2CH=CH_2)_3$)$_2$ (2 g) obtained in Synthetic Example 3, toluene (9.5 mL), a solution of Karstedt's catalyst in xylene (2%, 0.19 mL), aniline (0.03 mL), and trimethoxysilane (0.92 mL) were mixed. The mixture was stirred at room temperature overnight and then concentrated under reduced pressure to obtain R-CONH-$CH_2C${$CH_2CH_2CH_2Si(OCH_3)_3$}$_3$ (2 g). R is $-CH_2CH_2-(OSi(CH_3)_2)_n-CH_2CH_2-$ and the average value of the number of repeating units, n, is 31.
$^1H$ NMR ($CDCl_3$, 400 MHz) δ [ppm]: -0.20-0.30 (m), 0.57-0.70 (m, 12H), 0.81-0.87 (m, 4H), 1.17-1.37 (m, 12H), 1.27-139 (m, 12H), 2.13-2.23 (m, 4H), 3.09 (d, 4H), 3.54-3.65 (m, 54H), 5.88 (2H, brt).

Synthetic Example 4

R-$CH_2OH$ (201 g, Shin-Etsu Chemical Co., Ltd., X-22-170DX), acetone (400 mL), and a saturated aqueous sodium hydrogen carbonate solution (100 mL) were mixed and cooled to 0°C with ice water. While stirring the mixed solution at 0°C, potassium bromide (1.02 g) and TEMPO (0.210 g) were added. After stirring for 10 minutes, trichloroisocyanuric acid (19.9 g) was added. The temperature was raised to room temperature spontaneously and the mixed solution was stirred overnight. Isopropyl alcohol (200 mL) was added to the mixed solution, and the volatile components were concentrated under reduced pressure. Water (300 mL) was added to the concentrated liquid, extraction was performed with dichloromethane, drying was performed, and then the solvent was distilled off under reduced pressure to obtain R-COOH (180 g).
R is $CH_3CH_2CH_2CH_2Si(CH_3)_2-(OSi(CH_3)_2)_n-(CH_2)_3-OCH_2-$. The average value of the number of repeating units, n, is 57.
$^1H$ NMR ($CDCl_3$, 400 MHz) δ [ppm]: -0.11-0.27 (m) , 0.52-0.58 (m, 4H), 0.89 (t, J = 7.1 Hz, 3H), 1.28-1.33 (m, 4H), 1.66-1.70 (m, 2H), 3.54 (t, J = 6.9 Hz, 2H), 4.11 (s, 2H)

Synthetic Example 5

R-COOH (10 g) obtained in Synthetic Example 4, 2,2-diallyl-4-penten-1-amine (1.71 g), 1-(3-dimethylaminopropyl)-3-ethylcarbodiimide hydrochloride (1.98 g), 4-dimethylaminopyridine (84 mg), and dichloromethane (30 mL) were

mixed and stirred at room temperature overnight. The mixed solution was diluted with dichloromethane, washed with hydrochloric acid and water, and then concentrated under reduced pressure to give R-CONH-$CH_2C(CH_2CH=CH_2)_3$ (8.88 g) . R is $CH_3CH_2CH_2CH_2Si(CH_3)_2$-$(OSi(CH_3)_2)_n$-$(CH_2)_3$-$OCH_2$-, and the average value of the number of repeating units, n, is 57.
$^1$H NMR ($CDCl_3$, 400 MHz) $\delta$ [ppm]: -0.10-0.30 (m), 0.52-0.59 (m, 4H), 0.88 (t, J = 6.9 Hz, 3H), 1.26-1.33 (m, 4H), 1.61-1.69 (m, 2H), 2.05 (d, J = 7.3 Hz, 6H), 3.22 (d, J = 6.4 Hz, 2H), 3.47 (t, J = 6.6 Hz, 2H), 3.93 (s, 2H), 5.08-5.13 (m, 6H), 5.82-5.92 (m, 3H), 6.75 (brs, 1H)

Example 4

R-CONH-$CH_2C(CH_2CH=CH_2)_3$ (5 g) obtained in Synthetic Example 5, toluene (5 mL), a solution of Karstedt's catalyst in xylene (2%, 0.24 mL), aniline (38 mg), and trimethoxysilane (1.19 mL) were mixed. The mixture was stirred at room temperature overnight and then concentrated under reduced pressure to obtain R-CONH-$CH_2C\{CH_2CH_2CH_2Si(OCH_3)_3\}_3$ (4.8 g) . R is $CH_3CH_2CH_2CH_2Si(CH_3)_2$ (OSi $(CH_3)_2)_n$-$(CH_2)_3$-$OCH_2$-, and the average value of the number of repeating units, n, is 57.
$^1$H NMR ($CDCl_3$, 400 MHz) $\delta$ [ppm]: -0.13-0.32 (m), 0.54-0.63 (m, 10H), 0.90 (t, J = 7.1 Hz, 3H), 1.23-1.37 (m, 16H), 1.62-1.69 (m, 2H), 3.17 (d, J = 5.9 Hz, 2H), 3.47-3.50 (m, 2H), 3.56-3.63 (m, 27H), 3.94 (s, 2H), 6.54 (brs, 1H)

Example 5

R-CONH-$CH_2C(CH_2CH=CH_2)_3$ (1 g) obtained in Synthetic Example 5, toluene (5 mL), a solution of Karstedt's catalyst in xylene (2%, 94 $\mu$L, $(CH_3COO)_3SiCH_3$ (3.6 mg), and trichlorosilane (0.25 mL) were mixed. The mixture was stirred at 60°C for 4 hours and then concentrated under reduced pressure to obtain R-CONH-$CH_2C\{CH_2CH_2CH_2SiCl_3\}_3$ (0.9 g) . R is $CH_3CH_2CH_2CH_2Si(CH_3)_2(OSi(CH_3)_2)_n$-$(CH_2)_3$-$OCH_2$-, and the average value of the number of repeating units, n, is 57.
$^1$H NMR ($CDCl_3$, 400 MHz) $\delta$ [ppm]: -0.14-0.33 (m), 0.57-0.64 (m, 4H), 0.96 (t, J = 6.9 Hz, 3H), 1.24-1.42 (m, 16H), 1.48-1.58 (m, 6H), 1.68-1.72 (m, 2H), 3.22 (d, J = 6.4 Hz, 2H), 3.50 (t, J = 7.1 Hz, 2H), 4.05 (s, 2H), 6.68 (brs, 1H)

Synthetic Example 6

R-CH=$CH_2$ (5 g, Gelest Inc., MCR-V21), toluene (5 g), trichlorosilane (0.31 g), and a solution of Karstedt's catalyst in xylene (2%, 32 $\mu$L were mixed and stirred at 60°C for 4 hours. After allowing to cool to room temperature and distilling off the solvent under reduced pressure, the mixture was dissolved in tetrahydrofuran (5 g), and allylmagnesium chloride (1.0 mol/L, 4.4 mL) was added under ice cooling. The temperature was raised to room temperature spontaneously, stirring was performed for 17 hours, and then a saturated aqueous sodium chloride solution was added. Insoluble matters were filtered through a Celite pad, and the filtrate was extracted with dichloromethane. The solvent was distilled off under reduced pressure to obtain R-$CH_2CH_2Si(CH_2CH=CH_2)_3$ (4.7 g) . R is $CH_3CH_2CH_2CH_2Si(CH_3)_2(OSi(CH_3)_2)_n$-, and the average value of the number of repeating units, n, is 57.
$^1$H NMR ($CDCl_3$, 400 MHz) $\delta$ [ppm]: 0.07 (s), 0.42-0.62 (4H, m), 0.89 (3H, t), 1.26-1.35 (4H, m), 1.60 (6H, d), 4.84-5.17 (6H, m), 5.80 (3H, tdd) .

Example 6

R-$CH_2CH_2Si(CH_2CH=CH_2)_3$ (2.5 g) obtained in Synthetic Example 6, toluene (2.5 mL), a solution of Karstedt's catalyst in xylene (2%, 0.10 mL), aniline (16 mg), and trimethoxysilane (0.52 mL) were mixed. The mixture was stirred at room temperature overnight and then concentrated under reduced pressure to obtain R-$CH_2CH_2Si(CH_2CH_2CH_2Si(OCH_3)_3)_3$ (2.5 g) . R is $CH_3CH_2CH_2CH_2Si(CH_3)_2(OSi(CH_3)_2)_n$- and the average value of the number of repeating units, n, is 57.
$^1$H NMR ($CDCl_3$, 400 MHz) $\delta$ [ppm]: 0.08 (s), 0. 41-0.74 (12H, m), 0.89 (3H, t), 1.23-1.33 (4H, m), 1.42-1.63 (6H, m), 3.57 (27H, s).

Synthetic Example 7

R-CH=$CH_2$ (5 g, Gelest Inc., MCR-V25), toluene (5 g), trichlorosilane (0.27 g), and a solution of Karstedt's catalyst in xylene (2%, 76 uL) were mixed and stirred at 60°C for 4 hours. After allowing to cool to room temperature and distilling off the solvent under reduced pressure, the mixture was dissolved in tetrahydrofuran (5 g), and allylmagnesium chloride (1.0 mol/L, 2.2 mL) was added under ice cooling. The temperature was raised to room temperature spontaneously, stirring was carried out for 17 hours, and then a saturated aqueous sodium chloride solution was added.

Insoluble matters were filtered through a Celite pad, and the filtrate was extracted with dichloromethane. The solvent was distilled off under reduced pressure to obtain R-$CH_2CH_2Si(CH_2CH=CH_2)_3$ (4.2 g). R is $CH_3CH_2CH_2CH_2Si(CH_3)_2(OSi(CH_3)_2)_n$-, and the average value of the number of repeating units, n, is 200.
$^1$H NMR ($CDCl_3$, 400 MHz) $\delta$ [ppm]: 0.09 (s), 0.40-0.62 (4H, m), 0.90 (3H, t), 1.20-1.32 (4H, m), 1.62 (6H, d), 4.85-5.15 (6H, m), 5.82 (3H, tdd).

Example 7

R-$CH_2CH_2Si(CH_2CH=CH_2)_3$ (3.6 g) obtained in Synthetic Example 7, toluene (4 mL), a solution of Karstedt's catalyst in xylene (2%, 54 μL, aniline (9 mg), and trimethoxysilane (0.27 mL) were mixed. The mixture was stirred at room temperature overnight and then concentrated under reduced pressure to obtain R-$CH_2CH_2Si(CH_2CH_2CH_2Si(CH_3)_3)_3$ (3.3 g). R is $CH_3CH_2CH_2CH_2Si(CH_3)_2(OSi(CH_3)_2)_n$- and the average value of the number of repeating units, n, is 200.
$^1$H NMR ($CDCl_3$, 400 MHz) $\delta$ [ppm]: 0.08 (s), 0. 39-0.73 (12H, m), 0.85 (3H, t), 1.21-1.32 (4H, m), 1.420-1.65 (6H, m), 3.55 (27H, s).

Synthetic Example 8

R(-$CH=CH_2)_2$ (5 g, Gelest Inc., DMS-V21), toluene (10 g), trichlorosilane (1.48 g), and a solution of Karstedt's catalyst in xylene (2%, 0.41 mL) were mixed and stirred at 60°C for 4 hours. After allowing to cool to room temperature and distilling off the solvent under reduced pressure, the mixture was dissolved in tetrahydrofuran (10 g), and allylmagnesium chloride (1.0 mol/L, 12.1 mL) was added under ice cooling. The temperature was raised to room temperature spontaneously, stirring was performed for 17 hours, and a saturated aqueous sodium chloride solution was then added. Insoluble matters were filtered through a Celite pad, and the filtrate was extracted with dichloromethane. The solvent was distilled off under reduced pressure to obtain R-$[CH_2CH_2Si\{CH_2CH=CH_2\}_3]_2$ (4.4 g). R is -$Si(CH_3)_2(OSi(CH_3)_2)_n$-, and the average value of the number of repeating units, n, is 52.
$^1$H NMR ($CDCl_3$, 400 MHz) $\delta$ [ppm]: 0.08 (s), 0.38-0.63 (4H, m), 1.65 (6H, d), 4.81-5.13 (6H, m), 5.80 (3H, tdd).

Example 8

R-$[CH_2CH_2Si\{CH_2CH=CH_2\}_3]_2$ (3 g) obtained in Synthetic Example 8, toluene (6 mL), a solution of Karstedt's catalyst in xylene (2%, 0.25 mL), aniline (41 mg), and trimethoxysilane (1.25 mL) were mixed. The mixture was stirred at room temperature overnight and then concentrated under reduced pressure to obtain R-$[CH_2CH_2Si\{CH_2CH_2CH_2Si(OCH_3)_3\}_3]_2$ (2.7 g) . R is - $Si(CH_3)_2(OSi(CH_3)_2)_n$- and the average value of the number of repeating units, n, is 52.
$^1$H NMR ($CDCl_3$, 400 MHz) $\delta$ [ppm]: 0.10 (s), 0. 33-0.75 (16H, m), 1.45-1.68 (12H, m), 3.52 (27H, s).

Synthetic Example 9

2,2-Diallyl-4-penten-1-amine (2 g), triethylene glycol 2-bromoethyl methyl ether (8.9 g), and 1,8-diazabicyclo[5.4.0]-7-undecene (5.0 g) were dissolved in cyclopentyl methyl ether (6 mL) and stirred at 80°C for 6 hours. After cooling to about room temperature, the mixture was washed with an aqueous sodium hydrogen carbonate solution and water, and concentrated under reduced pressure to obtain PG-$NHCH_2C$ $(CH_2CH=CH_2)_3$ (2.9 g). PG is $CH_3(OCH_2CH_2)_4$-.
$^1$H NMR ($CDCl_3$, 400 MHz) $\delta$ [ppm] : 2.05 (d, J =7.3 Hz, 6H), 2.41-2.47 (m, 2H), 2.76-2.81 (m, 2H), 3.37 (s, 3H), 3.59-3.65 (m, 14H), 5.00-5.10 (m, 6H), 5.77-5.88 (m, 3H).

Synthetic Example 10

R-COOH (3 g) obtained in Synthetic Example 4, PG-$NHCH_2C(CH_2CH=CH_2)_3$ (0.34 g), 1-(3-dimethylaminopropyl)-3-ethylcarbodiimide hydrochloride (0.18 g), 4-dimethylaminopyridine (7.8 mg), and dichloromethane (3 mL) were mixed and stirred at room temperature overnight. The mixed solution was diluted with dichloromethane, washed with hydrochloric acid and water, and then concentrated under reduced pressure to obtain R-CON(PG)-$CH_2C(CH_2CH=CH_2)_3$ (2.5 g) . R is $CH_3CH_2CH_2CH_2Si(CH_3)_2$-$(OSi(CH_3)_2)_n$-$(CH_2)_3$-$OCH_2$-, PG is $CH_3(OCH_2CH_2)_4$-, and the average value of the number of repeating units, n, is 57.
$^1$H NMR ($CDCl_3$, 400 MHz) $\delta$ [ppm]: -0.12-0.31 (m), 0.50-0.58 (m, 4H), 0.89 (t, J = 6.9 Hz, 3H), 1.24-1.34 (m, 4H), 1.60-1.67 (m, 2H), 2.02 (d, J = 7.3 Hz, 6H), 3.25 (s, 2H), 3.37 (s, 3H) , 3.49 (t, J = 6.6 Hz, 2H), 3.56-3.65 (m, 16H), 3.98 (s, 2H), 5.05-5.16 (m, 6H), 5.80-5.94 (m, 3H).

Example 9

R-CON(PG)-$CH_2C(CH_2CH=CH_2)_3$ (1.7 g) obtained in Synthetic Example 10, toluene (4 mL), a solution of Karstedt's catalyst in xylene (2%, 0.078 mL), aniline (12 mg), and trimethoxysilane (0.39 mL) were mixed. The mixture was stirred at room temperature overnight and then concentrated under reduced pressure to obtain R-CON(PG)-$CH_2C\{CH_2CH_2CH_2Si(OCH_3)_3\}_3$ (1.5 g) . R is $CH_3CH_2CH_2CH_2Si(CH_3)_2(OSi(CH_3)_2)_n$-$(CH_2)_3$-$OCH_2$-, PG is $CH_3(OCH_2CH_2)_4$-, and the average value of the number of repeating units, n, is 57.
$^1$H NMR ($CDCl_3$, 400 MHz) δ [ppm]: -0.11-0.31 (m), 0.52-0.64 (m, 10H), 0.93 (t, J = 7.1 Hz, 3H), 1.22-1.36 (m, 16H), 1.64-1.68 (m, 2H), 3.15 (s, 2H) , 3.35 (s, 3H), 3.46-3.49 (m, 2H), 3.55-3.68 (m, 43H), 3.95 (s, 2H).

Synthetic Example 11

1,3-Diallyl-isocyanuric acid (3.0 g) was dissolved in dimethylacetamide (14 mL). Potassium carbonate (1.5 g) was added, and the mixture was heated while stirring. R-$OSO_2CF_3$ (6.0 g) dissolved in dimethylacetamide was added, and heating and stirring were further continued. The end point of the reaction was confirmed by $^1$H-NMR, and the reaction solution was washed with pure water and concentrated under reduced pressure to obtain the compound below. R-$OSO_2CF_3$ (6.0 g) was converted from a terminal alcohol from Shin-Etsu Chemical Co., Ltd. (X-22-170DX). R is $CH_3(CH_2)_3$-$(Si(CH_3)O)_n$-$Si(CH_3)_2$-$(CH_2)_3$-O-$(CH_2)_2$-. The average value of the number of repeating units, n, is 78.

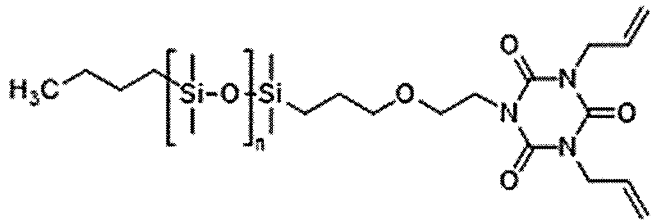

Example 10

The compound (5 g) obtained in Synthetic Example 11, toluene (30 mL), a solution of Karstedt's catalyst in xylene (2%, 0.17 mL), aniline (29 mg), and trimethoxysilane (0.9 mL) were mixed and stirred at room temperature overnight, and then concentrated under reduced pressure to the compound below. The average value of the number of repeating units, n, is 78.

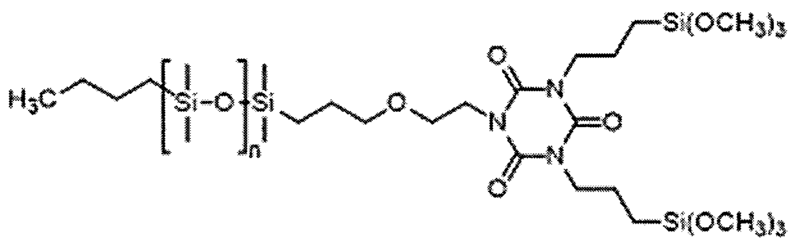

$^1$H NMR ($CDCl_3$, 400 MHz) δ [ppm]: -0.33-0.36 (m), 0.4-0.6 (m, 4H), 0.85-0.92 (m, 7H), 1.26-1.32 (m, 4H), 1.54-1.64 (m, 2H), 1.71-1.79 (m, 4H), 3.42 (t, 2H, 6.8 Hz), 3.54-3.60 (m, 18H) 3.64 (d, 2H, 6.0 Hz), 3.85 (d, 4H, 7.2 Hz), 4.09 (d, 2H, 6.0 Hz)

Synthetic Example 12

R-$(CH=CH_2)_2$ (5 g), toluene (10 g), trichlorosilane (0.65 g), and a solution of Karstedt's catalyst in xylene (2%, 0.18 mL) were mixed and stirred at 60°C for 4 hours. After allowing to cool to room temperature and distilling off the solvent under reduced pressure, the mixture was dissolved in tetrahydrofuran (10 g), and allylmagnesium chloride (1.0 mol/L, 5.3 mL) was added under ice cooling. The temperature was raised to room temperature spontaneously, stirring was carried out for 17 hours, and a saturated aqueous sodium chloride solution was then added. Insoluble matters were filtered through a Celite pad and the filtrate was extracted with dichloromethane. The solvent was distilled off under reduced pressure to obtain R-$(CH_2CH_2Si(CH_2CH=CH_2)_3)_2$ (4.4 g) . R is -$SiPh_2(OSiPh_2)_m$-$(OSi(CH_3)_2)_n$-, and the average values of the number of repeating units, m and n, are 26 and 87, respectively.

$^1$H NMR ($CDCl_3$, 400 MHz) δ [ppm]: -0.18-0.16 (m), 0.38-0.63 (4H, m), 1.65 (6H, d), 4.81-5.13 (6H, m), 5.80 (3H, tdd), 7.12-7.48 (m), 7.50-7.74 (m)

Example 11

R-($CH_2CH_2Si(CH_2CH=CH_2)_3)_2$ (3 g) obtained in Synthetic Example 12, toluene (6 mL), a solution of Karstedt's catalyst in xylene (2%, 0.11 mL), aniline (18 mg), and trimethoxysilane (0.55 mL) were mixed. The mixture was stirred at room temperature overnight and then concentrated under reduced pressure to obtain R-$[CH_2CH_2Si\{CH_2CH_2CH_2Si(OCH_3)_3\}_3]_2$ (2.8 g). R is $-SiPh_2(OSiPh_2)_m-(OSi(CH_3)_2)_n-$ and the average values of the number of repeating units, m and n, are 26 and 87, respectively.
$^1$H NMR ($CDCl_3$, 400 MHz) δ [ppm]: 0.10 (s), 0. 31-0.77 (m, 32H), 1.43-1.70 (m, 12H), 3.50-3.61 (s, 54H).

Synthetic Example 13

R-COOH (2.11 g) obtained in Synthetic Example 4, diallylamine (18 mL), 1-(3-dimethylaminopropyl)-3-ethylcarbodiimide hydrochloride (0.14 g), 4-dimethylaminopyridine (6 mg), and dichloromethane (4.0 g) were mixed and stirred at room temperature overnight. The mixed solution was diluted with dichloromethane, washed with hydrochloric acid and water, and then concentrated under reduced pressure to obtain R-$CON(CH_2CH=CH_2)_2$ (1.88 g). R is $CH_3CH_2CH_2CH_2Si(CH_3)_2-(OSi(CH_3)_2)_n-(CH_2)_3-OCH_2-$. The average value of the number of repeating units, n, is 57.
$^1$H NMR ($CDCl_3$, 400 MHz) δ [ppm]: 0.04-0.09 (m), 0.51-0.56 (m), 0.86-0.90 (t), 1.25-1.35 (m), 1.60-1.67 (m), 3.45-3.49 (t), 3.91-3.99 (dd), 4.14 (s), 5.12-5.21 (m), 5.70-5.81 (m).

Example 12

R-$CON(CH_2CH=CH_2)_2$ (1.7 g) obtained in Synthetic Example 13, toluene (1.7 g), a solution of Karstedt's catalyst in xylene (2%, 0.20 mL), pyridine (10 mg), and trimethoxysilane (0.32 mL) were mixed and stirred at room temperature overnight, and then concentrated under reduced pressure to obtain R-$CON\{CH_2CH_2CH_2Si(OCH_3)_3\}_2$ (1.97 g). R is $CH_3CH_2CH_2CH_2Si(CH_3)_2-(OSi(CH_3)_2)_n-(CH_2)_3-OCH_2-$. The average value of the number of repeating units, n, is 57.
$^1$H NMR ($CDCl_3$, 400 MHz) δ [ppm]: -0.08-0.08 (m), 0.51-0.55 (m), 0.86-0.88 (t), 1.25-1.32 (m), 1.60-1.66 (m), 3.56-3.64 (m) .

Synthetic Example 14

Methyl 10-undecenoate (5.02 g), toluene (1.7 g), a solution of Karstedt's catalyst in xylene (2%, 0.3 mL), and pyridine (0.1 mL) were each added, the mixture was then cooled to 5°C or lower in an ice bath, 1,1,1,3,3-pentamethyldisiloxane (20 mL) was added, and the mixture was stirred at 60°C for 3 hours. Thereafter, trimethoxysilane (0.32 mL) was mixed, and the mixture was stirred at room temperature overnight and then concentrated under reduced pressure to obtain $(CH_3)_3SiO(CH_3)_2Si(CH_2)_{10}COOMe$ (8.62 g) .

Synthetic Example 15

R-COOMe (3.0 g), toluene (8.7 mL), 1,5,7-triazabicyclo[4.4.0]dec-5-ene (0.140 g), and 2,2-diallyl-4-penten-1-amine (0.75 g) were each added, and the mixture was then stirred at 75°C for 24 hours. The mixed solution was diluted with toluene, washed with hydrochloric acid and water, and then concentrated under reduced pressure to give R-CONH-$CH_2C(CH_2CH=CH_2)_3$ (2.74 g) .
R is $(CH_3)_3Si-OSi(CH_3)_2-(CH_2)_{10}-$.
$^1$H NMR ($CDCl_3$, 400 MHz) δ [ppm]: -0.01-0.04 (m), 0.45-0.49 (m), 1.23-1.26 (m), 1.56-1.64 (m), 2.05 (s), 2.15-2.19 (t), 3.22 (s), 3.82-3.85 (m), 5.05-5.16 (m), 5.75-5.84 (m), 6.24 (s)

Example 13

R-CONH-$CH_2C(CH_2CH=CH_2)_3$ (2.07 g) obtained in Synthetic Example 14, toluene (2 g), a solution of Karstedt's catalyst in xylene (2%, 0.2 mL), pyridine (0.1 mL), and trimethoxysilane (0.5 mL) were mixed. The mixture was stirred at room temperature overnight and then concentrated under reduced pressure to obtain R-CONH-$CH_2C\{CH_2CH_2CH_2Si(OCH_3)_3\}_3$ (2.53 g) .
R is $(CH_3)_3Si-OSi(CH_3)_2-(CH_2)_{10}-$.
$^1$H NMR ($CDCl_3$, 400 MHz) δ [ppm]: -0.14-0.05 (m), 0.46-0.50 (t), 0.54-0.63 (m), 1.25-1.27 (m), 1.57-1.66 (m), 2.12-2.16 (t), 3.17 (s), 3.56 (s), 6.54 (s).

Comparative Example 1

According to the method described in JP 2019-44179 A, the following compound was synthesized.

$$CH_3O(CH_2CH_2O)_{n-1}CH_2C(O)NHCH_2C\{CH_2CH_2CH_2Si(OCH_3)_3\}_3$$

The average value of the number of repeating units, n, is 22.

Synthetic Example 16

R-COOH (5 g), allylamine (0.59 g), 1-(3-dimethylaminopropyl)-3-ethylcarbodiimide hydrochloride (0.99 g), 4-dimethylaminopyridine (42 mg), and dichloromethane (15 mL) were mixed and stirred at room temperature overnight. The mixed solution was diluted with dichloromethane, washed with hydrochloric acid and water, and then concentrated under reduced pressure to obtain R-CONH-$CH_2CH=CH_2$ (3.82 g).

R is $(CH_3)_3Si-(OSi(CH_3)_2)_n-(CH_2)_{10}-$. The average value of the number of repeating units, n, is 19.

$^1H$ NMR ($CDCl_3$, 400 MHz) δ [ppm]: -0.20-0.30 (m), 0.48-0.56 (m, 2H), 1.18-1.37 (m, 14H), 1.58-1.69 (m, 2H), 2.19 (t,2H, 7.6 Hz), 3.87-3.90 (m, 2H), 5.11-5.20 (m, 2H), 5.49 (brs, 1H), 5.77-5.89 (m, 1H)

Comparative Example 2

R-CONH-$CH_2CH=CH_2$ (2 g), toluene (5 mL), a solution of Karstedt's catalyst in xylene (2%, 0.10 mL), aniline (16 mg), and trimethoxysilane (0.5 mL) were mixed and stirred at room temperature overnight, and then concentrated under reduced pressure to obtain R-CON-$CH_2CH_2CH_2Si(OCH_3)_3$ (2.11 g) .

R is $(CH_3)_3Si-(OSi(CH_3)_2)_n-(CH_2)_{10}-$. The average value of the number of repeating units, n, is 19.

Comparative Example 3

According to the method described in JP 2014-84405 A, using $(CH_3)_3Si-(OSi(CH_3)_2)_n-(CH_2)_{10}-CONH-CH_2CH=CH_2$ (the average value of the number of repeating units, n, is 19) obtained in the above Synthetic Example 13, the following compound was synthesized.

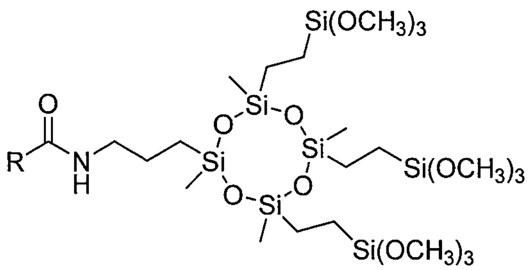

R is $(CH_3)_3Si-(OSi(CH_3)_2)_n-(CH_2)_{10}-$. The average value of the number of repeating units, n, is 19.
$^1H$ NMR ($CDCl_3$, 400 MHz) δ [ppm]: -0.20-0.30 (m), 0.38-0.68 (m, 16H), 1.20-1.38 (m, 14H), 1.46-1.68 (m, 4H), 2.10-2.23 (m, 2H), 3.18-3.26 (m, 1H), 3.44-3.65 (m, 19H)

<Formation of surface-treating layer>

[Spin coat treatment]

The compounds of Examples 1 to 5 and 10 and Comparative Example 1 above were each diluted to a 1.5 wt% isopropanol solution to obtain surface-treating agents 1 to 7. After performing a UV/$O_3$ treatment on a 50 mm × 50 mm glass substrate for 10 minutes for dry cleaning, it was spin-coated with the surface-treating agents 1 to 7 at 3,000 rpm for 30 seconds. Thereafter, a heating treatment was performed in an oven at 100°C for 2 hours to obtain a surface-treating layer.

<Evaluation>

[Measurement of contact angle]

For the measurement of contact angle, a fully automatic contact angle meter DropMaster 700 (manufactured by Kyowa Interface Science Co., Ltd.) was used under an environment of 25°C. Specifically, the measurement target, substrate having the surface-treating layer, was placed horizontally, water was dropped from a micro syringe onto its surface, and a static image was taken one second after the dropping with a video microscope to thereby measure the static contact angle. The static contact angle was measured at five different points on the surface-treating layer of the substrate, and the average value calculated therefrom was used. The contact angle of oleic acid was measured 4 seconds after the liquid was landed at a liquid volume of 2 μL.

[Table 1]

| Compound | Contact angle of water (degrees) | Contact angle of oleic acid (degrees) |
|---|---|---|
| Example 1 | 99.1 | 50.9 |
| Example 2 | 101.2 | 54.9 |
| Example 3 | 97.2 | 45.5 |
| Example 4 | 104.9 | 51.5 |
| Example 5 | 97.4 | 47.0 |
| Example 10 | 104.0 | 52.0 |
| Comparative Example 1 | 37.8 | 20.0 |

<Formation of surface-treating layer>

The compounds of Examples 1, 3, 4, 6 to 13, and Comparative Examples 2 to 3 above were each diluted to a 20 wt% 1,3-bis(trifluoromethyl)benzene solution to obtain surface-treating agents 5 to 9. The surface-treating agents 8 to 18 prepared as described above were vacuum-deposited on a chemically tempered glass ("Gorilla" Glass, manufactured by Corning Incorporated, thickness 0.7 mm).

Specifically, a molybdenum boat in the vacuum deposition system was filled with 0.1 g of the surface-treating agent, and the vacuum deposition system was evacuated to a pressure of $3.0 \times 10^{-3}$ Pa or lower. Thereafter, silicon dioxide was deposited at a thickness of 7 nm by the electron beam deposition scheme to form a silicon dioxide film, followed by heating the boat by the resistance heating scheme to form a surface-treating layer.

<Evaluation>

[Evaluation of abrasion resistance]

For the evaluation samples after the abrasion resistance test, the above ink removability evaluation test was carried out, and fingerprint removability was evaluated with the same evaluation criteria. The more excellent the fingerprint removability after the frictional resistance test, the smaller the decrease in performance due to friction and the more excellent the frictional resistance is.

(Initial evaluation)

As initial evaluation (0 friction times), after forming the surface-treating layer, the excess on the surface was wiped off, and then the static contact angle of water was measured.

(Evaluation after abrasion resistance test)

For the formed surface-treating layer, a rubbing tester (manufactured by Imoto machinery Co., LTD) was used to reciprocate 3,000 times (or 6,000 times) under the following conditions.

Friction block: BEMCOT M-3II (product name, manufactured by Asahi Kasei Corp.)

Moving distance (one way): 60 mm
Moving speed: 8,400 mm/min
Load: 100 g/3 $cm^2$

[Evaluation of ink removability]

After forming the surface-treating layer, the excess on the surface was wiped off and used as the evaluation sample. The evaluation was carried out after 0, 3,000, and 6,000 abrasion times. After drawing a line on the surface layer of the evaluation sample with an oil-based felt tipped pen (Mckee extra thick black: product name, manufactured by ZEBRA CO., LTD.), the sample was abraded 50 times with BEMCOT M-3II as an abrasion block under the conditions where the moving speed was 70 rpm and the load was 100 g/3 $cm^2$, and then the state of attachment of oil-based ink (line) was visually observed to evaluate ink removability (initial ink removability) in accordance with the following criteria.
Excellent (double circle): the removal ratio of oil-based ink is 90% or more.
Good (circle): the removal ratio of oil-based ink is 60% or more and less than 90%.
Fair (triangle): the removal ratio of oil-based ink is 30% or more and less than 60%.
Poor (cross mark): the removal ratio of oil-based ink is less than 30%.

[Table 2]

| | Initial | | After 3,000 abrasion times | | After 6,000 abrasion times | |
|---|---|---|---|---|---|---|
| | Contact angle of water (degrees) | Ink removability | Contact angle of water (degrees) | Ink removability | Contact angle of water (degrees) | Ink removability |
| Example 1 | 101.3 | ◎ | 99.4 | © | 96.9 | ◎ |
| Example 3 | 97.2 | ◎ | 92.4 | ○ | 90.1 | ○ |
| Example 4 | 105.3 | ◎ | 105.0 | ◎ | 105.5 | @ |
| Example 6 | 105.4 | ◎ | 104.5 | ◎ | 103.8 | ◎ |
| Example 7 | 104.0 | ◎ | 101.6 | ◎ | 99.6 | ◎ |
| Example 8 | 101.8 | ◎ | 101.4 | ◎ | 100.5 | ◎ |
| Example 9 | 104.5 | ◎ | 103.7 | ◎ | 103.8 | ◎ |
| Example 10 | 104.0 | ◎ | 101.4 | ◎ | 100.3 | ◎ |
| Example 11 | 97.6 | ◎ | 97.1 | ○ | 93.2 | ○ |
| Comparative Example 2 | 99.6 | ○ | 84.8 | × | 13.0 | × |
| Comparative Example 3 | 101.1 | ◎ | 99.2 | ○ | 86.5 | Δ |

<Preparation of treatment agent solution>

The compounds of Examples 1 and 4 were diluted with the solvent (S) shown in Table 3 to achieve 10 wt%, yielding surface-treating agents 1 to 13.

<Miscibility test>

The surface-treating agents 1 to 13 prepared as described above were allowed to stand for 10 minutes in a laboratory at 23 to 27°C, and the state of the surface-treating agents was visually observed and evaluated in accordance with the following criteria.

Good (circle): the solution is uniformly mixed and transparent.

Poor (cross mark): the solution is non-uniform and separated into two phases.

<Storage stability test>

After the surface-treating agents 1 to 13 prepared as described above were allowed to stand for 7 days under a light-shielded condition at 23 to 27°C, the state of the surface-treating agents was visually observed and evaluated in accordance with the following criteria.

Excellent (double circle): the solution is uniform, free of turbidity, and does not produce solid components.

Good (circle): solid components are not formed in the chemical solution, but solids can be seen on the liquid surface.

Fair (triangle): solid components can be confirmed in the chemical solution, but the solution still has flowability.

Poor (cross mark): the solution is gelated and has no flowability.

[Table 3]

| | Compound | Solvent (S) | Miscibility | Storage stability |
|---|---|---|---|---|
| Surface-treating agent 1 | Example 1 | Isopropyl alcohol | ○ | × |
| Surface-treating agent 2 | Example 1 | Ethanol | ○ | × |
| Surface-treating agent 3 | Example 1 | Dimethylacetamide | ○ | Δ |
| Surface-treating agent 4 | Example 1 | Butyl acetate | ○ | Δ |
| Surface-treating agent 5 | Example 1 | Cyclopentyl methyl ether | ○ | ◎ |
| Surface-treating agent 6 | Example 1 | 1,3-Bis(trifluoromethyl)benzene | ○ | ○ |
| Surface-treating agent 7 | Example 1 | Novec7200 | × | - |
| Surface-treating agent 8 | Example 1 | Novec7300 | × | - |
| Surface-treating agent 9 | Example 1 | Octamethyltrisiloxane | ○ | ◎ |
| Surface-treating agent 10 | Example 1 | Hexamethyldisiloxane | ○ | ◎ |
| Surface-treating agent 11 | Example 4 | 1,3-Bis(trifluoromethyl)benzene | ○ | ○ |
| Surface-treating agent 12 | Example 4 | Octamethyltrisiloxane | ○ | ◎ |
| Surface-treating agent 13 | Example 4 | Hexamethyldisiloxane | ○ | ◎ |

<Evaluation of fingerprint removability by wiping>

Using the surface-treating agents 5, 6, and 11 to 13, the surface-treating layer was formed by the method described in <Formation of surface-treating layer> above, and then the excess on the substrate surface was wiped off to make the evaluation sample. Sebum was attached to the evaluation sample with a force of 27 N. Then, the fingerprint mark on the surface layer surface of the evaluation sample was wiped off by attaching BEMCOT M-3II to a 1 kg cylindrical weight and reciprocating 10 times in one direction under the following conditions, and then the state of fingerprint attachment was measured with a Haze meter. The results are shown in Table 4 below.

Wiping cloth: BEMCOT M-3II (product name, manufactured by Asahi Kasei Corp.)

Moving distance (one way): 60 mm
Moving speed: 8,400 mm/min
Load: 1,000 g/3 $cm^2$
Excellent (double circle): fingerprint marks are hardly visible.
Good (circle): fingerprints are slightly visible.
Fair (triangle): fingerprints are light but clearly visible.
Poor (cross mark): clearly visible.

<Haze measurement>

For the evaluation sample after performing the above evaluation of fingerprint removability by wiping, the haze value was measured using a haze meter (NDH-7000 manufactured by NIPPON DENSHOKU INDUSTRIES CO., LTD.). The results are shown in Table 4 below.

[Table 4]

| Formed article | Surface-treating agent | Processing method | Contact angle of water | Contact angle of oleic acid | Fingerprint removability by wiping | Haze value (%) |
|---|---|---|---|---|---|---|
| Formed article 1 | 5 | Deposition | 100.2 | 50.3 | ◎ | 1.09 |
| Formed article 2 | 6 | Deposition | 101.3 | 50.2 | ◎ | 1.30 |
| Formed article 3 | 11 | Deposition | 105.4 | 52.0 | ◎ | 1.24 |
| Formed article 4 | 12 | Deposition | 105.4 | 52.3 | ◎ | 0.86 |
| Formed article 5 | 13 | Deposition | 105.2 | 52.1 | ◎ | 1.01 |

Industrial Applicability

The surface-treating agent of the present disclosure can be suitably utilized in a variety of diverse applications.

## Claims

**1.** A siloxane group-containing silane compound represented by the following formula (1) or (2):

$$R^{S1}_{\alpha}\text{-}X^{A}\text{-}R^{H}_{\beta} \quad (1)$$

$$R^{H}_{\gamma}\text{-}X^{A}\text{-}R^{S2}\text{-}X^{A}\text{-}R^{H}_{\gamma} \quad (2)$$

wherein

$R^{S1}$ is each independently at each occurrence $R^1$-$R^S$-$R^2_q$-;
$R^{S2}$ is -$O_p$-$R^S$-$R^2_q$-;
$R^S$ is each independently at each occurrence a divalent linear organosiloxane group;
$R^1$ is a hydrocarbon group;
$R^2$ is -$SiR^3_2$-;
$R^3$ is each independently at each occurrence a hydrocarbon group;
p is 0 or 1;
q is each independently 0 or 1;
$R^H$ is each independently at each occurrence a monovalent group containing a Si atom to which a hydroxyl group, a hydrolyzable group, or a monovalent organic group is bonded;

two or more Si atoms to which a hydroxyl group or a hydrolyzable group is bonded are present in $R^H$;
$X^A$ is each independently a single bond or a di- to decavalent organic group;
$\alpha$ is an integer of 1 to 9;
$\beta$ is an integer of 1 to 9; and
$\gamma$ is each independently an integer of 1 to 9.

**2.** The siloxane group-containing silane compound according to claim 1, wherein

$R^S$ is $-(SiR^3{}_2-O)_a-$;
$R^3$ is each independently at each occurrence a hydrocarbon group; and
a is 2 to 1,500.

**3.** The siloxane group-containing silane compound according to claim 1 or 2, wherein $R^3$ is each independently at each occurrence a $C_{1-6}$ alkyl group or aryl group optionally substituted with a halogen atom.

**4.** The siloxane group-containing silane compound according to any one of claims 1 to 3, wherein $R^3$ is each independently at each occurrence a methyl group or a phenyl group.

**5.** The siloxane group-containing silane compound according to any one of claims 1 to 4, wherein a is 10 to 500.

**6.** The siloxane group-containing silane compound according to any one of claims 1 to 5, wherein $R^H$ is a group represented by the following formula (S1), (S2), (S3), or (S4):

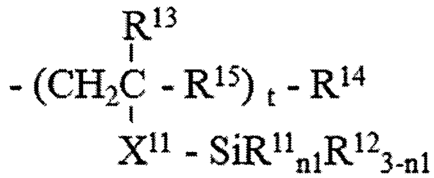

(S1)

$-SiR^{a1}{}_{k1}R^{b1}{}_{l1}R^{c1}{}_{m1}$ (S2)

$-CR^{d1}{}_{k2}R^{e1}{}_{l2}R^{f1}{}_{m2}$ (S3)

$-NR^{g1}R^{h1}$ (S4)

wherein

$R^{11}$ is each independently at each occurrence a hydroxyl group or a hydrolyzable group;
$R^{12}$ is each independently at each occurrence a monovalent organic group;
n1 is each independently an integer of 0 to 3 for each $(SiR^{11}{}_{n1}R^{12}{}_{3-n1})$ unit;
$X^{11}$ is each independently at each occurrence a single bond or a divalent organic group;
$R^{13}$ is each independently at each occurrence a hydrogen atom or a monovalent organic group;
t is each independently at each occurrence an integer of 2 or more;
$R^{14}$ is each independently at each occurrence a hydrogen atom, a halogen atom, or $-X^{11}-SiR^{11}{}_{n1}R^{12}{}_{3-n1}$;
$R^{15}$ is each independently at each occurrence a single bond, an oxygen atom, an alkylene group having 1 to 6 carbon atoms, or an alkyleneoxy group having 1 to 6 carbon atoms;
$R^{a1}$ is each independently at each occurrence $-Z^1-SiR^{21}{}_{p1}R^{22}{}_{q1}R^{23}{}_{r1}$;
$Z^1$ is each independently at each occurrence a divalent organic group;
$R^{21}$ is each independently at each occurrence $-Z^{1'}-SiR^{21'}{}_{p1'}R^{22'}{}_{q1'}R^{23'}{}_{r1'}$;
$R^{22}$ is each independently at each occurrence a hydroxyl group or a hydrolyzable group;
$R^{23}$ is each independently at each occurrence a monovalent organic group;
p1 is each independently at each occurrence an integer of 0 to 3;
q1 is each independently at each occurrence an integer of 0 to 3;
r1 is each independently at each occurrence an integer of 0 to 3;
$Z^{1'}$ is each independently at each occurrence a divalent organic group;
$R^{21'}$ is each independently at each occurrence $-Z^{1''}-SiR^{22''}{}_{q1''}R^{23''}{}_{r1''}$;
$R^{22'}$ is each independently at each occurrence a hydroxyl group or a hydrolyzable group;

$R^{23'}$ is each independently at each occurrence a monovalent organic group;
p1' is each independently at each occurrence an integer of 0 to 3;
q1' is each independently at each occurrence an integer of 0 to 3;
r1' is each independently at each occurrence an integer of 0 to 3;
$Z^{1''}$ is each independently at each occurrence a divalent organic group;
$R^{22''}$ is each independently at each occurrence a hydroxyl group or a hydrolyzable group;
$R^{23''}$ is each independently at each occurrence a monovalent organic group;
q1" is each independently at each occurrence an integer of 0 to 3;
r1" is each independently at each occurrence an integer of 0 to 3;
$R^{b1}$ is each independently at each occurrence a hydroxyl group or a hydrolyzable group;
$R^{c1}$ is each independently at each occurrence a monovalent organic group;
k1 is each independently at each occurrence an integer of 0 to 3;
11 is each independently at each occurrence an integer of 0 to 3;
m1 is each independently at each occurrence an integer of 0 to 3;
$R^{d1}$ is each independently at each occurrence $-Z^2-CR^{31}_{p2}R^{32}_{q2}R^{33}_{r2}$;
$Z^2$ is each independently at each occurrence a single bond, an oxygen atom, or a divalent organic group;
$R^{31}$ is each independently at each occurrence $-Z^{2'}-CR^{32'}_{q2'}R^{33'}_{r2'}$;
$R^{32}$ is each independently at each occurrence $-Z^3-SiR^{34}_{n2}R^{35}_{3-n2}$ ;
$R^{33}$ is each independently at each occurrence a hydrogen atom, a hydroxyl group, or a monovalent organic group;
p2 is each independently at each occurrence an integer of 0 to 3;
q2 is each independently at each occurrence an integer of 0 to 3;
r2 is each independently at each occurrence an integer of 0 to 3;
$Z^{2'}$ is each independently at each occurrence a single bond, an oxygen atom, or a divalent organic group;
$R^{32'}$ is each independently at each occurrence $-Z^3-SiR^{34}_{n2}R^{35}_{3-n2}$;
$R^{33'}$ is each independently at each occurrence a hydrogen atom, a hydroxyl group, or a monovalent organic group;
q2' is each independently at each occurrence an integer of 0 to 3;
r2' is each independently at each occurrence an integer of 0 to 3;
$Z^3$ is each independently at each occurrence a single bond, an oxygen atom, or a divalent organic group;
$R^{34}$ is each independently at each occurrence a hydroxyl group or a hydrolyzable group;
$R^{35}$ is each independently at each occurrence a monovalent organic group;
n2 is each independently at each occurrence an integer of 0 to 3;
$R^{e1}$ is each independently at each occurrence $-Z^3-SiR^{34}_{n2}R^{35}_{3-n2}$ ;
$R^{f1}$ is each independently at each occurrence a hydrogen atom, a hydroxyl group, or a monovalent organic group;
k2 is each independently at each occurrence an integer of 0 to 3;
12 is each independently at each occurrence an integer of 0 to 3;
m2 is each independently at each occurrence an integer of 0 to 3;
$R^{g1}$ and $R^{h1}$ are each independently at each occurrence $-Z^4-SiR^{11}_{n1}R^{12}_{3-n1}$, $-Z^4-SiR^{a1}_{k1}R^{bl}_{l1}R^{c1}_{m1}$, or $-Z^4-CR^{d1}_{k2}R^{e1}_{l2}R^{f1}_{m2}$; and
$Z^4$ is each independently at each occurrence a single bond, an oxygen atom, or a divalent organic group,
provided that, in the formulae (S1), (S2), (S3), and (S4), at least two Si atoms to which a hydroxyl group or a hydrolyzable group is bonded are present.

**7.** The siloxane group-containing silane compound according to claim 6, wherein the group represented by the formula (S1) is a group represented by the following formula (S1-b):

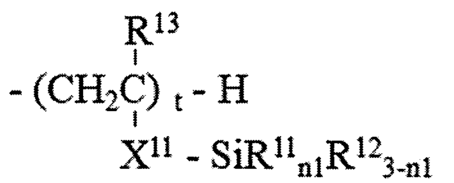

(S1-b)

wherein $R^{11}$, $R^{12}$, $R^{13}$, $X^{11}$, n1, and t have the same definition as described for the above formula (S1).

**8.** The siloxane group-containing silane compound according to claim 6, wherein $R^H$ is each independently at each occurrence the group represented by the formula (S2), (S3), or (S4).

**9.** The siloxane group-containing silane compound according to claim 6, wherein $R^H$ is each independently at each

occurrence the group represented by the formula (S2) or (S3).

**10.** The siloxane group-containing silane compound according to claim 6, wherein $R^H$ is each independently at each occurrence the group represented by the formula (S3) or (S4).

**11.** The siloxane group-containing silane compound according to claim 6, wherein $R^H$ is each independently at each occurrence the group represented by the formula (S3).

**12.** The siloxane group-containing silane compound according to any one of claims 1 to 11, wherein a, $\beta$, and $\gamma$ are 1.

**13.** The siloxane group-containing silane compound according to any one of claims 1 to 12, wherein $X^A$ is a single bond or a divalent organic group represented by the following formula:

$$-(R^{51})_{p5}-(X^{51})_{q5}-$$

wherein

$R^{51}$ is a single bond, - $(CH_2)_{s5}$-, or an o-, m-, or p-phenylene group;
s5 is an integer of 1 to 20;
$X^{51}$ is $-(X^{52})_{l5}-$;
$X^{52}$ is each independently at each occurrence a group selected from the group consisting of -O-, -S-, an o-, m-, or p-phenylene group, -CO-, -C(O)O-, $-CONR^{54}-$, $-O-CONR^{54}-$, - $NR^{54}$-, and $-(CH_2)_{n5}-$;
$R^{54}$ is each independently at each occurrence a hydrogen atom or a monovalent organic group;
n5 is each independently at each occurrence an integer of 1 to 20;
15 is an integer of 1 to 10;
p5 is 0 or 1; and
q5 is 0 or 1,
where at least one of p5 and q5 is 1, and the occurrence order of the respective repeating units enclosed in parentheses provided with p5 or q5 is not limited.

**14.** The siloxane group-containing silane compound according to any one of claims 1 to 12, wherein $X^A$ is each independently

a single bond,
a $C_{1-20}$ alkylene group, or
a divalent organic group represented by

$$-(CH_2)_{s5}-X^{53}-,$$

$$-X^{53}-(CH_2)_{t5}-, \text{ or}$$

$$-(CH_2)_{s5}-X^{53}-(CH_2)_{t5}-,$$

wherein

$_{X5}3$ is a single bond, -O-, -CO-, $-CONR^{54}-$, $-O-CONR^{54}-$, - $O-(CH_2)_{u5}-CONR^{54}-$, or -O- $(CH_2)_{u5}$-CO-,
$R^{54}$ is each independently at each occurrence a hydrogen atom, a phenyl group, a $C_{1-6}$ alkyl group, or an oxyalkylene-containing group having 1 to 10 carbon atoms,
s5 is an integer of 1 to 20,
t5 is an integer of 1 to 20, and
u5 is an integer of 1 to 20.

**15.** The siloxane group-containing silane compound according to any one of claims 1 to 12, wherein $X^A$ is each independently a divalent organic group represented by

$$-(CH_2)_{s5}-O-(CH_2)_{t5}-,$$

$$-(CH_2)_{s5}-CONR^{54}-(CH_2)_{t5}-,$$

$-(CH_2)_{s5}-O-(CH_2)_{u5}-CO-$,

or

$-(CH_2)_{s5}-O-(CH_2)_{u5}-CONR^{54}-(CH_2)_{t5}-$,

wherein

$R^{54}$ is each independently at each occurrence a hydrogen atom, a phenyl group, a $C_{1-6}$ alkyl group, or an oxyalkylene-containing group having 1 to 10 carbon atoms,
s5 is an integer of 1 to 20,
t5 is an integer of 1 to 20, and
u5 is an integer of 1 to 20.

**16.** The siloxane group-containing silane compound according to any one of claims 1 to 11, wherein $X^A$ is each independently a tri- to decavalent organic group.

**17.** The siloxane group-containing silane compound according to any one of claims 1 to 11, wherein $X^A$ is each independently a group represented by the following:

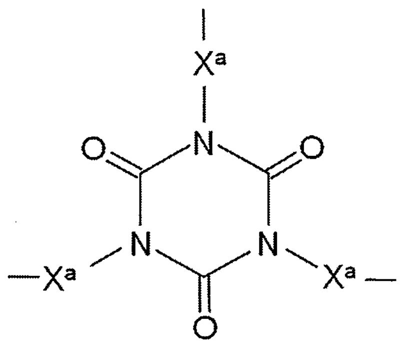

wherein $X^a$ is each independently a single bond or a divalent organic group.

**18.** The siloxane group-containing silane compound according to claim 17, wherein $X^a$ is each independently a group represented by the following formula:

$$-(CX^{121}X^{122})_{x1}-(X^{a1})_{y1}-(CX^{123}X^{124})_{z1}-$$

wherein

$X^{121}$ to $X^{124}$ are each independently H, OH, or $-OSi(OR^{121})_3$, where $R^{121}$ is each independently an alkyl group having 1 to 4 carbon atoms;
$X^{a1}$ is -C(=O)NH-, -NHC(=O)-, -O-, -C(=O)O-, -OC(=O)-, - OC(=O)O-, -NHC(=O)NH-, $-NR^{122}-$, $-C(=O)-NR^{122}-$, $-NR^{122}-C$ (=O) -, or S;
$R^{122}$ is a $C_{1-6}$ hydrocarbon chain;
x1 is an integer of 0 to 10;
y1 is 0 or 1; and
z1 is an integer of 1 to 10.

**19.** A composition comprising the siloxane group-containing silane compound according to any one of claims 1 to 18.

**20.** A composition comprising at least one of the siloxane-containing silane compound according to any one of claims 1 to 18 and a compound composed of a condensed product in which at least a portion of the siloxane-containing silane compound is condensed.

**21.** The composition according to claim 19 or 20, further comprising a solvent selected from compounds represented

by $R^{71}OR^{72}$, $R^{73}{}_{n8}C_6H_{6-n8}$, $R^{74}R^{75}R^{76}Si\text{-} (O\text{-}SiR^{77}R^{78})_{m8}\text{-}R^{79}$, and $(OSiR^{77}R^{78})_{m9}$, wherein

$R^{71}$ to $R^{79}$ are each independently a monovalent organic group having 1 to 10 carbon atoms;
m8 is an integer of 1 to 6;
m9 is an integer of 3 to 8; and
n8 is an integer of 0 to 6.

**22.** The composition according to claim 21, wherein the solvent is $R^{74}R^{75}R^{76}Si\text{-} (O\text{-}SiR^{77}R^{78})_{m8}\text{-}R^{79}$.

**23.** The composition according to claim 21 or 22, wherein the solvent is hexamethyldisiloxane, hexaethyldisiloxane, octamethyltrisiloxane, octamethylcyclotetrasiloxane, or decamethylcyclopentasiloxane.

**24.** The composition according to any one of claims 19 to 23, which is a surface-treating agent.

**25.** The composition according to any one of claims 19 to 24, which is for vacuum deposition.

**26.** The composition according to any one of claims 19 to 24, which is for wet coating.

**27.** A pellet comprising the composition according to any one of claims 19 to 26.

**28.** An article comprising a substrate and a layer on the substrate, wherein the layer is formed of the siloxane group-containing silane compound according to any one of claims 1 to 18 or the composition according to any one of claims 24 to 26.

**29.** The article according to claim 28, which is an optical member.

**30.** The article according to claim 28, which is a display.

**31.** A compound represented by the following formula (1-a) or (2-a) :

$$R^{S1}\text{-}X^B \qquad \textbf{(1-a)}$$

$$X^B\text{-}R^{S2}\text{-}X^B \qquad \textbf{(2-a)}$$

wherein

$R^{S1}$ is each independently at each occurrence $R^1\text{-}R^S\text{-}R^2{}_q\text{-}$;
$R^{S2}$ is $\text{-}O_p\text{-}R^S\text{-}R^2{}_q\text{-}$;
$R^S$ is each independently at each occurrence a divalent linear organosiloxane group;
$R^1$ is a hydrocarbon group;
$R^2$ is $\text{-}SiR^3{}_2\text{-}$;
$R^3$ is each independently at each occurrence a hydrocarbon group;
p is 0 or 1;
q is each independently 0 or 1; and
$X^B$ is each independently

$$\text{-}(CH_2)_{s6}\text{-}X^{53}\text{-}X^{54},$$

$$\text{-}X^{53}\text{-}(CH_2)_{t6}\text{-}X^{54},$$

or

$$\text{-}(CH_2)_{s6}\text{-}X^{53}\text{-}(CH_2)_{t6}\text{-}X^{54},$$

wherein

$X^{53}$ is -O-, -CO-, $\text{-}CONR^{74}\text{-}$, $\text{-}O\text{-}CONR^{74}\text{-}$, $\text{-}O\text{-}(CH_2)_{u6}\text{-}CONR^{74}\text{-}$, $\text{-}O\text{-}(CH_2)_{u6}\text{-}CO\text{-}$, or a single bond,
$X^{54}$ is $R^{75}$, $\text{-}NR^{75}{}_2$, $\text{-}SiR^{75}{}_2R^{76}$, $\text{-}SiR^{75}{}_3$, $\text{-}CR^{75}{}_2R^{75}$, $\text{-}CR^{75}{}_3$, $\text{-}SiCl_2R^{76}$, $\text{-}SiCl_3$, or

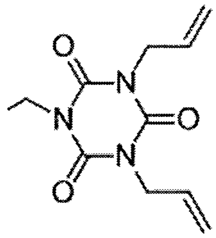

,

$R^{75}$ is $-CH=CH_2$ or $-CH_2-CH=CH_2$,
$R^{76}$ is a monovalent organic group,
$R^{74}$ is each independently at each occurrence a hydrogen atom, a phenyl group, a $C_{1-6}$ alkyl group, or an oxyalkylene-containing group having 1 to 10 carbon atoms,
s6 is an integer of 1 to 20,
t6 is an integer of 1 to 20, and
u6 is an integer of 1 to 20.

**32.** The compound according to claim 31, wherein $X^{53}$ is - $CONR^{74}$-.

**33.** The compound according to claim 31, wherein $X^{54}$ is - $Si(CH_2CH=CH_2)_3$ or $-SiCl_3$.

**34.** The compound according to claim 31, wherein $X^{54}$ is

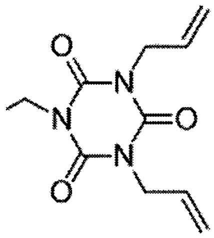

.

**35.** The compound according to claim 31, wherein $-X^{53}-X^{54}$ is $-CON(CH_2CH=CH_2)_2$ or $-CONHCH_2C(CH_2CH=CH_2)_3$.

## INTERNATIONAL SEARCH REPORT

International application No.
**PCT/JP2022/030495**

**A. CLASSIFICATION OF SUBJECT MATTER**

***C07F 7/18***(2006.01)i; ***C08G 77/14***(2006.01)i; ***C08G 77/38***(2006.01)i; ***C08L 83/04***(2006.01)i; ***C09K 3/18***(2006.01)i; ***G02B 1/14***(2015.01)i; ***G02B 1/18***(2015.01)i
FI: C07F7/18 Y CSP; C09K3/18; C09K3/18 104; C08L83/04; C08G77/38; G02B1/18; G02B1/14; C09K3/18 101; C08G77/14

According to International Patent Classification (IPC) or to both national classification and IPC

**B. FIELDS SEARCHED**

Minimum documentation searched (classification system followed by classification symbols)

C07F7/18; C08G77/14; C08G77/38; C08L83/04; C09K3/18; G02B1/14; G02B1/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | US 2017/0210975 A1 (GENERAL ELECTRIC COMPANY) 27 July 2017 (2017-07-27) claims, paragraph [0067], compound C | 1-12, 16, 19-31, 33 |
| X | WO 2016/094199 A1 (3M INNOVATIVE PROPERTIES COMPANY) 16 June 2016 (2016-06-16) claims, example 2, compound (XVII) | 1-12, 16, 19-31, 33 |
| X | JP 2015-101716 A (THREE BOND CO LTD) 04 June 2015 (2015-06-04) claims, examples, formula (I) | 1-12, 16, 19-31, 33 |
| X | EP 2236125 A1 (INTERCOS S.P.A.) 06 October 2010 (2010-10-06) paragraph [0027], claims, examples | 1-12, 16, 19-31, 33 |
| X | JP 2001-316473 A (DOW CORNING TORAY SILICONE CO LTD) 13 November 2001 (2001-11-13) claims, examples 1, 2 | 1-12, 16, 19-31, 33 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 October 2022** | **01 November 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/030495**

**C. DOCUMENTS CONSIDERED TO BE RELEVANT**

| Category* | Citation of document, with indication, where appropriate, of the relevant passages | Relevant to claim No. |
|---|---|---|
| X | JP 2000-186147 A (DOW CORNING CORPORATION) 04 July 2000 (2000-07-04) claims, paragraphs [0061], [0066] | 1-12, 16, 19-31, 33 |
| X | JP 2002-97273 A (DOW CORNING TORAY SILICONE CO LTD) 02 April 2002 (2002-04-02) claims, example 5, etc. | 1-12, 16, 19-31, 33 |
| A | JP 2019-44179 A (AGC INC) 22 March 2019 (2019-03-22) examples | 1-35 |

Form PCT/ISA/210 (second sheet) (January 2015)

**INTERNATIONAL SEARCH REPORT**
**Information on patent family members**

International application No.
**PCT/JP2022/030495**

| Patent document cited in search report | Publication date (day/month/year) | Patent family member(s) | Publication date (day/month/year) |
|---|---|---|---|
| US 2017/0210975 A1 | 27 July 2017 | (Family: none) | |
| WO 2016/094199 A1 | 16 June 2016 | US 2017/0362391 A1<br>claims, example 2, compound (XVII)<br>CN 107001858 A | |
| JP 2015-101716 A | 04 June 2015 | (Family: none) | |
| EP 2236125 A1 | 06 October 2010 | US 2010/0255046 A1<br>paragraph [0042], claims, examples | |
| JP 2001-316473 A | 13 November 2001 | (Family: none) | |
| JP 2000-186147 A | 04 July 2000 | US 6127502 A<br>claims, examples<br>EP 1013699 A2<br>KR 10-2000-0048250 A<br>CN 1258689 A | |
| JP 2002-97273 A | 02 April 2002 | (Family: none) | |
| JP 2019-44179 A | 22 March 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019044179 A
- JP 2014084405 A


### Non-patent literature cited in the description


- *Pure & Appl. Chem.,* 1975, vol. 41 (3), 291-326
- *Pure & Appl. Chem.,* 1986, vol. 58 (8), 1153-1161